(19) **Europäisches Patentamt**
**European Patent Office**
**Office européen des brevets**

(11) **EP 2 822 079 B1**

(12) **EUROPEAN PATENT SPECIFICATION**

(45) Date of publication and mention
of the grant of the patent:
**04.01.2017 Bulletin 2017/01**

(21) Application number: **12854546.4**

(22) Date of filing: **17.08.2012**

(51) Int Cl.:
*H01M 4/505* (2010.01)     *H01M 10/0525* (2010.01)
*H01M 10/0567* (2010.01)   *H01M 10/0568* (2010.01)
*H01M 10/0569* (2010.01)   *H01M 10/0587* (2010.01)
*H01M 4/525* (2010.01)     *H01M 10/42* (2006.01)
*H01M 4/36* (2006.01)      *H01M 2/12* (2006.01)
*H01M 4/02* (2006.01)

(86) International application number:
**PCT/JP2012/070882**

(87) International publication number:
**WO 2013/128676 (06.09.2013 Gazette 2013/36)**

(54) **LITHIUM-ION BATTERY**

LITHIUMIONEN-BATTERIE

BATTERIE AU LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.02.2012   JP 2012042853
29.02.2012   JP 2012042857
29.02.2012   JP 2012043029**

(43) Date of publication of application:
**07.01.2015 Bulletin 2015/02**

(73) Proprietor: **Hitachi Chemical Company, Ltd.
Chiyoda-ku
Tokyo (JP)**

(72) Inventors:
• **OKUMURA, Takefumi
Chuo-ku, Tokyo 104-0044 (JP)**
• **KIMURA, Takayuki
Chuo-ku, Tokyo 104-0044 (JP)**
• **NISHIYAMA, Hiroo
Chuo-ku, Tokyo 104-0044 (JP)**

• **YOSHIURA, Tadashi
Chuo-ku, Tokyo 104-0044 (JP)**
• **HIYAMA, Sho
Chuo-ku, Tokyo 104-0044 (JP)**

(74) Representative: **Addiss, John William et al
Mewburn Ellis LLP
City Tower
40 Basinghall Street
London EC2V 5DE (GB)**

(56) References cited:
WO-A1-2012/023501     JP-A- 2001 185 147
JP-A- 2002 203 556     JP-A- 2004 259 511
JP-A- 2004 319 308     JP-A- 2005 100 955
JP-A- 2005 209 411     JP-A- 2006 278 322
JP-A- 2007 531 216     JP-A- 2008 181 830
JP-A- 2009 004 310     JP-A- 2011 054 516
JP-A- 2011 154 879     US-A1- 2007 134 558
US-A1- 2009 263 721    US-A1- 2011 059 351

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to a lithium ion battery.

**BACKGROUND ART**

The lithium ion battery is a secondary battery with high energy density, and is used for a power source of portable devices such as a notebook computer and a mobile phone by taking advantage of its characteristics. There are various types in the shape of the lithium ion battery, and a wound-type structure of a positive electrode, a negative electrode, and a separator is adopted in a cylindrical lithium ion battery. For example, a positive electrode material and a negative electrode material are each applied to two sheets of belt-like metal foils, a separator is interposed therebetween, and a stacked body thus obtained is wound spirally, thereby forming a wound group. This wound group is housed in a cylindrical battery can used as a battery container, and is sealed after electrolytic solution is poured therein, so that a cylindrical lithium ion battery is formed.

Regarding the cylindrical lithium ion battery, an 18650 type lithium ion battery has been widespread as a lithium ion battery for consumer use. An outer size of the 18650 type lithium ion battery is as small as about 18 mm in diameter and about 65 mm in height. Lithium cobalt oxide characterized by a large capacity and long life is mainly used for a positive electrode as an active material of the 18650 type lithium ion battery, and the battery capacity is approximately 1.0 Ah to 2.0 Ah (3.7 Wh to 7.4 Wh) in general.

In recent years, it is expected that the lithium ion battery is developed not only for the consumer use in portable devices or the like, but also for the large-scale energy storage system use for natural power sources such as photovoltaic power generation and wind power generation. The large-scale energy storage systems require an amount of electric power per system in an order of magnitude of several megawatts/hour (MWh).

For example, Patent Document 1 listed below discloses a cylindrical lithium ion battery which includes, in a cylindrical battery container, an electrode wound group in which a positive electrode, a negative electrode, and a separator are wound. This battery has a discharge capacity of 77.04 Ah or larger, and a positive electrode, in which a specified quantity of an active material mixture containing lithium manganese composite oxide is applied to both surfaces of a current collector, is used therein.

In addition, Patent Document 2 listed below discloses a cylindrical lithium ion battery which includes, in a cylindrical battery container, an electrode wound group in which a positive electrode, a negative electrode, and a separator are wound. This battery has a battery capacity of 3 Ah or larger and an output of 400 W or higher. Also, a positive electrode active material mixture containing a lithium manganese composite oxide is used for the positive electrode, a negative electrode active material mixture containing amorphous (non-crystalline) carbon is used for the negative electrode, and a mixed solvent containing ethylene carbonate, dimethyl carbonate, and diethyl carbonate is used as a solvent of an electrolytic solution.

**PRIOR ART DOCUMENTS**

**PATENT DOCUMENTS**

Patent Document 1: Japanese Patent No. 3541723
Patent Document 2: Japanese Patent No. 3433695

US2007/134558 discloses using a positive electrode active material including spinel type manganese oxide as the main constituent to provide a flat type nonaqueous secondary cell for HEVs. A flat type nonaqueous secondary cell being a laminate type cell which does not have a blocking mechanism is obtained by blending the spinel type lithium manganese oxide of the positive electrode and 5 wt % to 40 wt % of layered type lithium manganese oxide and further by adding a Li compound having a specific structure.

US2011/059351 discloses A lithium ion secondary battery comprising a positive electrode plate containing a positive electrode active material, a negative electrode plate containing a negative electrode active material, a separator, an electrolyte, and a battery can for enclosing these, wherein the positive electrode active material comprises manganese spinel and a layer-type lithium manganese oxide, and the electrolyte comprises vinylene carbonate and unsaturated sultone.

## PROBLEMS TO BE SOLVED BY THE INVENTION

However, in the case where the above-mentioned 18650 type lithium ion battery is used for the large-scale energy storage system mentioned above, approximately one million batteries are needed.

Usually, as for a lithium ion battery, a cell controller is mounted for every one battery, and a state of the battery is detected. Therefore, in a system in which a large number of batteries are used, the number of needed cell controllers also increases, resulting in the large cost increase.

Therefore, it is desired that a capacity per battery is increased to reduce the number of batteries and cell controllers which are needed for the system.

In this way, when a capacity of a battery is increased, the amount of energy capable of being stored in the battery is also increased, and therefore, safety guarantee in a non-steady state arises as a problem to be salved. For example, even when the above-mentioned 18650 type lithium ion battery is simply enlarged to secure the battery capacity, the safety is not always secured, and comprehensive studies for constituent materials of the battery including a positive electrode, a negative electrode, and a separator are necessary.

Further, the large-scale energy storage system is also required to be appropriately responsive to the rapid load fluctuation, and a high-input and high-output lithium ion battery which satisfies high input/output characteristics is desired.

Accordingly, an object of the present invention is to provide a high-input and high-output lithium ion battery having a large capacity, while guaranteeing the safety.

The above and other objects and novel characteristics of the present invention will be apparent from the description of the present specification and the accompanying drawings.

## MEANS FOR SOLVING THE PROBLEMS

According to the present invention there is provided a lithium ion battery according to claim 1.

## EFFECTS OF THE INVENTION

The effects obtained by typical embodiments of the invention disclosed in the present application will be briefly described below.

According to the present invention, it is possible to provide a high-input and high-output lithium ion battery having a large capacity, while guaranteeing the safety.

## BRIEF DESCRIPTIONS OF THE DRAWINGS

FIG. 1 is a cross-sectional view of a lithium ion battery of the present embodiment; and
FIG. 2 is a graph showing the relation of a discharge capacity, a weight ratio of active materials, and a temperature increase of a battery surface in an external short-circuit test

## BEST MODE FOR CARRYING OUT THE INVENTION

In the case where a range is indicated as A to B in the following embodiment, it is assured to be A or more and B or less except for the cases where it is clearly indicated in particular.

(Embodiment)

First, summary of a lithium ion battery will be briefly described. The lithium ion battery has a positive electrode, a negative electrode, a separator, and an electrolytic solution in a battery container. The separator is disposed between the positive electrode and the negative electrode.

When the lithium ion battery is charged, a battery charger is connected between the positive electrode and the negative electrode. At the time of the charging, lithium ions inserted into a positive electrode active material are desorbed, and released into the electrolytic solution. The lithium ions released into the electrolytic solution move in the electrolytic solution, pass through a separator made of fine porous films, and reach the negative electrode. The lithium ions which have reached the negative electrode are inserted into a negative electrode active material which constitutes the negative electrode.

When the battery is discharged, an external load is connected between the positive electrode and the negative electrode. At the time of the discharging, lithium ions which have been inserted into the negative electrode active material are desorbed and released into the electrolytic solution. At this time, electrons are released from the negative electrode. Then, the lithium ions released into the electrolytic solution move in the electrolytic solution, pass through the separator made of fine porous films, and reach the positive electrode. The lithium ions which have reached the positive electrode are inserted into the positive electrode active material which constitutes the positive electrode. At this time, by the lithium ions being inserted into the positive electrode active material, electrons flow into the positive electrode. In this way, discharging is performed by the electrons moving to the positive electrode from the negative electrode.

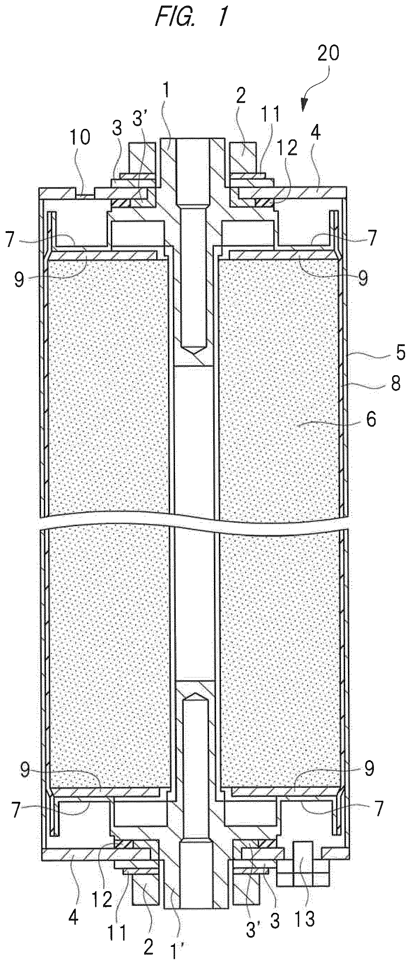

As described above, by inserting and desorbing lithium ions between the positive electrode active material and the negative electrode active material, the battery can be charged and discharged. Note that a configuration example of the actual lithium ion battery will be described later (for example, see FIG. 1).

Next, the positive electrode, the negative electrode, the electrolytic solution, the separator, and other constituent parts which are constituent elements of the lithium ion battery of the present embodiment will be sequentially described below.

<Positive electrode>

The present embodiment includes a positive electrode described below as a positive electrode applicable to the high-input and high-output lithium ion battery having a large capacity. The positive electrode (positive electrode plate) of the present embodiment is made up of a current collector and a positive electrode composite (positive electrode mixture) formed on the current collector. The positive electrode composite is a layer which is provided on the current collector and contains at least the positive electrode active material, and in the present embodiment, it contains a mixed active material of layered lithium nickel manganese cobalt composite oxide (NMC) and spinel lithium manganese oxide (spinel lithium manganese composite oxide, sp-Mn). This positive electrode composite is formed (applied) to, for example, both surfaces of the current collector.

In the lithium ion battery, under such abnormal conditions as <1> at the time of overcharging due to a malfunction of a charge control system, <2> at the time of the battery crash due to an unexpected impact or the like, <3> at the time of penetration of a foreign matter, and <4> at the time of external short-circuit, a large current charging state or a large current discharging state continues in some cases. In such cases, due to a rapid and continuous chemical reaction of the electrolytic solution and the active material in the positive electrode, gas is sometimes generated and an internal pressure of the battery container is increased.

In general, in order to prevent the increase of the internal pressure in the battery container, the cylindrical lithium ion battery is provided with an internal pressure reduction mechanism such as a safety valve or a cleavage valve which makes the gas emitted to the outside of the container when a predetermined internal pressure is reached. However, in the case where the above-mentioned rapid and continuous chemical reaction occurs, breakages (including crack, swelling, and ignition) of the battery container may occur even if the internal pressure reduction mechanism is provided.

In contrast, in the present embodiment, the positive electrode composite containing the layered lithium nickel manganese cobalt composite oxide (NMC) and the spinel lithium manganese oxide (sp-Mn) is used, a positive electrode composite density is set to 2.4 g/cm$^3$ or more and 2.7 g/cm$^3$ or less, a positive electrode composite application quantity is set to 175 g/m$^2$ or more and 250 g/m$^2$ or less, and furthermore, NMC/sp-Mn corresponding to a weight ratio (mixing ratio) of the layered lithium nickel manganese cobalt composite oxide (NMC) and the spinel lithium manganese oxide (sp-Mn) is set to 10/90 or more and 60/40 or less, thereby achieving the larger capacity and higher input and output in the battery, while guaranteeing the safety even in abnormal conditions. Note that the above-mentioned weight ratio is sometimes referred to simply as "weight ratio of active materials".

In the case where the positive electrode composite density is less than 2.4 g/cm$^3$, there is fear that a resistance of the positive electrode is increased and input/output characteristics are deteriorated. On the other hand, when the positive electrode composite density exceeds 2.7 g/cm$^3$, there is a concern about the safety deterioration, and there is fear that enhancement of other safety measures is needed.

In the case where the positive electrode composite application quantity is less than 175 g/m$^2$, there is fear that the amount of the active material which contributes to charging and discharging is decreased and an energy density of the battery is lowered. On the other hand, when the positive electrode composite application quantity exceeds 250 g/m$^2$, there is fear that a resistance of the positive electrode composite is increased and input/output characteristics are deteriorated.

In the case where the weight ratio (NMC/sp-Mn) of the active materials is less than 10/90, there is fear that the energy density of the battery is lowered. On the other hand, when the weight ratio (NMC/sp-Mn) of the active materials exceeds 60/40, there is a concern about the safety deterioration, and there is fear that enhancement of other safety measures is needed.

As described above, regarding the positive electrode composite, the positive electrode composite density, the positive electrode composite application quantity, and the weight ratio (NMC/sp-Mn) of the active materials are set within the ranges mentioned above. By this means, even in the lithium ion battery having a large capacity, that is, a discharge capacity of 30 Ah or more, a high-input and high-output battery having a high energy density can be realized, while guaranteeing the safety. The discharge capacity here is defined as that upon a discharge by voltage from 4.2V (electromotive force) to 2.7V (cut-off voltage) at current of 0.5 C. For example, 1 C means current capable of discharging a rating capacity in one hour and 0.5 C means current capable of discharging the rating capacity in two hours.

In addition, by forming the positive electrode composite so that a discharge capacity X and a weight ratio (NMC/sp-Mn) Y of the active materials satisfy the following relational expression 1, even in the lithium ion battery having a large capacity, that is, the discharge capacity X of 30 Ah or more and 100 Ah or less, a high-input and high-output battery having a high energy density can be realized, while guaranteeing the safety.

$$Y < -0.0062X + 1.05 \text{ (where } 30 \leq X < 100) \ldots \text{ (relational expression 1)}$$

Further, as the layered lithium nickel manganese cobalt composite oxide (NMC), it is preferred to use the material represented by the following composition formula (Chem. 1).

$$Li_{(1+\delta)}Mn_xNi_yCo_{(1-x-y-z)}M_zO_2 \ldots \text{ (Chem.1)}$$

In the above-mentioned composition formula (Chem. 1), $(1+\delta)$ denotes a composition ratio of Li (lithium), x denotes a composition ratio of Mn (manganese), y denotes a composition ratio of Ni (nickel), and $(1-x-y-z)$ denotes a composition ratio of Co (cobalt). Also, z denotes a composition ratio of an element M. The composition ratio of O (oxygen) is 2.

The element M is at least one element selected from a group including Ti (titanium), Zr (zirconium), Nb (niobium), Mo (molybdenum), W (tungsten), A1 (aluminum), Si (silicon), Ga (gallium), Ge (germanium), and Sn (tin).

Here, $-0.15 < \delta < 0.15$, $0.1 < x \leq 0.5$, $0.6 < x+y+z \leq 1.0$, and $0 \leq z \leq 0.1$ are satisfied.

Also, as the spinel lithium manganese oxide (sp-Mn), it is preferred to use the material represented by the following composition formula (Chem. 2).

$$Li_{(1+\eta)}Mn_{(2-\lambda)}M'_\lambda O_4 \ldots \text{ (Chem. 2)}$$

In the above-mentioned composition formula (Chem. 2), $(1+\eta)$ denotes a composition ratio of Li, $(2-\lambda)$ denotes a composition ratio of Mn, and $\lambda$ denotes a composition ratio of an element M'. The composition ratio of O (oxygen) is 4.

The element M' is at least one element selected from a group including Mg (magnesium), Ca (calcium), Sr (strontium), Al, Ga, Zn (zinc), and Cu (copper).

Here, $0 \leq \eta \leq 0.2$ and $0 \leq \lambda \leq 0.1$ are satisfied.

As described above, by using a mixture of the layered lithium nickel manganese cobalt composite oxide (NMC) and the spinel lithium manganese oxide (sp-Mn) as the active material for the positive electrode (positive electrode active material), even in the case of increasing the capacity, the stability of the positive electrode at the time of charging can be enhanced and the heat generation can be suppressed. As the result, it is possible to provide a battery excellent in the safety. Furthermore, it is also possible to improve charging/discharging cycle characteristics and preservation characteristics.

As the element M' in the above-mentioned composition formula (Chem. 2), it is preferred to use Mg or Al. By using Mg and Al, the battery life can be extended. In addition, the safety of the battery can be enhanced.

In the case where the spinel lithium manganese oxide (sp-Mn) is used as the positive electrode active material, since Mn in the compound is stable in a charging state, it is possible to suppress the heat generation due to a charging reaction. Accordingly, it is possible to enhance the safety of the battery. More specifically, it is possible to suppress the heat generation in the positive electrode and enhance the safety of the battery.

Furthermore, since it is possible to reduce the elution of Mn by adding the element M', preservation characteristics and charging/discharging cycle characteristics can be enhanced.

As described above, the spinel lithium manganese oxide (sp-Mn) has useful characteristics, but the spinel lithium manganese oxide (sp-Mn) itself has small theoretical capacity, and a density thereof is also small. Therefore, in the case where the battery is constituted by using only the spinel lithium manganese oxide (sp-Mn) as the positive electrode active material, it is difficult to increase the battery capacity (discharge capacity). On the other hand, the layered lithium nickel manganese cobalt composite oxide (NMC) has a large theoretical capacity, and has the theoretical capacity equivalent to that of $LiCoO_2$ which is widely used as the positive electrode active material of the lithium ion battery.

Therefore, in the present embodiment, the layered lithium nickel manganese cobalt composite oxide (NMC) and the spinel lithium manganese oxide (sp-Mn) are used together, and the positive electrode composite density is increased, whereby it becomes possible to provide a battery which has a large capacity and is excellent in safety. In addition, it becomes possible to provide a battery which is excellent also in preservation characteristics and charging/discharging cycle characteristics.

Hereinafter, the positive electrode composite and the current collector will be described in detail. The positive electrode composite contains a positive electrode active material and a binding material or the like, and is formed on the current collector. The forming method thereof is not particularly limited, and for example, it is formed in the following manner. That is, the positive electrode active material, the binding material, and other materials such as a conducting material and a thickening agent which are used as necessary are mixed in a dry process and formed into a sheet-like shape, and this is pressure-bonded to the current collector (dry process). Alternatively, the positive electrode active material, the binding material, and other materials such as a conducting material and a thickening agent which are used as necessary are dissolved or dispersed in a dispersing solvent to be a slurry, and this is applied to the current collector and then dried (wet method).

As the positive electrode active material, as mentioned above, the layered lithium nickel manganese cobalt composite oxide (NMC) and the spinel lithium manganese oxide (sp-Mn) are used. These are used in a powder (grain) state, and are mixed with each other.

To the surface of this positive electrode active material, a substance having a different composition from the substance constituting the positive electrode active material to be the main constituent may be adhered. Examples of the surface adherence substances include oxides such as aluminum oxide, silicon oxide, titanium oxide, zirconium dioxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and others.

Examples of an adhesion method of the surface adherence substance include the following methods. For example, the positive electrode active material is added to a fluid in which a surface adherence substance has been dissolved or suspended in a solvent, thereby impregnating and adding the surface adherence substance to the positive electrode active material. Thereafter, the positive electrode active material in which the surface adherence substance has been impregnated is dried. Alternatively, the positive electrode active material is added to a fluid in which a precursor of the surface adherence substance has been dissolved or suspended in a solvent, thereby impregnating and adding the precursor of the surface adherence substance to the positive electrode active material. Thereafter, the positive electrode active material in which the precursor of the surface adherence substance has been impregnated is heated. Also, a fluid in which a precursor of the surface adherence substance and a precursor of the positive electrode active material have been dissolved or suspended in a solvent is sintered. By these methods, it is possible to make the surface adherence substance adhere to the surface of the positive electrode active material.

The amount of the surface adherence substance is preferably set within the following range relative to a weight of the positive electrode active material. The lower limit of the range is preferably 0.1 ppm or more, more preferably 1 ppm or more, and still more preferably 10 ppm or more. The upper limit is preferably 20% or less, more preferably 10% or less, and still more preferably 5% or less.

The oxidation reaction of a nonaqueous electrolytic solution on a surface of the positive electrode active material can be suppressed by the surface adherence substance, and the battery life can be extended. However, in the case where the adhesion amount thereof is too little, the above-mentioned effect does not fully appear, and in the case where it is too much, a resistance may increase because the surface adherence substance interrupts the movement of lithium ions. Therefore, it is preferred that the amount is set within the above-mentioned range.

As the particles of the positive electrode active materials of the layered lithium nickel manganese cobalt composite oxide (NMC) and the spinel lithium manganese oxide (sp-Mn), those in a massive form, a polyhedron shape, a spherical shape, an oval sphere shape, a tabular shape, a needle shape, a pillar shape or the like are used. Among them, those having primary particles which are condensed to form a secondary particle, the shape of the secondary particle being a spherical shape or an oval sphere shape, are preferred.

In an electrochemical device like a battery, an active material in an electrode swells and contracts in association with the charging and discharging thereof, and therefore, deteriorations such as destruction of the active material and disconnection of a conducting path due to the stress thereof tend to occur. Therefore, those having primary particles which are condensed to form a secondary particle are preferably used compared with those of a single particle having only primary particles because the stress of the swelling and contraction can be eased and the above-mentioned deteriorations can be prevented. Also, particles of spherical shape or oval sphere shape are preferably used compared with particles having axial orientation such as the tabular shape because the orientation in the electrode decreases and the swelling and contraction of the electrode at the time of charging and discharging are reduced. Furthermore, such particles are preferred because they are uniformly mixed with other materials such as a conducting material at the time of forming the electrode.

Regarding a median diameter d50 of particles of the positive electrode active materials of the layered lithium nickel manganese cobalt composite oxide (NMC) and the spinel lithium manganese oxide (sp-Mn) (the median diameter d50 of the secondary particle in the case where primary particles are condensed to form the secondary particle), the ranges thereof are as follows. That is, the lower limit of the range is 0.1 $\mu$m or more, preferably 0.5 $\mu$m or more, more preferably 1 $\mu$m or more, and still more preferably 3 $\mu$m or more, and the upper limit is 20 $\mu$m or less, preferably 18 $\mu$m or less, more preferably 16 $\mu$m or less, and still more preferably 15 $\mu$m or less. In a range less than the above-mentioned lower limit, there is fear that a tap density (filling characteristics) is lowered and a desired tap density is no longer acquired, and in a range exceeding the above-mentioned upper limit, there is a fear of causing the deterioration of the battery performance because spread of lithium ions in particles takes time. Furthermore, in the case of exceeding the above-mentioned upper limit, there is fear that mixing characteristics with other materials such as a binding material and a conducting material may be lowered at the time of forming the electrode. Therefore, when this mixture is slurried and then applied, the mixture cannot be uniformly applied and unevenness like stripes may be formed. Here, as the positive electrode active material, two or more kinds of those having different median diameters d50 may be mixed, thereby improving the tap density (filling characteristics). Note that the median diameter d50 can be calculated from a particle size distribution obtained by a laser diffraction and scattering method.

In the case where the primary particles are condensed to form the secondary particle, the ranges of an average particle diameter of the primary particle are as follows. That is, the lower limit of the range is 0.01 $\mu$m or more, preferably 0.05 $\mu$m or more, more preferably 0.08 $\mu$m or more, and still more preferably 0.1 $\mu$m or more, and the upper limit is 3 $\mu$m or less, preferably 2 $\mu$m or less, more preferably 1 $\mu$m or less, and still more preferably 0.6 $\mu$m or less. In the case of exceeding the above-mentioned upper limit, the formation of the secondary particle in a spherical shape becomes difficult, and there is fear that battery performances such as output characteristics are deteriorated due to the deterioration of the tap density (filling characteristics) and the deterioration of a specific surface area. In addition, in the range less than the above-mentioned lower limit, there is fear that the reversibility of charging and discharging is deteriorated due to the decrease in crystallinity.

The ranges of a BET specific surface area of particles of the positive electrode active materials of the layered lithium nickel manganese cobalt composite oxide (NMC) and the spinel lithium manganese oxide (sp-Mn) are as follows. That is, the lower limit of the range is 0.2 $m^2$/g or more, preferably 0.3 $m^2$/g or more, and more preferably 0.4 $m^2$/g or more, and the upper limit is 4.0 $m^2$/g or less, preferably 2.5 $m^2$/g or less, and more preferably 1.5 $m^2$/g or less. In the range less than the above-mentioned lower limit, there is fear that the battery performance may be deteriorated. In the case of exceeding the above-mentioned upper limit, it becomes difficult to increase the tap density, and there is fear that mixing characteristics with other materials such as a binding material and a conducting material may be lowered. Therefore, there is fear that application characteristics in the case where this mixture is slurried and then applied may be deteriorated. The BET specific surface area is a specific surface area (area per gram) obtained by a BET method.

Conducting materials for the positive electrode include, for example, metal materials such as copper and nickel, graphites such as natural graphite and artificial graphite, carbon black such as acetylene black, and carbonaceous materials like amorphous carbon such as needle coke. Note that one material among these may be used independently, or two or more materials may be used in combination.

The ranges of the contained amount (additive amount, percentage, quantity) of the conducting material relative to a weight of the positive electrode composite are as follows. That is, the lower limit of the range is 0.01 wt.% or more, preferably 0.1 wt.% or more, and more preferably 1 wt.% or more, and the upper limit is 50 wt.% or less, preferably 30 wt.% or less, and more preferably 15 wt.% or less. In the range less than the above-mentioned lower limit, there is fear that conductivity becomes insufficient. In addition, in the case of exceeding the above-mentioned upper limit, there is fear that the battery capacity is lowered.

The binding material of the positive electrode active material is not particularly limited, and a material whose solubility and dispersibility for a dispersing solvent are suitable is selected in the case where the positive electrode composite is formed by an application method. Specific examples thereof include: resin-based polymers such as polyethylene, polypropylene, polyethylene terephthalate, polymethyl methacrylate, polyimide, aromatic polyamide, cellulose, and nitrocellulose; rubber-like polymers such as SBR (styrene-butadiene rubber), NBR (acrylonitrile-butadiene rubber), fluoro-rubber, isoprene rubber, butadiene rubber, and ethylene-propylene rubber; thermoplastic elastomer polymers such as styrene butadiene styrene block co-polymer or its hydrogen additive, EPDM (ethylene propylene diene terpolymer), styrene ethylene butadiene ethylene co-polymer, and styrene isoprene styrene block co-polymer or its hydrogen additive; soft resin polymers such as syndiotactic-1,2-polybutadiene, polyvinyl acetate, ethylene-vinyl acetate co-polymer, and propylene $\alpha$-olefin co-polymer; fluorine-based polymers such as a polyvinylidene fluoride (PVdF), polytetrafluoroethylene, fluorinated polyvinylidene fluoride, polytetrafluoroethylene ethylene co-polymer, and polytetrafluoroethylene vinylidene fluoride co-polymer; and polymer compositions having the ion conductivity of an alkali metal ion (in particular, lithium ion). Note that one material among these may be used independently, or two or more materials may be used in combination. From a viewpoint of stability of the positive electrode, it is preferred to use fluorine-based polymers such as polyvinylidene fluoride (PVdF) and polytetrafluoroethylene vinylidene fluoride co-polymer.

The ranges of the contained amount (additive amount, percentage, quantity) of the binding material relative to a weight of the positive electrode composite are as follows. That is, the lower limit of the range is 0.1 wt.% or more, preferably 1 wt.% or more, and more preferably 3 wt.% or more, and the upper limit is 80 wt.% or less, preferably 60 wt.% or less, more preferably 40 wt.% or less, and still more preferably 10 wt.% or less. When the contained amount of the binding material is too low, there is fear that the positive electrode active material cannot be fully bound and a mechanical strength of the positive electrode becomes insufficient, with the result that battery performances such as cycle characteristics are deteriorated. Conversely, when too high, there is fear that the battery capacity and conductivity are lowered.

The layer formed on the current collector by using the above-mentioned wet method or dry method is preferably consolidated with a hand press, a roller press or the like in order to enhance a filling density of the positive electrode active material.

The material of the current collector for the positive electrode is not particularly limited, and specific examples thereof include: metal materials such as aluminum, stainless steel, plated nickel, titanium, tantalum; and carbonaceous materials such as carbon cloth and carbon paper. Among them, the metal material, especially aluminum is preferred.

The shape of the current collector is not particularly limited, and any materials processed into various shapes can be used. Specific examples thereof include: regarding metal materials, metal foil, metal column, metal coil, metal plate, metal thin film, expanded metal, punched metal, and foamed metal; and regarding carbonaceous materials, carbon plate, carbon thin film, and carbon cylindrical column. Among them, the metal thin film is preferably used. Note that the thin film may be formed into a mesh-like shape as appropriate. The thickness of the thin film is arbitrary, and the ranges thereof are as follows. That is, the lower limit of the range is 1 $\mu$m or more, preferably 3 $\mu$m or more, and more preferably 5 $\mu$m or more, and the upper limit is 1 mm or less, preferably 100 $\mu$m or less, and more preferably 50 $\mu$m or less. In the range less than the above-mentioned lower limit, sufficient strength required for the current collector cannot be obtained in some cases. In addition, in the case of exceeding the above-mentioned upper limit, there is fear that plasticity is lowered and processability is deteriorated.

<Negative electrode>

The present embodiment includes a negative electrode described below as a negative electrode applicable to the high-input and high-output lithium ion battery having a large capacity. The negative electrode (negative electrode plate) of the present embodiment is made up of a current collector and a negative electrode composite formed on both surfaces of the current collector. The negative electrode composite contains a negative electrode active material which can electrochemically occlude and release lithium ions.

Examples of the negative electrode active material include carbonaceous materials, metal oxides such as tin oxide and silicon oxide, metal composite oxides, lithium simple substance, lithium alloy such as lithium aluminum alloy, and metals such as Sn and Si which can form alloy with lithium. One material among these may be used independently, or two or more materials may be used in combination. Among them, carbonaceous materials or lithium composite oxides are preferred from a viewpoint of the safety.

The metal composite oxide is not particularly limited as long as it can occlude and release lithium, and the oxide containing Ti (titanium) or Li (lithium) or both Ti and Li is preferred from a viewpoint of high current density charging/discharging characteristics.

As carbonaceous materials, amorphous (non-crystalline) carbon, natural graphite, composite carbonaceous materials obtained by forming a film formed on natural graphite by a dry CVD (Chemical Vapor Deposition) method or a wet spray method, artificial graphite obtained by sintering a resin material such as epoxy or phenol or a pitch-based material obtained from petroleum or coal as a raw material, and a carbonaceous material such as an amorphous (non-crystalline) carbon material can be used.

In addition, lithium metal which becomes capable of occluding and releasing lithium when forming a compound with lithium, silicon which becomes capable of occluding and releasing lithium when forming a compound with lithium and then being inserted in the crystal gap, and oxide or nitride of elements of the fourth group such as germanium and tin may be used.

In particular, carbonaceous materials have high conductivity and are excellent materials from an aspect of low-temperature characteristics and cycle stability. Among carbonaceous materials, materials with a wide interlayer spacing (d002) of carbon are preferred because they are excellent in rapid charging and discharging and low-temperature characteristics. However, since the capacity and charging and discharging efficiency of the material with a wide interlayer spacing (d002) of carbon are sometimes low in an early stage of charging, it is preferred to select the material whose interlayer spacing (d002) of carbon is 0.39 nm or less. The carbonaceous material like this is sometimes referred to as a quasi-anisotropic carbon.

Furthermore, as the negative electrode active material, carbonaceous materials having high conductivity such as graphite carbon, amorphous (non-crystalline) carbon, activated carbon, or the like may be used in mixture. As the above-mentioned graphite carbon, materials having characteristics described in the following (1) to (3) may be used.

(1) An R value that is an intensity ratio (ID/IG) between peak intensity (ID) in the range of 1300 to 1400 cm$^{-1}$ measured by a Raman spectroscopy spectrum and peak intensity (IG) in the range of 1580 to 1620 cm$^{-1}$ measured by a Raman spectroscopy spectrum is 0.2 or more and 0.4 or less.
(2) A half-value width $\Delta$ value of a peak in the range of 1300 to 1400 cm$^{-1}$ measured by a Raman spectroscopy spectrum is 40 cm$^{-1}$ or more and 100 cm$^{-1}$ or less.
(3) An intensity ratio X value (I(110)/I(004)) between a peak intensity (I(110)) of a (110) plane in X-ray diffraction and a peak intensity (I(004)) of a (004) plane is 0.1 or more and 0.45 or less.

By using the graphite carbon under conditions like these as the negative electrode active material, the battery performance can be enhanced.

The negative electrode composite is formed on the current collector. The formation method thereof is not particularly limited, and the negative electrode composite is formed by using the dry method or the wet method in the same way as the positive electrode composite. The above-mentioned negative electrode active material is used in a powder (grain) state.

The ranges of a median diameter d50 of particles of carbonaceous materials are as follows. That is, the lower limit of the range is 1 $\mu$m or more, preferably 3 $\mu$m or more, more preferably 5 $\mu$m or more, and still more preferably 7 $\mu$m or more, and the upper limit is 100 $\mu$m or less, preferably 50 $\mu$m or less, more preferably 40 $\mu$m or less, still more preferably 30 $\mu$m or less, and particularly preferably 25 $\mu$m or less. In the range less than the above-mentioned lower limit, there is fear that an irreversible capacity is increased and a loss of an initial battery capacity is caused. In addition, in the case of exceeding the above-mentioned upper limit, there is fear that a surface to which the negative electrode composite is applied becomes uneven at the time of forming the electrode, which poses a problem in the electrode formation.

The ranges of the BET specific surface area of particles of carbonaceous materials are as follows. That is, the lower limit of the range is 0.1 m$^2$/g or more, preferably 0.7 m$^2$/g or more, more preferably 1.0 m$^2$/g or more, and still more preferably 1.5 m$^2$/g or more, and the upper limit is 100 m$^2$/g or less, preferably 25 m$^2$/g or less, more preferably 15 m$^2$/g or less, and still more preferably 10 m$^2$/g or less. In the range less than the above-mentioned lower limit, there is fear that occlusion characteristics of lithium ions in the negative electrode tend to be lowered at the time of charging, and lithium is deposited on the surface of the negative electrode. In addition, in the case of exceeding the above-mentioned upper limit, there is fear that reactivity with nonaqueous electrolytic solution is increased, and generated gas in the vicinity of the negative electrode is increased.

A pore size distribution (relation between a pore size and a volume thereof) of particles of carbonaceous materials is obtained by a mercury porosimetry (mercury intrusion method). The pore volume can be obtained from this pore size distribution. The ranges of the pore volume of the particles of carbonaceous materials are as follows.

Regarding the pore volume V$_{(0.01 \text{ to } 1)}$ of particles of carbonaceous materials (total amount of a void in a particle, a depression due to irregularities of the particle surface, a void between contact surfaces of particles, and others in relation to the particle whose diameter is 0.01 $\mu$m or more and 1 $\mu$m or less), the ranges thereof are as follows. That is, the lower limit of the pore volume V$_{(0.01-1)}$ is 0.01 mL/g or more, preferably 0.05 mL/g or more, and more preferably 0.1 mL/g or more, and the upper limit is 0.6 mL/g or less, preferably 0.4 mL/g or less, and more preferably 0.3 mL/g or less.

In the case of exceeding the above-mentioned upper limit, there is fear that the binding material needed at the time of forming the electrode is increased. In the range less than the above-mentioned lower limit, there is fear that high current density charging/discharging characteristics are lowered, and furthermore, a relaxation effect of swelling and contraction of the electrode at the time of charging and discharging is lowered.

Also, regarding the pore volume V$_{(0.01 \text{ to } 100)}$ of particles of carbonaceous materials (total amount of a void in a particle, a depression due to irregularities of the particle surface, a void between contact surfaces of particles, and others in relation to the particle whose diameter is 0.01 $\mu$m or more and 100 $\mu$m or less), the ranges thereof are as follows. That is, the lower limit of the pore volume V$_{(0.01-100)}$ is preferably 0.1 mL/g or more, more preferably 0.25 mL/g or more, and still more preferably 0.4 mL/g or more, and the upper limit is 10 mL/g or less, preferably 5 mL/g or less, and more preferably 2 mL/g or less. In the case of exceeding the above-mentioned upper limit, there is fear that the binding material needed at the time of forming the electrode is increased. Also, in the range less than the above-mentioned lower limit, there is fear that the dispersibility to the binding material or thickening agent is lowered at the time of forming the electrode.

Further, the ranges of an average pore size of particles of carbonaceous materials are as follows. That is, the lower limit of the average pore size is preferably 0.05 $\mu$m or more, more preferably 0.1 $\mu$m or more, and still more preferably 0.5 $\mu$m or more, and the upper limit is 50 $\mu$m or less, preferably 20 $\mu$m or less, and more preferably 10 $\mu$m or less. In the case of exceeding the above-mentioned upper limit, there is fear that the binding material needed at the time of forming the electrode is increased. Also, in the range less than the above-mentioned lower limit, there is fear that high current density charging/discharging characteristics are lowered.

The ranges of the tap density of particles of carbonaceous materials are as follows. That is, the lower limit of the tap density is 0.1 $g/cm^3$ or more, preferably 0.5 $g/cm^3$ or more, more preferably 0.7 $g/cm^3$ or more, and still more preferably 1 $g/cm^3$ or more. The upper limit is preferably 2 $g/cm^3$ or less, more preferably 1.8 $g/cm^3$ or less, and still more preferably 1.6 $g/cm^3$ or less. In the range less than the above-mentioned lower limit, there is fear that the filling density of the negative electrode active material in the negative electrode composite is lowered, and the predetermined battery capacity cannot be secured. In addition, in the case of exceeding the above-mentioned upper limit, voids between negative electrode active materials in the negative electrode composite are decreased, and it becomes difficult to secure the conductivity between particles.

In addition, to a first carbonaceous material used as the negative electrode active material, a second carbonaceous material having properties different from that may be added as the conducting material. The above-mentioned properties represent one or more characteristics including an X-ray diffraction parameter, a median diameter, an aspect ratio, a BET specific surface area, an orientation ratio, a Raman R value, a tap density, a true density, a pore distribution, a circularity, and an ash content.

As a preferred configuration, there is a configuration in which a carbonaceous material whose particle size distribution on a volumetric basis is not bilaterally symmetrical about the median diameter serving as center is used as the second carbonaceous material (conducting material). Alternatively, there are a configuration in which a carbonaceous material whose Raman R value differs from that of the first carbonaceous material used as the negative electrode active material is used as the second carbonaceous material (conducting material), a configuration in which a carbonaceous material whose X-ray parameter differs from that of the first carbonaceous material used as the negative electrode active material is used as the second carbonaceous material (conducting material), and the like.

As the second carbonaceous material (conducting material), carbonaceous materials having high conductivity such as graphite carbon, amorphous (non-crystalline) carbon, and activated carbon can be used. Specifically, graphites such as natural graphite and artificial graphite, carbon black such as acetylene black, and amorphous carbon such as needle coke can be used. One material among these may be used independently, or two or more materials may be used in combination. In this way, by adding the second carbonaceous material (conducting material), an effect such as the reduction of resistance of the electrode can be achieved.

Regarding the contained amount (additive amount, percentage, quantity) of the second carbonaceous material (conducting material), the ranges of the contained amount of the conducting material relative to a weight of the negative electrode composite are as follows. That is, the lower limit of the range is 1 wt.% or more, preferably 2 wt.% or more, and more preferably 3 wt.% or more, and the upper limit is 45 wt.% or less and preferably 40 wt.% or less. In the range less than the above-mentioned lower limit, effect of enhancing the conductivity is hard to be acquired, and in the case of exceeding the above-mentioned upper limit, there is fear that an initial irreversible capacity is increased.

The materials of the current collector for the negative electrode are not particularly limited, and specific examples thereof include metal materials such as copper, nickel, stainless steel, and nickel-plating steel. Among them, from a viewpoint of processability and cost, copper is preferred.

The shape of the current collector is not particularly limited, and materials processed into various shapes can be used. Specific examples thereof include metal foil, metal column, metal coil, metal plate, metal thin film, expanded metal, punched metal, and foamed metal. Among them, the metal thin film is preferred and the copper foil is more preferred. As the copper foil, there are a rolled copper foil formed by a rolling method and an electrolytic copper foil formed by an electrolytic method, and both are suitably used as the current collector.

Although the thickness of the current collector is not particularly limited, in the case where the thickness is less than 25 $\mu$m, the strength thereof can be enhanced by using strong copper alloy (phosphor bronze, copper-titanium alloy, Corson alloy, Cu-Cr-Zr alloy, or the like) instead of pure copper.

The configuration of the negative electrode composite formed by using the negative electrode active material is not particularly limited, and the ranges of the negative electrode composite density are as follows. That is, the lower limit of the negative electrode composite density is preferably 0.7 $g/cm^3$ or more, more preferably 0.8 $g/cm^3$ or more, and still more preferably 0.9 $g/cm^3$ or more, and the upper limit is 2 $g/cm^3$ or less, preferably 1.9 $g/cm^3$ or less, more preferably 1.8 $g/cm^3$ or less, and still more preferably 1.7 $g/cm^3$ or less.

In the case of exceeding the above-mentioned upper limit, particles of the negative electrode active material tend to be destroyed, and there is a fear of causing the increase in an initial irreversible capacity and the deterioration of high current density charging/discharging characteristics due to reduction of permeability of nonaqueous electrolytic solution into the vicinity of an interface between the current collector and the negative electrode active material. Also, in the range less than the above-mentioned lower limit, there is fear that a battery resistance is increased because the conductivity between the negative electrode active materials is lowered, and the capacity per volume is lowered.

The binding material of the negative electrode active material is not particularly limited as long as it is a material stable for the nonaqueous electrolytic solution and dispersing solvent used at the time of forming an electrode. Specific examples thereof include: resin-based polymers such as polyethylene, polypropylene, polyethylene terephthalate, polymethyl methacrylate, aromatic polyamide, cellulose, and nitrocellulose; rubber-like polymers such as SBR (styrene-butadiene rubber), isoprene rubber, butadiene rubber, fluoro-rubber, NBR (acrylonitrile-butadiene rubber), and ethylene-propylene rubber; styrene butadiene styrene block co-polymer or its hydrogen additive; thermoplastic elastomer polymers such as EPDM (ethylene propylene diene terpolymer), styrene ethylene butadiene styrene co-polymer, and styrene isoprene styrene block co-polymer or its hydrogen additive; soft resin polymers such syndiotactic-1,2-polybutadiene, polyvinyl acetate, ethylene-vinyl acetate co-polymer, and propylene $\alpha$-olefin co-polymer; fluorine-based polymers such as polyvinylidene fluoride, polytetrafluoroethylene, fluorinated polyvinylidene fluoride, and polytetrafluoroethylene ethylenic co-polymer; and polymer compositions having an ion conductivity of alkali metal ion (in particular, lithium ion). One material among these may be used independently, or two or more materials may be used in combination.

The type of the dispersing solvent for forming the slurry is not particularly limited as long as the solvent can dissolve or disperse the negative electrode active material, the binding material, and the conducting material and the thickening agent which are used as necessary, and both aqueous solvent and organic solvent may be used. Examples of the aqueous solvent include water, mixed solvent of alcohol and water, and others, and examples of the organic solvent include N-methyl pyrrolidone (NMP), dimethylformamide, dimethylacetamide, methyl ethyl ketone, cyclohexanone, methyl acetate, methyl acrylate, diethyltriamine, N,N-dimethylamino propylamine, tetrahydrofuran (THF), toluene, acetone, diethyl ether, dimethylacetamide, hexamethylphosphoramide, dimethyl sulfoxide, benzene, xylene, quinoline, pyridine, methylnaphthalene, hexane, and others. When using the aqueous solvent in particular, it is preferred to use a thickening agent. A dispersing agent or the like is added together with this thickening agent, and a slurry is produced by using a latex such as SBR. Note that one dispersing solvent among these may be used independently, or two or more dispersing solvents may be used in combination.

The ranges of the contained amount (additive amount, percentage, quantity) of the binding material relative to a weight of the negative electrode composite are as follows. That is, the lower limit of the range is preferably 0.1 wt.% or more, more preferably 0.5 wt.% or more, and still more preferably 0.6 wt.% or more. The upper limit is 20 wt.% or less, preferably 15 wt.% or less, more preferably 10 wt.% or less, and still more preferably 8 wt.% or less.

In the case of exceeding the above-mentioned upper limit, there is fear that a percentage of the binding material which does not contribute to the battery capacity is increased, and the battery capacity is lowered. In addition, in the range less than the above-mentioned lower limit, there is fear that a strength of the negative electrode composite is lowered.

In particular, the ranges of the contained amount of the binding material relative to a weight of the negative electrode composite in the case where the rubber-like polymer represented by SBR is used as a major component of the binding material are as follows. That is, the lower limit of the range is 0.1 wt.% or more, preferably 0.5 wt.% or more, and more preferably 0.6 wt.% or more, and the upper limit is 5 wt.% or less, preferably 3 wt.% or less, and more preferably 2 wt.% or less.

Also, the ranges of the contained amount of the binding material relative to a weight of the negative electrode composite in the case where the fluorine-based polymer represented by the polyvinylidene fluoride is used as a major component of the binding material are as follows. That is, the lower limit of the range is 1 wt.% or more, preferably 2 wt.% or more, and more preferably 3 wt.% or more, and the upper limit is 15 wt.% or less, preferably 10 wt.% or less, and more preferably 8 wt.% or less.

The thickening agent is used for adjusting the viscosity of the slurry. The thickening agent is not particularly limited, and specific examples thereof include carboxymethylcellulose, methylcellulose, hydroxymethylcellulose, ethylcellulose, polyvinyl alcohol, oxidized starch, phosphorylation starch, casein, salt thereof, and the like. One material among these may be used independently, or two or more materials may be used in combination.

The ranges of the contained amount of the thickening agent relative to a weight of the negative electrode composite in the case of using the thickening agent are as follows. That is, the lower limit of the range is 0.1 wt.% or more, preferably 0.5 wt.% or more, and more preferably 0.6 wt.% or more, and the upper limit is 5 wt.% or less, preferably 3 wt.% or less, and more preferably 2 wt.% or less.

In the range less than the above-mentioned lower limit, there is fear that application properties of the slurry are lowered. Also, in the case of exceeding the above-mentioned upper limit, there is fear that a percentage of the negative electrode active material to the negative electrode composite is reduced, and the battery capacity is lowered and the resistance between negative electrode active materials is increased.

<Electrolytic solution>

The electrolytic solution of the present embodiment is composed of lithium salt (electrolyte) and nonaqueous solvent which dissolves the lithium salt. As necessary, additives may be added.

The lithium salt is not particularly limited as long as it can be used as an electrolyte of nonaqueous electrolytic solution for lithium ion batteries, and examples thereof include inorganic lithium salt, fluorine-containing organic lithium salt, and oxalatoborate salt shown below.

Examples of the inorganic lithium salt include inorganic fluoride salts such as $LiPF_6$, $LiBF_4$, $LiAsF_6$, and $LiSbF_6$, perhalogen acid salts such as $LiClO_4$, $LiBrO_4$, and $LiIO_4$, and inorganic chloride salt such as $LiAlCl_4$.

Examples of the fluorine-containing organic lithium salt include: perfluoroalkane sulfonate such as $LiCF_3SO_3$; perfluoroalkane sulfonylimide salts such as $LiN(CF_3SO_2)_2$, $LiN(CF_3CF_2SO_2)_2$, and $LiN(CF_3SO_2)(C_4F_9SO_9)$; perfluoroalkane sulfonylmethide salt such as $LiC(CF_3SO_2)_3$; fluoroalkyl fluorophosphates salts such as $Li[PF_5(CF_2CF_2CF_3)]$, $Li[PF_4(CF_2CF_2CF_3)_2]$, $Li[PF_3(CF_2CF_2CF_3)_3]$, $Li[PF_5(CF_2CF_2CF_2CF_3)]$, $Li[PF_4(CF_2CF_2CF_2CF_3)_2]$, and $Li[PF_3(CF_2CF_2CF_2CF_3)_3]$; and others.

Examples of the oxalatoborate salts include lithium bis(oxalato)borate, lithium difluoro oxalatoborate, and others.

One lithium salt among these may be used independently, or two or more lithium salts may be used in combination. Among them, lithium hexafluorophosphate ($LiPF_6$) is preferred when solubility for solvent, charging/discharging characteristics in the case of a secondary battery, output characteristics, cycle characteristics, and others are comprehensively considered.

A preferred example of using two or more kinds of lithium salts is the combined use of $LiPF_6$ and $LiBF_4$. In this case, a percentage of $LiBF_4$ to the sum total of both is preferably 0.01 wt.% or more and 20 wt.% or less, and more preferably 0.1 wt.% or more and 5 wt.% or less. Also, another preferred example is the combined use of inorganic fluoride salt and perfluoroalkane sulfonylimide salt, and in this case, a percentage of the inorganic fluoride salt to the sum total of both is preferably 70 wt.% or more and 99 wt.% or less, and more preferably 80 wt.% or more and 98 wt.% or less. According to the two preferred examples mentioned above, characteristic deterioration due to high temperature preservation can be suppressed.

The concentration of electrolyte in the nonaqueous electrolytic solution is not particularly limited, and the ranges of the concentration of electrolyte are as follows. That is, the lower limit of the concentration is 0.5 mol/L or more, preferably 0.6 mol/L or more, and more preferably 0.7 mol/L or more. Also, the upper limit of the concentration is 2 mol/L or less, preferably 1.8 mol/L or less, and more preferably 1.7 mol/L or less. When the concentration is too low, there is fear that an electric conductivity of the electrolytic solution becomes insufficient. Also, when the concentration is too high, there is fear that the electric conductivity is lowered because the viscosity is increased. The performance of the lithium ion battery may be lowered due to the deterioration of the electric conductivity like this.

The nonaqueous solvent is not particularly limited as long as it is nonaqueous solvent which can be used as the solvent of electrolyte for lithium ion batteries, and examples thereof include cyclic carbonate, chain carbonate, chain ester, cyclic ether, and chain ether described below.

As the cyclic carbonate, cyclic carbonate whose carbon number of an alkylene group constituting the cyclic carbonate is 2 to 6 is preferred, and cyclic carbonate whose carbon number thereof is 2 to 4 is more preferred. Specific examples thereof include ethylene carbonate, propylene carbonate, butylene carbonate, and others. Among them, ethylene carbonate and propylene carbonate are preferred.

As the chain carbonate, dialkyl carbonate is preferred, and chain carbonate whose carbon numbers of two alkyl groups are respectively 1 to 5 is preferred, and chain carbonate whose carbon numbers thereof are 1 to 4 is more preferred. Specific examples thereof include symmetric chain carbonates such as dimethyl carbonate, diethyl carbonate, and di-n-propyl carbonate; asymmetric chain carbonates such as ethyl methyl carbonate, methyl-n-propyl carbonate, and ethyl-n-propyl carbonate; and others. Among them, dimethyl carbonate, diethyl carbonate, and ethyl methyl carbonate are preferred.

Examples of chain esters include methyl acetate, ethyl acetate, propyl acetate, methyl propionate, and others. Among them, it is preferred to use the methyl acetate from a viewpoint of the improvement in low-temperature characteristics.

Examples of cyclic ether include tetrahydrofuran, 2-methyl tetrahydrofuran, tetrahydropyran, and others. Among them, it is preferred to use tetrahydrofuran from a viewpoint of the improvement in input/output characteristics.

Examples of chain ether include dimethoxyethane, dimethoxymethane, and others.

One material of these may be independently used and two or more materials may be used in combination, but it is preferred to use a mixed solvent in which two or more kinds of compounds are used together. For example, it is preferred to use high dielectric constant solvent of cyclic carbonates and low viscosity solvent such as chain carbonates and chain esters together. One of preferred combinations is the combination where cyclic carbonates and the chain carbonates are main constituents. Among them, the combination in which the sum total of the cyclic carbonates and the chain carbonates to the nonaqueous solvent is 80 vol.% or more, preferably 85 vol.% or more, and more preferably 90 vol.% or more, and the volume of the cyclic carbonates to the sum total of the cyclic carbonates and the chain carbonates is within the following ranges is preferred. The lower limit of a volume of the cyclic carbonates is 5% or more, preferably 10% or more, and more preferably 15% or more, and the upper limit is 50% or less, preferably 35% or less, and more preferably 30% or less. By using the combination of nonaqueous solvents like this, cycle characteristics and high temperature preservation characteristics of the battery (in particular, remaining capacity after high temperature preservation and a high-load-discharging capacity) are enhanced.

Specific examples of the preferred combinations of the cyclic carbonates and the chain carbonates include: ethylene carbonate and dimethyl carbonate; ethylene carbonate and diethyl carbonate; ethylene carbonate and ethyl methyl carbonate; ethylene carbonate, dimethyl carbonate and diethyl carbonate; ethylene carbonate, dimethyl carbonate and ethyl methyl carbonate; ethylene carbonate, diethyl carbonate and ethyl methyl carbonate; ethylene carbonate, dimethyl carbonate, diethyl carbonate and ethyl methyl carbonate; and others.

Combinations obtained by further adding propylene carbonate to these combinations of ethylene carbonates and chain carbonates are also included as preferred combinations. In the case where propylene carbonate is contained therein, a volume ratio of the ethylene carbonate and the propylene carbonate is preferably 99:1 to 40:60, and more preferably 95:5 to 50:50. Furthermore, the ranges of the amount of propylene carbonate contained in the nonaqueous solvent are as follows. That is, the lower limit of the amount of propylene carbonate is 0.1 vol.% or more, preferably 1 vol.% or more, and more preferably 2 vol.% or more, and the upper limit is 10 vol.% or less, preferably 8 vol.% or less, and more preferably 5 vol.% or less. According to the combination like this, low-temperature characteristics can be further enhanced, while maintaining the characteristics obtained from the combination between the ethylene carbonates and the chain carbonates.

Among these combinations, those containing asymmetric chain carbonates as the chain carbonates are further preferred. Specific examples thereof include: ethylene carbonate, dimethyl carbonate and ethyl methyl carbonate; ethylene carbonate, diethyl carbonate and ethyl methyl carbonate; and ethylene carbonate, dimethyl carbonate, diethyl carbonate and ethyl methyl carbonate. By the combination of ethylene carbonates, symmetric chain carbonates, and asymmetric chain carbonates as described above, cycle characteristics and large current discharging characteristics can be enhanced. Among them, the combination in which the asymmetric chain carbonates are ethyl methyl carbonate are preferred, and the combination in which the carbon number of an alkyl group constituting the dialkyl carbonate is 1 to 2 is preferred.

Other examples of preferred mixed solvents are those which contain the chain ester. In particular, the one which contains the chain ester in the above-mentioned mixed solvent of cyclic carbonates and chain carbonates is preferred from a viewpoint of enhancing low-temperature characteristics of the battery. As the chain ester, methyl acetate and ethyl acetate are particularly preferred. The lower limit of a volume of the chain ester contained in the nonaqueous solvent is 5% or more, preferably 8% or more, and more preferably 15% or more, and the upper limit is 50% or less, preferably 35% or less, more preferably 30% or less, and still more preferably 25% or less.

Another preferred example of nonaqueous solvent is one kind of organic solvent selected from a group including ethylene carbonate, propylene carbonate, and butylene carbonate, or mixed solvent composed of two or more kinds of organic solvents selected from this group, and the volume of this mixed solvent in the nonaqueous solvent is set to 60 vol.% or more. The mixed solvent like this is preferably adjusted by selecting the various types of solvents so that a flashing point becomes 50°C or higher, and especially, it is more preferred that the mixed solvent is adjusted so that the flashing point becomes 70°C or higher. In the nonaqueous electrolytic solution using the mixed solvent like this, even when used at a high temperature, evaporation and liquid leakage of the solvent are reduced. Especially, when the one in which the sum total of ethylene carbonate and propylene carbonate contained in the nonaqueous solvent is 80 vol.% or more, and preferably 90 vol.% or more and a volume ratio between the ethylene carbonate and the propylene carbonate is 30:70 to 60:40 is used, cycle characteristics, large current discharging characteristics and others can be enhanced.

The additive is not particularly limited as long as it is the additive for the nonaqueous electrolytic solution of the lithium ion battery, and examples thereof include heterocyclic compound containing nitrogen, sulfur, or nitrogen and sulfur, cyclic carboxylic acid ester, fluorine-containing cyclic carbonate, and other compounds having unsaturated bonding within a molecule.

The heterocyclic compound containing nitrogen, sulfur, or nitrogen and sulfur is not particularly limited, and examples thereof include: pyrrolidinones such as 1-methyl-2-pyrrolidinone, 1,3-dimethyl-2-pyrrolidinone, 1,5-dimethyl-2-pyrrolidinone, 1-ethyl-2-pyrrolidinone, and 1-cyclohexyl-2-pyrrolidinone; oxazolidinones such as 3-methyl-2-oxazolidinone, 3-ethyl-2-oxazolidinone, and 3-cyclohexyl-2-oxazolidinone; piperidones such as 1-methyl-2-piperidone and 1-ethyl-2-piperidone; imidazolidinones such as 1,3-dimethyl- 2-imidazolidinone and 1,3-diethyl-2-imidazolidinone; sulfolanes such as sulfolane, 2-methyl sulfolane, and 3-methyl sulfolane; sulfolene; sulfites such as ethylene sulfite and propylene sulfite; and sultones such as 1,3-propane sultone, 1-methyl-1,3-propane sultone, 3-methyl-1,3-propane sultone, 1,4-butane sultone, 1,3-propene sultone, and 1,4-butene sultone; and others. Among them, 1-methyl-2-pyrrolidinone, 1-methyl-2-piperidone, 1,3-propane sultone, 1,4-butane sultone, 1,3-propene sultone, and the 1,4-butene sultone and others are particularly preferred from a viewpoint of the extension of the battery life.

The cyclic carboxylic acid ester is not particularly limited, and examples thereof include γ-butyrolactone, γ-valerolactone, γ-hexalactone, γ-heptalactone, γ-octalactone, γ-nonalactone, γ-decalactone, γ-undecalactone, γ-dodecalactone, α-methyl-γ-butyrolactone, α-ethyl-γ-butyrolactone, α-propyl-γ-butyrolactone, α-methyl-γ-valerolactone, α-ethyl-γ-valerolactone, α,α-dimethyl-γ-butyrolactone, α,α-dimethyl-γ-valerolactone, δ-valerolactone, δ-hexalactone, δ-octalactone, δ-nonalactone, δ-decalactone, δ-undecalactone, δ-dodecalactone, and others. Among them, γ-butyrolactone, γ-valerolactone and the like are particularly preferred from a viewpoint of the extension of the battery life.

The fluorine-containing cyclic carbonate is not particularly limited, and examples thereof include fluoroethylene carbonate, difluoroethylene carbonate, trifluoroethylene carbonate, tetrafluoroethylene carbonate, trifluoropropylene carbonate, and others. Among them, fluoroethylene carbonate or the like is particularly preferred from a viewpoint of the extension of the battery life.

Examples of other compounds having unsaturated bonding within a molecule include: carbonates such as vinylene carbonate, vinylethylene carbonate, divinylethylene carbonate, methylvinyl carbonate, ethylvinyl carbonate, propylvinyl carbonate, divinyl carbonate, allylmethyl carbonate, allylethyl carbonate, allylpropyl carbonate, diarylcarbonate, and dimethallyl carbonate; esters such as vinyl acetate, vinyl propionate, vinyl acrylate, vinyl crotonate, vinyl methacrylate, allyl acetate, allyl propionate, methyl acrylate, ethyl acrylate, propyl acrylate, methyl methacrylate, ethyl methacrylate, and propyl methacrylate; sulfones such as divinyl sulfone, methylvinyl sulfone, ethylvinyl sulfone, propylvinyl sulfone, diaryl sulfone, allylethyl sulfone, allylethyl sulfone, and allylpropyl sulfone; sulfites such as divinyl sulfite, methylvinyl sulfite, ethylvinyl sulfite, and diaryl sulfite; sulfonates such as vinylmethane sulfonate, vinylethane sulfonate, allylmethane sulfonate, allylethane sulfonate, methylvinyl sulfonate, and ethylvinyl sulfonate; sulfates such as divinyl sulfate, methylvinyl sulfate, ethylvinyl sulfate, and diaryl sulfate; and others. Among them, vinylene carbonate, dimethallyl carbonate, vinyl ethylene carbonate, divinyl ethylene carbonate, vinyl acetate, vinyl propionate, vinyl acrylate, divinyl sulfone, vinylmethane sulfonate, and others are particularly preferred from a viewpoint of the extension of the battery life.

Other than the above-mentioned additives, other additives such as an overcharging prevention material, a negative electrode coating material, a positive electrode protection material, a high input/output material may be used in accordance with desired functions.

Examples of the overcharging prevention material include: aromatic compounds such as biphenyl, alkyl biphenyl, terphenyl, partially hydrogenated terphenyl, cyclohexylbenzene, t-butylbenzene, t-amylbenzene, diphenyl ether, and dibenzofuran; partially fluorinated compounds of the above-mentioned aromatic compounds such as 2-fluorobiphenyl, o-cyclohexyl fluorobenzene, and p-cyclohexyl fluorobenzene; fluorine-containing anisole compounds such as 2,4-difluoro anisole, 2,5-difluoro anisole, 2,6-difluoro anisole, and 3,5-difluoro anisole; and others. Among them, aromatic compounds such as biphenyl, alkyl biphenyl, terphenyl, partially hydrogenated terphenyl, cyclohexylbenzene, t-butylbenzene, t-amylbenzene, diphenyl ether, and dibenzofuran are preferred. Two or more kinds of these overcharging prevention materials may be used together. When two or more kinds are used together, it is particularly preferred to use cyclohexylbenzene or terphenyl (or partially hydrogenated compound thereof) together with t-butylbenzene or t-amylbenzene.

Examples of the negative electrode coating material include succinic anhydride, glutaric anhydride, maleic anhydride, citraconic anhydride, glutaconic anhydride, itaconic anhydride, cyclohexanedicarboxylic anhydride, and others. Among them, succinic anhydride and maleic anhydride are preferred. Two or more kinds of these negative electrode coating materials may be used together.

Examples of the positive electrode protection material include dimethyl sulfoxide, diethyl sulfoxide, dimethyl sulfite, diethyl sulfite, methyl methanesulfonate, busulfan, toluenesulfonic acid methyl, dimethyl sulfate, diethyl sulfate, dimethyl sulfone, diethyl sulfone, diphenyl sulfide, thioanisole, diphenyl disulfide, and others. Among them, methyl methanesulfonate, busulfan, and dimethyl sulfone are preferred. Two or more kinds of these positive electrode protection materials may be used together.

Examples of the high input/output material include: ammonium salt, potassium salt, or lithium salt of perfluoroalkyl sulfonate and perfluoroalkyl carboxylate; surface active agents such as perfluoroalkyl polyoxyethylene ether and fluorinated alkyl ester; and others. Among them, perfluoroalkyl polyoxyethylene ether and fluorinated alkyl ester are preferred.

The percentage of the additives in the nonaqueous electrolytic solution is not particularly limited, and the ranges thereof are as follows. Note that, in the case of using a plurality of additives, they indicate the percentages of respective additives. That is, the lower limit of the percentage of the additive for the nonaqueous electrolytic solution is preferably 0.01 wt.% or more, more preferably 0.1 wt.% or more, and still more preferably 0.2 wt.% or more, and the upper limit is preferably 5 wt.% or less, more preferably 3 wt.% or less, and still more preferably 2 wt.% or less.

By means of the above-mentioned other additives, for example, it is possible to suppress an abrupt electrode reaction in an abnormal state due to overcharging, enhance the capacity maintenance characteristics and cycle characteristics after high temperature preservation, and enhance the input/output characteristics.

<Separator>

The separator is not particularly limited as long as it has ionic permeability while electronically insulating the positive electrode and the negative electrode, and is provided with resistance against oxidization on the positive electrode side and reduction on the negative electrode side. As materials (substances) for the separator which satisfy the characteristics mentioned above, for example, resin, inorganic substance, and glass fiber are used.

As the resin, olefin-based polymer, fluorine-based polymer, cellulose-based polymer, polyimide, nylon, and others are used. Specifically, it is preferred to select from materials which are stable for the nonaqueous electrolytic solution and excellent in solution retention, and porous sheet, nonwoven fabric or the like using polyolefin such as polyethylene or polypropylene as a raw material is preferably used.

As the inorganic substance, oxides such as alumina and silicon dioxide, nitrides such as aluminum nitride and silicon nitride, sulfates such as barium sulfate and calcium sulfate, and others are used. For example, it is possible to use the separator obtained by adhering the above-mentioned inorganic substance in fiber shape or particle shape to a base material in a thin film shape such as nonwoven fabric, woven fabric, and fine porous film. As the base material in a thin film shape, one whose pore diameter is 0.01 to 1 $\mu$m and thickness is 5 to 50 $\mu$m is suitably used. Also, for example, the one which is made of the above-mentioned inorganic substance in the fiber shape or particle shape and formed into a composite porous layer by using a binding material such as resin can be used as the separator. Furthermore, it is also possible to form the separator by forming this composite porous layer on the surface of the positive electrode or the negative electrode. For example, a composite porous layer obtained by binding alumina particles whose 90% particle size is less than 1 $\mu$m by using a fluororesin as a binding material may be formed on the surface of the positive electrode.

<Other constituent parts>

A cleavage valve may be provided as other constituting part of the lithium ion battery. By opening the cleavage valve, a pressure rise inside the battery can be suppressed, and safety can be enhanced.

Also, a component part which discharges an inert gas (for example, carbon dioxide) in association with temperature increase may be provided. By providing the component part like this, it becomes possible to promptly open the cleavage valve by the generation of the inert gas when a temperature inside the battery is increased, and the safety can be enhanced. Examples of the material used for the above-mentioned component part include lithium carbonate, polyalkylene carbonate resin, and others. Examples of polyalkylene carbonate resin include polyethylene carbonate, polypropylene carbonate, poly(1,2-dimethyl ethylene carbonate), polybutene carbonate, polyisobutene carbonate, polypentene carbonate, polyhexene carbonate, polycyclopentene carbonate, polycyclohexene carbonate, polycyclohepten carbonate, polycyclooctane carbonate, polylimonene carbonate, and others. As the materials used for the above-mentioned component part, lithium carbonate, polyethylene carbonate, and polypropylene carbonate are preferred.

<Manufacturing Method of Lithium Ion Battery>

Hereinafter, a method of manufacturing a lithium ion battery according to the present embodiment will be described.

[Fabrication of Positive Electrode Plate]

The positive electrode plate was fabricated in the following manner. Layered lithium nickel manganese cobalt composite oxide (NMC) and spinel lithium manganese oxide (sp-Mn) as positive electrode active materials were mixed with a predetermined weight ratio (NMC/sp-Mn) of the active materials. A scale-like graphite (average particle diameter: 20 $\mu$m) as a conducting material and polyvinylidene fluoride as an binding material were sequentially added into this mixture of positive electrode active materials and then mixed, thereby obtaining a mixture of positive electrode materials. The weight ratio of the active material, the conducting material, and the binding material was set to 90:5:5. Furthermore, N-methyl-2-pyrrolidone (NMP) as a dispersing solvent was added to the above-mentioned mixture and then kneaded, thereby forming a slurry. This slurry was applied substantially evenly and uniformly by a specified quantity to both surfaces of an aluminum foil having a thickness of 20 ($\mu$m serving as the current collector for the positive electrode. The aluminum foil had a rectangular shape whose shorter side (width) was 350 mm, and an uncoated portion with a 50 mm width was left along one long side. Thereafter, a drying process was performed and consolidation was carried out by pressing to obtain a predetermined density. Then, a positive electrode plate having a width of 350 mm was acquired by cutting. At this time, cutouts were formed in the above-mentioned uncoated portion, and the cutout remainder was provided as a lead piece. The width of the lead piece was set to 10 mm, and the interval between adjacent lead pieces was set to 20 mm.

[Fabrication of Negative Electrode Plate]

The negative electrode plate was fabricated in the following manner. Amorphous (non-crystalline) carbon was used as the negative electrode active material. Specifically, a brand name of CARBOTRON P (powder) manufactured by Kureha Chemical Industry Co., Ltd. was used. Polyvinylidene fluoride was added as a binding material to this amorphous (non-crystalline) carbon. The weight ratio of the active material and the binding material was set to 92:8. N-methyl-2-pyrrolidone (NMP) as a dispersing solvent was added thereto and then kneaded, thereby forming a slurry. This slurry was applied substantially evenly and uniformly by a specified quantity to both surfaces of rolled copper foil having a thickness of 10 $\mu$m serving as the current collector for the negative electrode. The rolled copper foil had a rectangular shape whose shorter side (width) was 355 mm, and an uncoated portion with a 50 mm width was left along one long side. Thereafter, a drying process was performed and consolidation was carried out by pressing to obtain a predetermined density. The negative electrode composite density was set to 1.0 g/cm$^3$. Then, a negative electrode plate having a width of 355 mm was acquired by cutting. At this time, cutouts were formed in the above-mentioned uncoated portion, and the cutout remainder was provided as a lead piece. The width of the lead piece was set to 10 mm, and the interval between adjacent lead pieces was set to 20 mm.

[Fabrication of Battery]

FIG. 1 shows a cross-sectional view of the lithium ion battery. The above-mentioned positive electrode plate and the above-mentioned negative electrode plate were wound with interposing a separator made of polyethylene having a thickness of 30 $\mu$m therebetween so that these were not in direct contact with each other. At this time, the lead pieces of the positive electrode plate and the lead pieces of the negative electrode plate were made to be located at both end faces on the mutually opposite sides of the wound group. In addition, the lengths of the positive electrode plate, the negative electrode plate, and the separator were adjusted so that the diameter of the wound group was set to 65$\pm$0.1 mm or 40$\pm$0.1 mm.

Subsequently, as shown in FIG. 1, the lead pieces 9 derived from the positive electrode plate were transformed, and all of them were gathered in the vicinity of a bottom part of a flange 7 on the positive electrode side and were made to be contacted. The flange 7 on the positive electrode side was integrally formed so as to project from the circumference of an electrode post (positive electrode external terminal 1) located approximately on the extension line of an axis of the wound group 6, and had a bottom part and a side part. After that, the lead piece 9 was connected and fixed to the bottom part of the flange 7 by ultrasonic welding. The lead pieces 9 derived from the negative electrode plate and a bottom part of the flange 7 on the negative electrode side were connected and fixed in the same manner. The flange 7 on the negative electrode side was integrally formed so as to project from the circumference of an electrode post (negative electrode external terminal 1') located approximately on the extension line of the axis of the wound group 6, and had a bottom part and a side part.

Thereafter, the side part of the flange 7 of the positive electrode external terminal 1 and the side part of the flange 7 of the negative electrode external terminal 1' were covered by using adhesive tape, thereby forming an insulating coating 8. In the same way, the insulating coating 8 was formed also on the outer circumference of the wound group 6. For example, this adhesive tape was wound over and over again from the side part of the flange 7 on the positive electrode external terminal 1 side to the outer circumferential surface of the wound group 6 and from the outer circumferential surface of the wound group 6 to the side part of the flange 7 on the negative electrode external terminal 1' side, thereby forming the insulating coating 8. As the insulating coating (adhesive tape) 8, an adhesive tape whose base material was polyimide and whose one surface was coated with an adhesive material made of hexamethacrylate was used. The thickness of the insulating coating 8 (the number of turns of the adhesive tape) was adjusted so that the maximum diameter part of the wound group 6 was slightly smaller than an inner diameter of a battery container 5 made of stainless steel, and the wound group 6 was inserted into the battery container 5. As for the battery container 5, the container whose outer diameter was 67 mm or 42 mm and whose inner diameter was 66 mm or 41 mm was used.

Subsequently, as shown in FIG. 1, a ceramic washer 3' was fitted to each of an electrode post whose tip constituted the positive electrode external terminal 1 and an electrode post whose tip constituted the negative electrode external terminal 1'. The ceramic washer 3' was made of alumina, and a thickness of a part abutting on the back surface of a battery lid 4 was 2 mm, the inner diameter was 16 mm, and the outer diameter was 25 mm. Subsequently, in a state where the ceramic washer 3 was placed on the battery lid 4, the positive electrode external terminal 1 was placed through the ceramic washer 3, and in a state where the other ceramic washer 3 was placed on the other battery lid 4, the negative electrode external terminal 1' was placed through the other ceramic washer 3. The ceramic washer 3 was made of alumina and had a plate-like shape with a thickness of 2 mm, an inner diameter of 16 mm, and an outer diameter of 28 mm.

Thereafter, a peripheral end face of the battery lid 4 was fitted to an opening of the battery container 5, and the whole area of the contact portion therebetween was laser-welded. At this time, each of the positive electrode external terminal 1 and the negative electrode external terminal 1' penetrated through a hole (opening) located in the center of the battery lid 4, and projected to the outside of the battery lid 4. On the battery lid 4, a cleavage valve 10 cleaved in accordance with internal pressure rise of the battery was provided. The cleaving pressure of the cleavage valve 10 was set to 13 to 18 kgf/cm$^2$.

Subsequently, as shown in FIG. 1, a metal washer 11 was fitted to each of the positive electrode external terminal 1 and the negative electrode external terminal 1'. In this manner, the metal washer 11 was arranged on the ceramic washer 3. The metal washer 11 was made of a material smoother than a bottom surface of a nut 2.

Subsequently, a metal nut 2 was screwed on each of the positive electrode external terminal 1 and the negative electrode external terminal 1', and the battery lid 4 was fastened tightly and fixed between the flange 7 and the nut 2 via the ceramic washer 3, the metal washer 11, and the ceramic washer 3'. At this time, a fastening torque value was set to 70 kgf·cm. Note that the metal washer 11 did not rotate until fastening work was completed. In this state, power generation elements inside the battery container 5 were isolated from the outside air by the compression of an O-ring 12 made of rubber (EPDM) interposed between the back surface of the battery lid 4 and the flange 7.

Thereafter, an electrolytic solution was poured into the battery container 5 by a specified quantity from a pouring port 13 provided in the battery lid 4, and then the pouring port 13 was sealed, thereby completing a cylindrical lithium ion battery 20.

As the electrolytic solution, the solution in which lithium hexafluorophosphate ($LiPF_6$) was dissolved by 1.2 mol/L into a mixed solution obtained by mixing ethylene carbonate, dimethyl carbonate, and ethyl methyl carbonate by a volume ratio of 2:3:2 was used. Note that, in the cylindrical lithium ion battery 20 fabricated in the present example, a current cutoff mechanism which operates so as to cut off the current in accordance with the rise of an internal pressure of the battery container 5 was not provided.

[Example A]

Hereinafter, the present embodiment will be described in more details based on Example A. Note that Example A is in fact an example useful to understand the claimed invention but which does not fall within the scope of the claim.

[Evaluation of Battery Characteristics (Discharge Characteristics and Safety (Nail Penetration Test and External Short-Circuit Test))]

Battery characteristics of the lithium ion battery fabricated in the above-mentioned manner were evaluated by using the methods shown below.

Regarding the fabricated lithium ion batteries, discharging characteristics and safety of the batteries each having different positive electrode composite densities, positive electrode composite application quantities, and weight ratios (NMC/sp-Mn) of the layered lithium nickel manganese cobalt composite oxide (NMC) and the spinel lithium manganese oxide (sp-Mn) were evaluated.

In a discharge test, first, the charging and discharging cycle with a current value of 0.5 C was repeated twice under an environment of 25°C in a voltage range of 4.2 to 2.7 V. Then, after charging the battery up to 4.2 V, discharging by constant current discharging with a final voltage of 2.7 V was performed at each current value of 0.5 C or 3 C.

In addition, safety was confirmed by the nail penetration test and the external short-circuit test.

In the nail penetration test, first, the charging and discharging cycle with a current value of 0.5 C was repeated twice under an environment of 25°C in a voltage range of 4.2 to 2.7 V. Then, after charging the battery up to 4.2 V, a nail having a diameter of 5 mm was pierced into the central part of the battery (cell) at a speed of 1.6 mm/s, and the positive electrode and the negative electrode were short-circuited in the battery container. The variation of an external appearance of the battery at this time was checked.

In the external short-circuit test, first, the charging and discharging cycle with a current value of 0.5 C was repeated twice under an environment of 25°C in a voltage range of 4.2 to 2.7 V. Then, after charging the battery up to 4.2 V, the positive electrode external terminal and the negative electrode external terminal were connected to a resistance of 30 mΩ. The variation of a surface temperature of the battery and the variation of an external appearance of the battery at this time were checked.

(Examples A1 to A80)

As indicated in Tables 1 to 3, the positive electrode composites each having different weight ratios (NMC/sp-Mn) of the active materials, positive electrode composite densities, and positive electrode composite application quantities were fabricated, and the batteries having a wound group diameter of 40 mm, an outer diameter of 42 mm, and an inner diameter of 41 mm were fabricated. Discharge capacity at each current value (0.5 C and 3 C), volume energy density at a current value of 0.5 C, output characteristics (discharge capacity at a current value of 3 C/discharge capacity at a current value of 0.5 C), and safety (nail penetration test and external short-circuit test) were evaluated. Specifically, an existence of a breakage of the battery container was checked. The breakage of the battery container included a crack, a swelling, and an ignition.

Table 1 to Table 3 show the results. Note that arrows (↑) indicating an upward direction means that it is the same numerical value as the upper column. As for the results of the nail penetration test, the result of the case where there was no breakage of the battery container (except a nailed part) was evaluated as "OK (good)" , and the result of the case where the breakage of the battery container occurred was evaluated as "NG (NO good)". In addition, as for the results of the external short-circuit test, the result of the case where there was no breakage of the battery container was evaluated as "OK", and the result of the case where the breakage of the battery container occurred was evaluated as "NG". The mark "o" in the Tables indicates that the result was "OK" in both of the nail penetration test and the external short-circuit test. Also, the mark "x" in the Tables indicates that the result was "NG" in both of the nail penetration test and the external short-circuit test. Furthermore, the result of the case where the surface temperature of the battery was increased by 3°C or more in the external short-circuit test was denoted by "*". These notations are the same also in the other tables.

(Examples A81 to A144)

As indicated in Table 4 and Table 5, the positive electrode composites each having different weight ratios (NMC/sp-Mn) of the active materials, positive electrode composite densities, and positive electrode composite application quantities were fabricated, and the batteries having a wound group diameter of 65 mm, an outer diameter of 67 mm, and an inner diameter of 66 mm were fabricated. Discharge capacity at each current value (0.5 C and 3 C), volume energy density at a current value of 0.5 C, output characteristics (discharge capacity at a current value of 3 C/discharge capacity at a current value of 0.5 C), and safety (nail penetration test and external short-circuit test) were evaluated. Table 4 and Table 5 show the results.

(Examples A145 and A146)

The evaluation of the lithium ion battery life described below was carried out. The battery was left for one month under an environment of 40°C after charging the battery up to 4.2 V under an environment of 25°C, and then a capacity after being left was measured under an environment of 25°C. Table 6 shows capacity ratios before and after being left. The capacity before being left was a capacity acquired by constant current discharging with a final voltage of 2.7 V at a current value of 0.5 C after charging the battery up to 4.2 V under an environment of 25°C.

Evaluation subjects were the lithium ion battery of Example A144, and lithium ion batteries of Examples A145 and A146 described below. Table 6 shows the results.

(Example A145)

The lithium ion battery similar to that of Example A144 other than that Al-replaced spinel lithium manganese oxide was used as the spinel lithium manganese oxide (sp-Mn) was fabricated, and life was evaluated.

(Example A146)

The lithium ion battery similar to that of Example A144 other than that Mg-replaced spinel lithium manganese oxide was used as the spinel lithium manganese oxide (sp-Mn) was fabricated, and life was evaluated.

(Comparative Example A1)

As indicated in Table 7, the positive electrode composite having the weight ratio (NMC/sp-Mn) of the active materials of 10/90, the positive electrode composite density of 2.3 g/cm$^3$, and the positive electrode composite application quantity of 150 g/m$^2$ was fabricated, and the battery having a wound group diameter of 40 mm, an outer diameter of 42 mm, and an inner diameter of 41 mm was fabricated. Discharge capacity at each current value (0.5 C and 3 C), volume energy density at a current value of 0.5 C, output characteristics (discharge capacity at a current value of 3 C/discharge capacity at a current value of 0.5 C), and safety (nail penetration test and external short-circuit test) were evaluated. Table 7 shows the results.

(Comparative Examples A2 to A6)

As indicated in Table 8, the positive electrode composites each having different weight ratios (NMC/sp-Mn) of the active materials, positive electrode composite densities, and positive electrode composite application quantities were fabricated, and the batteries having a wound group diameter of 65 mm, an outer diameter of 67 mm, and an inner diameter of 66 mm were fabricated. Discharge capacity at each current value (0.5 C and 3 C), volume energy density at a current value of 0.5 C, output characteristics (discharge capacity at a current value of 3 C/discharge capacity at a current value of 0.5 C), and safety (nail penetration test and external short-circuit test) were evaluated. Table 8 shows the results.

[Table 1]

| Example | NMC/sp-Mn | Positive electrode composite density (g/cm³) | Application quantity of positive electrode composite (g/m²) | Diameter of wound group (mm) | Outer diameter (mm) | Inner diameter (mm) | Discharge capacity (Ah) @0.5 C | Discharge capacity (Ah) @3.0 C | Output characteristics | Volume energy density (Wh/L) @0.5 C | Safety |
|---|---|---|---|---|---|---|---|---|---|---|---|
| A1 | 10/90 | 2.4 | 175 | 40 | 42 | 41 | 30 | 29 | 0.97 | 165 | ○ |
| A2 | ↑ | ↑ | 200 | ↑ | ↑ | ↑ | 31 | 30 | 0.96 | 172 | ○ |
| A3 | ↑ | ↑ | 225 | ↑ | ↑ | ↑ | 32 | 30 | 0.94 | 174 | ○ |
| A4 | ↑ | ↑ | 250 | ↑ | ↑ | ↑ | 32 | 29 | 0.88 | 179 | ○ |
| A5 | ↑ | 2.6 | 175 | ↑ | ↑ | ↑ | 31 | 30 | 0.99 | 170 | ○ |
| A6 | ↑ | ↑ | 200 | ↑ | ↑ | ↑ | 32 | 31 | 0.98 | 177 | ○ |
| A7 | ↑ | ↑ | 225 | ↑ | ↑ | ↑ | 33 | 32 | 0.96 | 181 | ○ |
| A8 | ↑ | ↑ | 250 | ↑ | ↑ | ↑ | 34 | 30 | 0.90 | 186 | ○ |
| A9 | 20/80 | 2.4 | 175 | ↑ | ↑ | ↑ | 32 | 31 | 0.97 | 177 | ○ |
| A10 | ↑ | ↑ | 200 | ↑ | ↑ | ↑ | 33 | 32 | 0.96 | 181 | ○ |
| A11 | ↑ | ↑ | 225 | ↑ | ↑ | ↑ | 33 | 31 | 0.93 | 184 | ○ |
| A12 | ↑ | ↑ | 250 | ↑ | ↑ | ↑ | 34 | 29 | 0.86 | 188 | ○ |
| A13 | ↑ | 2.6 | 175 | ↑ | ↑ | ↑ | 33 | 33 | 0.99 | 181 | ○ |
| A14 | ↑ | ↑ | 200 | ↑ | ↑ | ↑ | 34 | 33 | 0.98 | 186 | ○ |
| A15 | ↑ | ↑ | 225 | ↑ | ↑ | ↑ | 35 | 33 | 0.95 | 191 | ○ |
| A16 | ↑ | ↑ | 250 | ↑ | ↑ | ↑ | 36 | 32 | 0.88 | 198 | ○ |
| A17 | 30/70 | 2.4 | 175 | ↑ | ↑ | ↑ | 35 | 34 | 0.97 | 191 | ○ |
| A18 | ↑ | ↑ | 200 | ↑ | ↑ | ↑ | 36 | 34 | 0.96 | 198 | ○ |
| A19 | ↑ | ↑ | 225 | ↑ | ↑ | ↑ | 37 | 33 | 0.90 | 202 | ○ |
| A20 | ↑ | ↑ | 250 | ↑ | ↑ | ↑ | 38 | 32 | 0.84 | 207 | ○ |
| A21 | ↑ | 2.5 | 175 | ↑ | ↑ | ↑ | 35 | 34 | 0.98 | 191 | ○ |
| A22 | ↑ | ↑ | 200 | ↑ | ↑ | ↑ | 36 | 35 | 0.97 | 198 | ○ |
| A23 | ↑ | ↑ | 225 | ↑ | ↑ | ↑ | 37 | 34 | 0.91 | 205 | ○ |
| A24 | ↑ | ↑ | 250 | ↑ | ↑ | ↑ | 38 | 32 | 0.85 | 209 | ○ |
| A25 | ↑ | 2.6 | 175 | ↑ | ↑ | ↑ | 36 | 36 | 0.99 | 198 | ○ |
| A26 | ↑ | ↑ | 200 | ↑ | ↑ | ↑ | 37 | 36 | 0.98 | 202 | ○ |
| A27 | ↑ | ↑ | 225 | ↑ | ↑ | ↑ | 38 | 35 | 0.92 | 209 | ○ |
| A28 | ↑ | ↑ | 250 | ↑ | ↑ | ↑ | 39 | 33 | 0.86 | 214 | ○ |
| A29 | ↑ | 2.7 | 175 | ↑ | ↑ | ↑ | 36 | 36 | 0.98 | 200 | ○ |
| A30 | ↑ | ↑ | 200 | ↑ | ↑ | ↑ | 38 | 36 | 0.97 | 207 | ○ |
| A31 | ↑ | ↑ | 225 | ↑ | ↑ | ↑ | 38 | 35 | 0.91 | 212 | ○ |
| A32 | ↑ | ↑ | 250 | ↑ | ↑ | ↑ | 40 | 34 | 0.85 | 219 | ○ |

[Table 2]

| Example | NMC/sp-Mn | Positive electrode composite density (g/cm³) | Application quantity of positive electrode composite (g/m²) | Diameter of wound group (mm) | Outer diameter (mm) | Inner diameter (mm) | Discharge capacity (Ah) @0.5C | Discharge capacity (Ah) @3.0C | Output characteristics | Volume energy density (Wh/L) @0.5C | Safety |
|---|---|---|---|---|---|---|---|---|---|---|---|
| A33 | 40/60 | 2.4 | 175 | 40 | 42 | 41 | 36 | 34 | 0.96 | 198 | ○ |
| A34 | ↑ | ↑ | 200 | ↑ | ↑ | ↑ | 37 | 35 | 0.95 | 202 | ○ |
| A35 | ↑ | ↑ | 225 | ↑ | ↑ | ↑ | 38 | 33 | 0.89 | 207 | ○ |
| A36 | ↑ | ↑ | 250 | ↑ | ↑ | ↑ | 38 | 32 | 0.83 | 209 | ○ |
| A37 | ↑ | 2.5 | 175 | ↑ | ↑ | ↑ | 36 | 35 | 0.97 | 198 | ○ |
| A38 | ↑ | ↑ | 200 | ↑ | ↑ | ↑ | 37 | 36 | 0.96 | 205 | ○ |
| A39 | ↑ | ↑ | 225 | ↑ | ↑ | ↑ | 38 | 35 | 0.90 | 212 | ○ |
| A40 | ↑ | ↑ | 250 | ↑ | ↑ | ↑ | 40 | 33 | 0.84 | 219 | ○ |
| A41 | ↑ | 2.6 | 175 | ↑ | ↑ | ↑ | 37 | 36 | 0.98 | 202 | ○ |
| A42 | ↑ | ↑ | 200 | ↑ | ↑ | ↑ | 38 | 36 | 0.97 | 207 | ○ |
| A43 | ↑ | ↑ | 225 | ↑ | ↑ | ↑ | 39 | 35 | 0.91 | 214 | ○ |
| A44 | ↑ | ↑ | 250 | ↑ | ↑ | ↑ | 40 | 34 | 0.85 | 221 | ○ |
| A45 | ↑ | 2.7 | 175 | ↑ | ↑ | ↑ | 38 | 37 | 0.97 | 209 | ○ |
| A46 | ↑ | ↑ | 200 | ↑ | ↑ | ↑ | 39 | 37 | 0.96 | 214 | ○ |
| A47 | ↑ | ↑ | 225 | ↑ | ↑ | ↑ | 40 | 36 | 0.90 | 221 | ○ |
| A48 | ↑ | ↑ | 250 | ↑ | ↑ | ↑ | 41 | 34 | 0.84 | 226 | ○ |
| A49 | 50/50 | 2.4 | 175 | ↑ | ↑ | ↑ | 38 | 35 | 0.94 | 207 | ○* |
| A50 | ↑ | ↑ | 200 | ↑ | ↑ | ↑ | 38 | 35 | 0.93 | 209 | ○* |
| A51 | ↑ | ↑ | 225 | ↑ | ↑ | ↑ | 39 | 34 | 0.87 | 214 | ○* |
| A52 | ↑ | ↑ | 250 | ↑ | ↑ | ↑ | 40 | 32 | 0.81 | 219 | ○* |
| A53 | ↑ | 2.5 | 175 | ↑ | ↑ | ↑ | 38 | 36 | 0.95 | 207 | ○* |
| A54 | ↑ | ↑ | 200 | ↑ | ↑ | ↑ | 39 | 36 | 0.94 | 214 | ○* |
| A55 | ↑ | ↑ | 225 | ↑ | ↑ | ↑ | 40 | 35 | 0.88 | 219 | ○* |
| A56 | ↑ | ↑ | 250 | ↑ | ↑ | ↑ | 41 | 33 | 0.82 | 223 | ○* |
| A57 | ↑ | 2.6 | 175 | ↑ | ↑ | ↑ | 38 | 37 | 0.96 | 212 | ○* |
| A58 | ↑ | ↑ | 200 | ↑ | ↑ | ↑ | 39 | 37 | 0.95 | 216 | ○* |
| A59 | ↑ | ↑ | 225 | ↑ | ↑ | ↑ | 40 | 36 | 0.89 | 221 | ○* |
| A60 | ↑ | ↑ | 250 | ↑ | ↑ | ↑ | 41 | 34 | 0.83 | 228 | ○* |
| A61 | ↑ | 2.7 | 175 | ↑ | ↑ | ↑ | 39 | 37 | 0.95 | 216 | ○* |
| A62 | ↑ | ↑ | 200 | ↑ | ↑ | ↑ | 40 | 38 | 0.94 | 221 | ○* |
| A63 | ↑ | ↑ | 225 | ↑ | ↑ | ↑ | 41 | 36 | 0.88 | 226 | ○* |
| A64 | ↑ | ↑ | 250 | ↑ | ↑ | ↑ | 42 | 34 | 0.82 | 230 | ○* |

[Table 3]

| Example | NMC/sp–Mn | Positive electrode composite density (g/cm³) | Application quantity of positive electrode composite (g/m²) | Diameter of wound group (mm) | Outer diameter (mm) | Inner diameter (mm) | Discharge capacity (Ah) | | Output characteristics | Volume energy density (Wh/L) | Safety |
|---|---|---|---|---|---|---|---|---|---|---|---|
| | | | | | | | @0.5 C | @3.0 C | | @0.5 C | |
| A65 | 60/40 | 2.4 | 175 | 40 | 42 | 41 | 41 | 38 | 0.92 | 226 | ○* |
| A66 | ↑ | ↑ | 200 | ↑ | ↑ | ↑ | 42 | 38 | 0.91 | 230 | ○* |
| A67 | ↑ | ↑ | 225 | ↑ | ↑ | ↑ | 43 | 36 | 0.85 | 235 | ○* |
| A68 | ↑ | ↑ | 250 | ↑ | ↑ | ↑ | 43 | 34 | 0.79 | 240 | ○* |
| A69 | ↑ | 2.5 | 175 | ↑ | ↑ | ↑ | 41 | 38 | 0.93 | 228 | ○* |
| A70 | ↑ | ↑ | 200 | ↑ | ↑ | ↑ | 43 | 39 | 0.92 | 235 | ○* |
| A71 | ↑ | ↑ | 225 | ↑ | ↑ | ↑ | 44 | 38 | 0.86 | 242 | ○* |
| A72 | ↑ | ↑ | 250 | ↑ | ↑ | ↑ | 45 | 36 | 0.80 | 249 | ○* |
| A73 | ↑ | 2.6 | 175 | ↑ | ↑ | ↑ | 42 | 39 | 0.94 | 230 | ○* |
| A74 | ↑ | ↑ | 200 | ↑ | ↑ | ↑ | 43 | 40 | 0.93 | 237 | ○* |
| A75 | ↑ | ↑ | 225 | ↑ | ↑ | ↑ | 45 | 39 | 0.87 | 247 | ○* |
| A76 | ↑ | ↑ | 250 | ↑ | ↑ | ↑ | 46 | 37 | 0.81 | 253 | ○* |
| A77 | ↑ | 2.7 | 175 | ↑ | ↑ | ↑ | 42 | 39 | 0.93 | 233 | ○* |
| A78 | ↑ | ↑ | 200 | ↑ | ↑ | ↑ | 44 | 40 | 0.92 | 242 | ○* |
| A79 | ↑ | ↑ | 225 | ↑ | ↑ | ↑ | 45 | 39 | 0.86 | 249 | ○* |
| A80 | ↑ | ↑ | 250 | ↑ | ↑ | ↑ | 46 | 37 | 0.80 | 256 | ○* |

[Table 4]

| Example | NMC/sp-Mn | Positive electrode composite density (g/cm³) | Application quantity of positive electrode composite (g/m²) | Diameter of wound group (mm) | Outer diameter (mm) | Inner diameter (mm) | Discharge capacity (Ah) @0.5 C | @3.0 C | Output characteristics | Volume energy density (Wh/L) @0.5 C | Safety |
|---|---|---|---|---|---|---|---|---|---|---|---|
| A81 | 10/90 | 2.4 | 175 | 65 | 67 | 66 | 71 | 69 | 0.97 | 181 | ○ |
| A82 | ↑ | ↑ | 200 | ↑ | ↑ | ↑ | 74 | 71 | 0.96 | 189 | ○ |
| A83 | ↑ | ↑ | 225 | ↑ | ↑ | ↑ | 75 | 71 | 0.94 | 192 | ○ |
| A84 | ↑ | ↑ | 250 | ↑ | ↑ | ↑ | 77 | 68 | 0.88 | 197 | ○ |
| A85 | ↑ | 2.6 | 175 | ↑ | ↑ | ↑ | 73 | 72 | 0.99 | 187 | ○ |
| A86 | ↑ | ↑ | 200 | ↑ | ↑ | ↑ | 76 | 74 | 0.98 | 194 | ○ |
| A87 | ↑ | ↑ | 225 | ↑ | ↑ | ↑ | 78 | 75 | 0.96 | 199 | ○ |
| A88 | ↑ | ↑ | 250 | ↑ | ↑ | ↑ | 80 | 72 | 0.90 | 204 | ○ |
| A89 | 20/80 | 2.4 | 175 | ↑ | ↑ | ↑ | 76 | 74 | 0.97 | 194 | ○ |
| A90 | ↑ | ↑ | 200 | ↑ | ↑ | ↑ | 78 | 75 | 0.96 | 199 | ○ |
| A91 | ↑ | ↑ | 225 | ↑ | ↑ | ↑ | 79 | 73 | 0.93 | 202 | ○ |
| A92 | ↑ | ↑ | 250 | ↑ | ↑ | ↑ | 81 | 70 | 0.86 | 207 | ○ |
| A93 | ↑ | 2.6 | 175 | ↑ | ↑ | ↑ | 78 | 77 | 0.99 | 199 | ○ |
| A94 | ↑ | ↑ | 200 | ↑ | ↑ | ↑ | 80 | 78 | 0.98 | 204 | ○ |
| A95 | ↑ | ↑ | 225 | ↑ | ↑ | ↑ | 82 | 78 | 0.95 | 210 | ○ |
| A96 | ↑ | ↑ | 250 | ↑ | ↑ | ↑ | 85 | 75 | 0.88 | 217 | ○ |
| A97 | 30/70 | 2.4 | 175 | ↑ | ↑ | ↑ | 82 | 80 | 0.97 | 210 | ○ |
| A98 | ↑ | ↑ | 200 | ↑ | ↑ | ↑ | 85 | 82 | 0.96 | 217 | ○ |
| A99 | ↑ | ↑ | 225 | ↑ | ↑ | ↑ | 87 | 78 | 0.90 | 222 | ○ |
| A100 | ↑ | ↑ | 250 | ↑ | ↑ | ↑ | 89 | 75 | 0.84 | 227 | ○ |
| A101 | ↑ | 2.5 | 175 | ↑ | ↑ | ↑ | 82 | 80 | 0.98 | 210 | ○ |
| A102 | ↑ | ↑ | 200 | ↑ | ↑ | ↑ | 85 | 82 | 0.97 | 217 | ○ |
| A103 | ↑ | ↑ | 225 | ↑ | ↑ | ↑ | 88 | 80 | 0.91 | 225 | ○ |
| A104 | ↑ | ↑ | 250 | ↑ | ↑ | ↑ | 90 | 77 | 0.85 | 230 | ○ |
| A105 | ↑ | 2.6 | 175 | ↑ | ↑ | ↑ | 85 | 84 | 0.99 | 217 | ○ |
| A106 | ↑ | ↑ | 200 | ↑ | ↑ | ↑ | 87 | 85 | 0.98 | 222 | ○ |
| A107 | ↑ | ↑ | 225 | ↑ | ↑ | ↑ | 90 | 83 | 0.92 | 230 | ○ |
| A108 | ↑ | ↑ | 250 | ↑ | ↑ | ↑ | 92 | 79 | 0.86 | 235 | ○ |
| A109 | ↑ | 2.7 | 175 | ↑ | ↑ | ↑ | 86 | 84 | 0.98 | 220 | ○ |
| A110 | ↑ | ↑ | 200 | ↑ | ↑ | ↑ | 89 | 86 | 0.97 | 227 | ○ |
| A111 | ↑ | ↑ | 225 | ↑ | ↑ | ↑ | 91 | 83 | 0.91 | 233 | ○ |
| A112 | ↑ | ↑ | 250 | ↑ | ↑ | ↑ | 94 | 80 | 0.85 | 240 | ○ |

[Table 5]

| Example | NMC/sp-Mn | Positive electrode composite density (g/cm³) | Application quantity of positive electrode composite (g/m²) | Diameter of wound group (mm) | Outer diameter (mm) | Inner diameter (mm) | Discharge capacity (Ah) @0.5C | Discharge capacity (Ah) @3.0C | Output characteristics | Volume energy density (Wh/L) @0.5C | Safety |
|---|---|---|---|---|---|---|---|---|---|---|---|
| A113 | 40/60 | 2.4 | 175 | 65 | 67 | 66 | 85 | 82 | 0.96 | 217 | ○* |
| A114 | ↑ | ↑ | 200 | ↑ | ↑ | ↑ | 87 | 83 | 0.95 | 222 | ○* |
| A115 | ↑ | ↑ | 225 | ↑ | ↑ | ↑ | 89 | 79 | 0.89 | 227 | ○* |
| A116 | ↑ | ↑ | 250 | ↑ | ↑ | ↑ | 90 | 75 | 0.83 | 230 | ○* |
| A117 | ↑ | 2.5 | 175 | ↑ | ↑ | ↑ | 85 | 82 | 0.97 | 217 | ○* |
| A118 | ↑ | ↑ | 200 | ↑ | ↑ | ↑ | 88 | 84 | 0.96 | 225 | ○* |
| A119 | ↑ | ↑ | 225 | ↑ | ↑ | ↑ | 91 | 82 | 0.90 | 233 | ○* |
| A120 | ↑ | ↑ | 250 | ↑ | ↑ | ↑ | 94 | 79 | 0.84 | 240 | ○* |
| A121 | ↑ | 2.6 | 175 | ↑ | ↑ | ↑ | 87 | 85 | 0.98 | 222 | ○* |
| A122 | ↑ | ↑ | 200 | ↑ | ↑ | ↑ | 89 | 86 | 0.97 | 227 | ○* |
| A123 | ↑ | ↑ | 225 | ↑ | ↑ | ↑ | 92 | 84 | 0.91 | 235 | ○* |
| A124 | ↑ | ↑ | 250 | ↑ | ↑ | ↑ | 95 | 81 | 0.85 | 243 | ○* |
| A125 | ↑ | 2.7 | 175 | ↑ | ↑ | ↑ | 90 | 87 | 0.97 | 230 | ○* |
| A126 | ↑ | ↑ | 200 | ↑ | ↑ | ↑ | 92 | 88 | 0.96 | 235 | ○* |
| A127 | ↑ | ↑ | 225 | ↑ | ↑ | ↑ | 95 | 86 | 0.90 | 243 | ○* |
| A128 | ↑ | ↑ | 250 | ↑ | ↑ | ↑ | 97 | 81 | 0.84 | 248 | ○* |
| A129 | 50/50 | 2.4 | 175 | ↑ | ↑ | ↑ | 89 | 84 | 0.94 | 227 | ○* |
| A130 | ↑ | ↑ | 200 | ↑ | ↑ | ↑ | 90 | 84 | 0.93 | 230 | ○* |
| A131 | ↑ | ↑ | 225 | ↑ | ↑ | ↑ | 92 | 80 | 0.87 | 235 | ○* |
| A132 | ↑ | ↑ | 250 | ↑ | ↑ | ↑ | 94 | 76 | 0.81 | 240 | ○* |
| A133 | ↑ | 2.5 | 175 | ↑ | ↑ | ↑ | 89 | 85 | 0.95 | 227 | ○* |
| A134 | ↑ | ↑ | 200 | ↑ | ↑ | ↑ | 92 | 86 | 0.94 | 235 | ○* |
| A135 | ↑ | ↑ | 225 | ↑ | ↑ | ↑ | 94 | 83 | 0.88 | 240 | ○* |
| A136 | ↑ | ↑ | 250 | ↑ | ↑ | ↑ | 96 | 79 | 0.82 | 245 | ○* |
| A137 | ↑ | 2.6 | 175 | ↑ | ↑ | ↑ | 91 | 87 | 0.96 | 233 | ○* |
| A138 | ↑ | ↑ | 200 | ↑ | ↑ | ↑ | 93 | 88 | 0.95 | 238 | ○* |
| A139 | ↑ | ↑ | 225 | ↑ | ↑ | ↑ | 95 | 85 | 0.89 | 243 | ○* |
| A140 | ↑ | ↑ | 250 | ↑ | ↑ | ↑ | 98 | 81 | 0.83 | 250 | ○* |
| A141 | ↑ | 2.7 | 175 | ↑ | ↑ | ↑ | 93 | 88 | 0.95 | 238 | ○* |
| A142 | ↑ | ↑ | 200 | ↑ | ↑ | ↑ | 95 | 89 | 0.94 | 243 | ○* |
| A143 | ↑ | ↑ | 225 | ↑ | ↑ | ↑ | 97 | 85 | 0.88 | 248 | ○* |
| A144 | ↑ | ↑ | 250 | ↑ | ↑ | ↑ | 99 | 81 | 0.82 | 253 | ○* |

[Table 6]

| Example | Capacity ratio before and after being left (%) |
|---|---|
| A144 | 95 |

(continued)

| Example | Capacity ratio before and after being left (%) |
|---------|------------------------------------------------|
| A145 | 97 |
| A146 | 98 |

[Table 7]

| Example | NMC/sp-Mn | Positive electrode composite density (g/cm³) | Application quantity of positive electrode composite(g/m²) | Diameter of wound group (mm) | Outer diameter (mm) | Inner diameter (mm) | Discharge capacity (Ah) | | Output characteri stics | Volume energy density (Wh/L) | Safety |
|---------|-----------|---------|---------|---------|---------|---------|-----|-----|-----|-----|-----|
| | | | | | | | @0.5 C | @3.0 C | | @0.5 C | |
| A1 | 10/90 | 2.3 | 150 | 40 | 42 | 41 | 26 | 13 | 0.50 | 143 | ◯ |

[Table 8]

| Example | NMC/sp-Mn | Positive electrode composite density (g/cm³) | Application quantity of positive electrode composite (g/m²) | Diameter of wound group (mm) | Outer diameter (mm) | Inner diameter (mm) | Discharge capacity (Ah) | | Output characteri stics | Volume energy density (Wh/L) | Safety |
|---------|-----------|---------|---------|---------|---------|---------|-----|-----|-----|-----|-----|
| | | | | | | | @0.5 C | @3.0 C | | @0.5 C | |
| A2 | 50/50 | 2.8 | 250 | 65 | 67 | 66 | 102 | 61 | 0.60 | 260 | ✕* |
| A3 | ↑ | 2.7 | 275 | ↑ | ↑ | ↑ | 101 | 56 | 0.55 | 258 | ✕* |
| A4 | 70/30 | ↑ | 250 | ↑ | ↑ | ↑ | 121 | 66 | 0.55 | 309 | ✕* |
| A5 | 80/20 | ↑ | ↑ | ↑ | ↑ | ↑ | 128 | 69 | 0.54 | 327 | ✕* |
| A6 | 90/10 | ↑ | ↑ | ↑ | ↑ | ↑ | 138 | 73 | 0.53 | 352 | ✕* |

Regarding Examples A1 to A144 indicated in Table 1 to Table 5, it was confirmed that battery characteristics were enhanced in comparison with Comparative Examples indicated in Table 7 and Table 8. Also, regarding Examples A145 and A146 indicated in Table 6, it was confirmed that life was longer than in Example A144. Hereinafter, these will be described in detail.

When Example A1 of Table 1 is compared with Comparative Example A1 of Table 7, it turns out that, even if the weight ratio (NMC/sp-Mn) of the active materials is the same at 10/90 in both Examples, the discharge capacity and the volume energy density are increased by increasing the positive electrode composite density and the positive electrode composite application quantity. In addition, it turns out that output characteristics are also improved by increasing the positive electrode composite density from 2.3 g/cm³ to 2.4 g/cm³.

Also, when Example A144 of Table 5 is compared with Comparative Example A2 of Table 8, it turns out that, even if the weight ratio (NMC/sp-Mn) of the active materials is the same at 50/50 and the positive electrode composite application quantity is the same at 250 g/m² in both Examples, safety can be guaranteed by decreasing the positive electrode composite density from 2.8 g/cm³ to 2.7 g/cm³.

Further, when Example A144 of Table 5 is compared with Comparative Example A3 of Table 8, it turns out that, even if the weight ratio (NMC/sp-Mn) of the active materials is the same at 50/50 and the positive electrode composite density is the same at 2.7 g/m³ in both Examples, safety can be guaranteed by decreasing the positive electrode composite application quantity from 275 g/cm² to 250 g/cm².

Furthermore, when Example A144 of Table 5 is compared with Comparative Examples A4 to A6 of Table 8, it turns out that, even if the positive electrode composite density is the same at 2.7 g/cm$^3$ and the positive electrode composite application quantity is the same at 250 g/m$^2$ in these Examples, safety can be guaranteed by setting a percentage of the layered lithium nickel manganese cobalt composite oxide (NMC) in the mixed active material to 50 wt.% or less that is less than 70 wt.%.

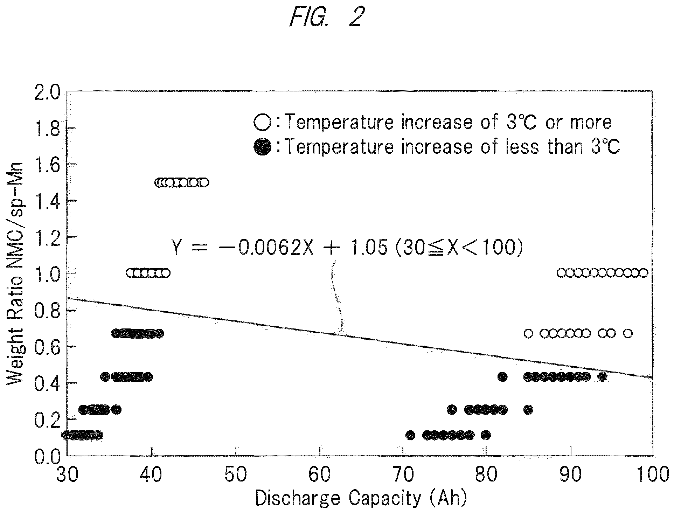

FIG. 2 is a graph showing the relation of the discharge capacity, the weight ratio of the active materials, and the temperature increase of the battery surface in the external short-circuit test. Specifically, regarding Examples A1 to A144, a relation between the discharge capacity X in the horizontal axis and the weight ratio Y (NMC/sp-Mn) of the active materials in the vertical axis is plotted. At this time, plots of the examples in which the temperature increase of the battery surface is less than 3°C are represented by • (black circle), and plots of the examples in which the temperature increase is 3°C or less are represented by o (white circle). A straight line in the figure is the straight line which satisfies the following relational expression 2. From the graph in FIG. 2, it turns out that a safer battery whose temperature increase is less than 3°C can be acquired in an area below the relational expression 2.

$$Y = -0.0062X + 1.05 \ (30 \leq X < 100) \ ... \ (\text{relational expression 2})$$

From the results above, it has been found that, as the lithium ion battery having a discharge capacity of 30 Ah or more, when the positive electrode composite density is set to 2.4 to 2.7 g/cm$^3$, the positive electrode composite application quantity is set to 175 to 250 g/m$^2$, and the weight ratio (NMC/sp-Mn) of the active materials is set to 10/90 to 60/40, the battery having a high battery capacity, which is excellent in output characteristics and volume energy density and can guarantee the safety, can be acquired. Furthermore, it has been found that the safer lithium ion battery can be acquired when the discharge capacity X and the weight ratio Y (NMC/sp-Mn) of the active materials satisfy the following relational expression 1.

$$Y < -0.0062X + 1.05 \ (30 \leq X < 100) \ ... \ (\text{relational expression 1})$$

Furthermore, from Examples A144 to A146 of Table 6, it has been found that the capacity ratio (%) before and after being left for one month can be enhanced by using Al-replaced spinel lithium manganese oxide or Mg-replaced spinel lithium manganese oxide as the spinel lithium manganese oxide (sp-Mn). This capacity ratio can be an index of life.

Accordingly, it has been found that long life of the battery can be achieved by using Mg or A1 as an element M' in spinel lithium manganese oxide represented by the following composition formula (Chem. 2).

$$Li_{(1+\eta)}Mn_{(2-\lambda)}M'_{\lambda}O_4 \ ... \ (\text{Chem.2})$$

Furthermore, in the present embodiment, a preferred percentage of the positive electrode active material to the positive electrode composite is 85 wt.% or more and 95 wt.% or less. When the percentage of the positive electrode active material to the positive electrode composite is low, although it is possible to guarantee the safety of the battery, the volume energy density is lowered. In addition, when the percentage of the positive electrode active material to the positive electrode composite is high, although it is possible to guarantee the safety of the battery, output characteristics are lowered. In contrast, by securing the percentage of the positive electrode active material within the above-mentioned range, capacity can be increased while securing the safety, and input/output characteristics can be enhanced.

Also, when the percentage of the positive electrode active material is set to 85 wt.% or more and 95 wt.% or less, the range of the conducting material and the binding material capable of being mixed into the positive electrode composite is 5 wt.% or more and 15 wt.% or less relative to the positive electrode composite. Also in the case where the conducting material and the binding material are adjusted so as to be within the range mentioned above, each function can be sufficiently exerted. For example, according to the studies by the inventors of the present invention, in the present embodiment, an effect of the conducting material is increased in 3 wt.% or more and is saturated at about 7 wt.%. Therefore, the contained amount of the conducting material in the present embodiment is sufficient if it is in the range of 3 wt.% or more and 7 wt.% or less. Furthermore, the contained amount of the binding material in the present embodiment is sufficient if it is in the range of 3 wt.% or more and 10 wt.% or less. In other words, while securing the specified percentage of the positive electrode active material, the conducting material and the binding material can be adjusted in the effective range.

In this way, also in the case where the percentage of the positive electrode active material to the positive electrode composite is set to 85 wt.% or more and 95 wt.% or less, battery characteristics can be enhanced like the above-mentioned examples. In addition, this has been confirmed by other studies by the inventors of the present invention, which are carried out with the different ratios of the active material, the conducting material, and the binding material relative to the positive electrode composite.

As mentioned above, in Example A, evaluated was discharging characteristics and safety of the battery in which the positive electrode composite density, the positive electrode composite application quantity, and the weight ratio (NMC/sp-Mn) between the layered lithium nickel manganese cobalt composite oxide (NMC) and the spinel type lithium manganese oxide (sp-Mn) were varied. As a result, as the lithium ion battery having a discharged capacity 30 Ah or more, the positive electrode composite density is 2.4 to 2.7 g/cm$^3$, and the positive electrode composite application quantity is 175 to 250 g/m$^2$, and the weight ratio (NMC/sp-Mn) of the active material is 10/90 to 60/40, and thus, it has become clear that the battery in which the battery capacity is high, and which is excellent in output characteristics and volume energy density, and is capable of guaranteeing safety can be acquired.

As a result of a further study by the inventors of the present invention also on the electrolytic solution of the lithium ion battery described in Example A, it has become clear that it is possible to obtain a lithium ion battery which is excellent in high rate characteristics, capable of suppressing deterioration of a discharged capacity after being left as it is, and has a long life and the high safety. Hereinafter, this experimental result will be described based on Example B.

[Example B]

In the present example B, an electrolytic solution was used in which a lithium salt is dissolved at a prescribed concentration in a solution in which ethylene carbonate (EC), dimethyl carbonate (DMC) and ethyl methyl carbonate (EMC) are mixed by a prescribed volume ratio, and furthermore, a specified quantity of additive agent was mixed in this solution.

<Standard evaluation>

[Evaluation of battery characteristics (0.5C discharging characteristics, high rate characteristics (ratio of 4.0C discharged capacity and 0.5C discharged capacity), a capacity ratio before and after being left as it was)]

Battery characteristics of a lithium ion battery manufactured in this way were evaluated by a method described below.

Regarding the manufactured lithium ion battery, battery characteristics were evaluated varying an electrolytic solution composition, a positive electrode composite density, a positive electrode composite application quantity, and a weight ratio (NMC/sp-Mn) of active materials.

A current at the time of charging/discharging evaluation was determined in accordance with the following. First, the manufactured battery was charged up to 4.2 V at a current of 10 A in an environment of 25°C, and thereafter, the battery was further charged until a current reached 0.5 A at constant voltage 4.2 V, and after a suspension of operation for 30 minutes, was discharged down to 2.7 V at a current of 10 A. This operation was repeated 3 times, and a capacity in the third time was taken as a rating capacity. A current which may let the rating capacity be discharged in one hour was taken as 1C (for example, when the rating capacity is 30 Ah, 1C denotes 30 A, and 0.5C denotes 15 A, and 4.0C denotes 120 A). The battery capacity evaluation was performed with two conditions of 0.5C and 4.0C. In the case of 0.5C discharged capacity, charging was carried out up to 4.2 V at a current of 10 A in an environment of 25°C, and after that, furthermore, charging was carried out until a current reached 0.5 A at constant voltage 4.2 V, and furthermore, after a suspension of operation for 30 minutes, discharging was carried out down to 2.7 V at 0.5C, and the discharged capacity at that time was taken as the discharged capacity at the time of 0.5 C (0.5C discharged capacity). In the same way, in case of 4.0C discharged capacity, charging was carried out up to 4.2 V at a current of 10 A in an environment of 25°C, and after that, furthermore, charging was carried out until a current reached 0.5 A at constant voltage 4.2 V, and furthermore, after a suspension of operation for 30 minutes, discharging was carried out down to 2.7 V at 4.0C, and the discharged capacity at that time was the discharged capacity at the time of 4.0C (4.0C discharged capacity). Here, high rate characteristics mean that a ratio between the 4.0C discharged capacity and the 0.5C discharged capacity. This high rate characteristic is an index which indicates output characteristics where charging/discharging can be carried out at a large current, and it can be said that the more a value of the high rate characteristic approaches to 1, the more excellent the lithium ion battery is in the input-output characteristics in a large current.

As for the capacity ratio before and after being left as it was, the manufactured battery was placed in an environment of 25°C, and was charged up to 4.2 V at a current of 10 A, and was further charged until a current reached 0.5 A at constant voltage 4.2 V, and was left as it was for two weeks in an environment of 50°C, and the capacity before and after being left as it was was measured by the above-mentioned rating capacity evaluation method, and a ratio thereof (capacity after being left as it was/capacity before being left as it was) was calculated. It will be indicated that the more this ratio (capacity after being left as it is/capacity before being left as it is) approaches to 1, the longer the life of the lithium ion battery is.

[Flammability Evaluation of Electrolytic Solution at 20°C]

As for the flammability evaluation, an automatic tag closed cup flash point tester was used with reference to JIS K2265.

(Examples B 1 to B32)

A positive electrode composite was manufactured such that a weight ratio (NMC/sp-Mn) of active materials is = 10/90, a positive electrode composite density was 2.4 g/cm$^3$, and a positive electrode composite application quantity was 175 g/m$^2$, and the diameter of the winding group of the battery was 40 mm, the outer diameter was 42 mm, and the inner diameter was 41 mm. Furthermore, as indicated in Table 9A and Table 9B, the battery was manufactured such that a solvent composition (volume ratio of ethylene carbonate (EC), dimethyl carbonate (DMC) and ethyl methyl carbonate (EMC)), lithium salt compounds and concentrations thereof, additional lithium salt compounds and concentrations thereof, and additives and concentrations thereof were varied. Furthermore, test results based on the above-mentioned standard evaluations, i.e., a discharged capacity at 0.5C, high rate characteristics, a capacity ratio before and after being left as it was, and a flammability evaluation at 20°C were indicated in Table 9A and Table 9B. Incidentally, an arrow (↑) indicating an upward direction indicates that it is the same numerical value as that of an upper column. In addition, in the Tables, substance names are indicated with abbreviated names. Specifically, LiTFSI denotes LiN(CF$_3$SO$_2$)$_2$, and LiFSI denotes LiN(FSO$_2$)$_2$. Furthermore, VC denotes vinylene carbonate, and PRS denotes 1,3-propene sultone. In addition, FEC denotes fluoroethylene carbonate, and DPS denotes diphenyl sulfide. These notations are the same as those in the other tables.

(Examples B33 to B35)

A positive electrode composite was manufactured such that a weight ratio (NMC/sp-Mn) of active materials is = 10/90, a positive electrode composite density was 2.4 g/cm$^3$, and a positive electrode composite application quantity was varied from 200 to 250 g/m$^2$, and regarding the battery, the diameter of the winding group was 40 mm, the outer diameter was 42 mm, and the inner diameter was 41 mm. Furthermore, as indicated in Table 10, the battery was manufactured such that a solvent composition (volume ratios of EC, DMC and EMC), lithium salt compounds and the concentration thereof, additional lithium salt compounds and the concentration thereof and additives and the concentration thereof were varied. Furthermore, test results based on the above-mentioned standard evaluation are described in Table 10.

(Examples B36 to B38)

A positive electrode composite was manufactured such that a weight ratio (NMC/sp-Mn) of active materials is = 10/90, and as indicated in Table 10, a positive electrode composite density was varied from 2.5 to 2.7 g/cm$^3$, and a positive electrode composite application quantity was 250 g/m$^2$, and regarding the battery, the diameter of the winding group was 40 mm, and the outer diameter was 42 mm, and the inner diameter was 41 mm. Furthermore, as indicated in Table 10, the battery was manufactured such that a solvent composition (volume ratios of EC, DMC and EMC), lithium salt compounds and the concentration thereof, additional lithium salt compounds and the concentration thereof and additives and the concentration thereof were varied. Furthermore, test results based on the above-mentioned standard evaluation are described in Table 10.

(Examples B39 to B43)

As indicated in Table 10, a positive electrode composite was manufactured such that a weight ratio (NMC/sp-Mn) of active materials was varied from 20/80 to 60/40, and a positive electrode composite density was 2.7 g/cm$^3$, and a positive electrode composite application quantity was 250 g/m$^2$, and regarding the battery, the diameter of the winding group was 40 mm, the outer diameter was 42 mm, and the inner diameter was 41 mm. Furthermore, as indicated in Table 10, the battery was manufactured such that a solvent composition (volume ratio of EC, DMC and EMC), lithium salt compounds and the concentration thereof, additional lithium salt compounds and the concentration thereof and additives and the concentration thereof were varied. Furthermore, test results based on the above-mentioned standard evaluation are described in Table 10.

(Examples B44 to B75)

A positive electrode composite was manufactured such that a weight ratio (NMC/sp-Mn) of active materials is = 10/90, a positive electrode composite density was varied to 2.4 g/cm$^3$, and a positive electrode composite application quantity was 175 g/m$^2$, and regarding the battery, the diameter of the winding group was 65 mm, the outer diameter was 67 mm, and the inner diameter was 66 mm. Furthermore, as indicated in Table 11A and Table 11B, a battery was manufactured such that a solvent composition (volume ratio of EC, DMC and EMC), lithium salt compounds and the concentration thereof, additional lithium salt compounds and the concentration thereof and additives and the concentration thereof were varied. Furthermore, test results based on the above-mentioned standard evaluations, i.e., a discharged capacity at 0.5C, high rate characteristics, a capacity ratio before and after being left as it was, a safety test (peg test and an external short-circuiting test), and a flammability evaluation at 20°C are described in Table 11A and 11B.

(Examples B76 to B78)

A positive electrode composite was manufactured such that a weight ratio (NMC/sp-Mn) of active materials is = 10/90, a positive electrode composite density was 2.4 g/cm$^3$, and as indicated in Table 12, a positive electrode composite application quantity was varied from 200 to 250 g/m$^2$, and regarding the battery, the diameter of the winding group was 65 mm, and the outer diameter was 67 mm, and the inner diameter was 66 mm. Furthermore, as indicated in Table 12, manufactured was a battery where a solvent composition (volume ratio of EC, DMC and EMC), lithium salt compounds and the concentration thereof, additional lithium salt compounds and the concentration thereof and additives and the concentration thereof were varied. Furthermore, test results based on the above-mentioned standard evaluation were described in Table 12.

(Examples B79 to B81)

A positive electrode composite was manufactured such that a weight ratio (NMC/sp-Mn) of active materials is =10/90, and as indicated in Table 12, a positive electrode composite density was varied from 2.5 to 2.7 g/cm$^3$, and a positive electrode composite application quantity was 250 g/m$^2$, and regarding the battery, the diameter of the winding group was 65 mm, and the outer diameter was 67 mm, and the inner diameter was 66 mm. Furthermore, as indicated in Table 12, a battery was manufactured such that a solvent composition (volume ratio of EC, DMC and EMC), lithium salt compounds and the concentration thereof, additional lithium salt compounds and the concentration thereof and additives and the concentration thereof were varied. Furthermore, test results based on the above-mentioned standard evaluation are described in Table 12.

(Examples B82 to B86)

A positive electrode composite was manufactured such that a weight ratio (NMC/sp-Mn) of active materials was varied from 20/80 to 60/40 as indicated in Table 12, and a positive electrode composite density was 2.7 g/cm$^3$, and a positive electrode composite application quantity was 250 g/m$^2$, and regarding the battery, the diameter of the winding group was 65 mm, and the outer diameter was 67 mm, and the inner diameter was 66 mm. Furthermore, as indicated in Table 12, manufactured was a battery where a solvent composition (volume ratio of EC, DMC, EMC), lithium salt compounds and the concentration thereof, additional lithium salt compounds and the concentration thereof and additives and the concentration thereof were varied. Furthermore, test results based on the above-mentioned standard evaluation were described in Table 12.

(Comparative Examples B1 to B9)

As indicated in Table 13, manufactured was the same battery as that of Example B9 except for an electrolytic solution, where a weight ratio (NMC/sp-Mn) of active materials =10/90, a positive electrode composite density 2.4 g/cm$^3$ and a positive electrode composite application quantity 175 g/m$^2$, and regarding the battery, the diameter of the winding group was 40 mm, and the outer diameter was 42 mm, and the inner diameter was 41 mm. As for an electrolytic solution, as indicated in Table 13, a solvent composition (volume ratio of EC, DMC and EMC), lithium salt compounds and the concentration thereof, additional lithium salt compounds and the concentration thereof and additives and the concentration thereof were varied. Furthermore, test results based on the above-mentioned standard evaluations, i.e., a discharged capacity at 0.5C, high rate characteristics, a capacity ratio before and after being left as it was, a safety test (peg test and an external short-circuiting test), and a flammability evaluation at 20°C are indicated in Table 13.

[Table 9A]

[Table 9B]

| Example | NMC/sp-Mn | Positive electrode composite density (g/m³) | Positive electrode composite application, quantity (g/m²) | Solvent composition | | | $\eta$ (DMC/EMC) | Lithium salt compound | Lithium salt concentration (mol/L) | Additional lithium salt compound | Add't'onal lithium salt compound concentration (mol/L) | Additive compounds | Additive concentration. (wt.%) | 0.5C discharged capacity (Ah) | High-rate characteristics (4C capacity/0.5C capacity) | Capacity ratio before and after being left uncharged | Flammability at 20°C |
|---|---|---|---|---|---|---|---|---|---|---|---|---|---|---|---|---|---|
| | | | | EC (vol%) | DMC (vol%) | EMC (vol%) | | | | | | | | | | | |
| B1 | 10/90 | 2.4 | 175 | 20 | 41 | 39 | 1.1 | LiPF6 | 1.0 | - | - | VC | 0.8 | 33 | 0.80 | 0.95 | No |
| B2 | ↑ | ↑ | ↑ | 20 | 45 | 35 | 1.3 | ↑ | ↑ | - | - | ↑ | ↑ | 34 | 0.82 | 0.96 | ↑ |
| B3 | ↑ | ↑ | ↑ | 20 | 50 | 30 | 1.7 | ↑ | ↑ | - | - | ↑ | ↑ | 35 | 0.85 | 0.98 | ↑ |
| B4 | ↑ | ↑ | ↑ | 25 | 38 | 37 | 10 | ↑ | ↑ | - | - | ↑ | ↑ | 31 | 0.75 | 0.87 | ↑ |
| B5 | ↑ | ↑ | ↑ | 25 | 43 | 32 | 1 3 | ↑ | ↑ | - | - | ↑ | ↑ | 33 | 0.79 | 0.88 | ↑ |
| B6 | ↑ | ↑ | ↑ | 25 | 47 | 28 | 1.7 | ↑ | ↑ | - | - | ↑ | ↑ | 34 | 0.83 | 0.9 | ↑ |
| B7 | ↑ | ↑ | ↑ | 30 | 36 | 34 | 1.1 | ↑ | ↑ | - | - | ↑ | ↑ | 30 | 072 | 0.86 | ↑ |
| B8 | ↑ | ↑ | ↑ | 30 | 40 | 30 | 13 | ↑ | ↑ | - | - | ↑ | ↑ | 31 | 0.74 | 0.87 | ↑ |
| B9 | ↑ | ↑ | ↑ | 30 | 44 | 26 | 1.7 | ↑ | ↑ | - | - | ↑ | ↑ | 31 | 0.75 | 0.88 | ↑ |
| B10 | ↑ | ↑ | ↑ | ↑ | ↑ | ↑ | ↑ | ↑ | 1.1 | - | - | ↑ | ↑ | 32 | 0.77 | 0.87 | ↑ |
| B11 | ↑ | ↑ | ↑ | ↑ | ↑ | ↑ | ↑ | ↑ | 1.2 | - | - | ↑ | ↑ | 32 | 0.78 | 0.86 | ↑ |
| B12 | ↑ | ↑ | ↑ | ↑ | ↑ | ↑ | ↑ | ↑ | 1.3 | - | - | ↑ | ↑ | 31 | 0.76 | 0.86 | ↑ |
| B13 | ↑ | ↑ | ↑ | ↑ | ↑ | ↑ | ↑ | ↑ | 1.4 | - | - | ↑ | ↑ | 31 | 0.74 | 0.84 | ↑ |
| B14 | ↑ | ↑ | ↑ | ↑ | ↑ | ↑ | ↑ | ↑ | 1.5 | - | - | ↑ | ↑ | 30 | 0.72 | 0.83 | ↑ |
| B15 | ↑ | ↑ | ↑ | ↑ | ↑ | ↑ | ↑ | ↑ | 1.0 | LiBF4 | 0.2 | ↑ | ↑ | 30 | 0.72 | 0.88 | ↑ |
| B16 | ↑ | ↑ | ↑ | ↑ | ↑ | ↑ | ↑ | ↑ | ↑ | LiTFSI | 0.2 | ↑ | ↑ | 31 | 0.75 | 0.89 | ↑ |

[Table 10]

| Example | NMC/sp-Mn | Positive electrode composite density (g/m³) | Positive electrode composite application quantity, (g/m²) | Solvent composition | | | 77 (DMC/EMC) | Lithium salt compound | Lithium salt concentrations (mol/L) | Additional lithium salt compound | Additional lithium salt compound concentration (mol/L) | Additive compounds | Additive concentration (wt.%) | 0.5C discharged capacity (Ah) | High-rate characteristics (4C capacity/0,5C capacity) | Capacity ratio before and after being left uncharged | Flammability at 20°C |
|---|---|---|---|---|---|---|---|---|---|---|---|---|---|---|---|---|---|
| | | | | EC (vol%) | DMC (vol%) | EMC (vol%) | | | | | | | | | | | |
| B17 | 10/90 | 2.4 | 175 | 30 | 44 | 26 | 1.7 | LiPF6 | 1.0 | LiFSI | 0.2 | VC | 0.8 | 32 | 0.78 | 0.91 | No |
| B18 | ↑ | ↑ | ↑ | ↑ | ↑ | ↑ | ↑ | ↑ | ↑ | ↑ | ↑ | ↑ | 0.1 | 33 | 0.81 | 0.85 | ↑ |
| B19 | ↑ | ↑ | ↑ | ↑ | ↑ | ↑ | ↑ | ↑ | ↑ | ↑ | ↑ | ↑ | 0.3 | 33 | 0.80 | 0.86 | ↑ |
| B20 | ↑ | ↑ | ↑ | ↑ | ↑ | ↑ | ↑ | ↑ | ↑ | ↑ | ↑ | ↑ | 0.5 | 33 | 0.79 | 0.88 | ↑ |
| B21 | ↑ | ↑ | ↑ | ↑ | ↑ | ↑ | ↑ | ↑ | ↑ | ↑ | ↑ | ↑ | 1.0 | 31 | 0.76 | 0.93 | ↑ |
| B22 | ↑ | ↑ | ↑ | ↑ | ↑ | ↑ | ↑ | ↑ | ↑ | ↑ | ↑ | DPS | 0.8 | 30 | 0.72 | 0.86 | ↑ |
| B23 | ↑ | ↑ | ↑ | ↑ | ↑ | ↑ | ↑ | ↑ | ↑ | ↑ | ↑ | LiBOB | ↑ | 29 | 0.71 | 0.88 | ↑ |
| B24 | ↑ | ↑ | ↑ | ↑ | ↑ | ↑ | ↑ | ↑ | ↑ | ↑ | ↑ | FEC | ↑ | 31 | 0.74 | 0.88 | ↑ |
| B25 | ↑ | ↑ | ↑ | ↑ | ↑ | ↑ | ↑ | ↑ | ↑ | ↑ | ↑ | PRS | ↑ | 31 | 0.76 | 0.89 | ↑ |
| B26 | ↑ | ↑ | ↑ | ↑ | ↑ | ↑ | ↑ | ↑ | ↑ | ↑ | ↑ | VC+DPS | 0.4+0.4 | 31 | 0.74 | 0.87 | ↑ |
| B27 | ↑ | ↑ | ↑ | ↑ | ↑ | ↑ | ↑ | ↑ | ↑ | ↑ | ↑ | VC+Li-BOB | ↑ | 30 | 0.72 | 0.91 | ↑ |
| B28 | ↑ | ↑ | ↑ | ↑ | ↑ | ↑ | ↑ | ↑ | ↑ | ↑ | ↑ | VC+FEC | ↑ | 31 | 0.76 | 0.89 | ↑ |
| B29 | ↑ | ↑ | ↑ | ↑ | ↑ | ↑ | ↑ | ↑ | ↑ | ↑ | ↑ | VC+PRS | ↑ | 32 | 0.78 | 0.9 | ↑ |
| B30 | ↑ | ↑ | ↑ | ↑ | ↑ | ↑ | ↑ | ↑ | ↑ | ↑ | ↑ | FEC+DPS | ↑ | 33 | 0.8 | 0.94 | ↑ |
| B31 | ↑ | ↑ | ↑ | ↑ | ↑ | ↑ | ↑ | ↑ | ↑ | ↑ | ↑ | FEC+Li-BOB | ↑ | 33 | 0.79 | 0.97 | ↑ |
| B32 | ↑ | ↑ | ↑ | ↑ | ↑ | ↑ | ↑ | ↑ | ↑ | ↑ | ↑ | FEC+PRS | ↑ | 33 | 0.81 | 0.97 | ↑ |

EP 2 822 079 B1

| Exam-ple | NMC/sp-Mn | Positive electrode composite density (g/m³) | Positive electrode composite application quantity (g/m²) | Solvent composition | | | η (DMC/EMC) | Lithium salt compound | I Lithium salt concentration (mol/L) | Additional lithium salt compound | Additional lithium salt compound concentration (mol/L) | Additive compounds | Additive concentration (wt.%) | 0.5C discharged capacity (Ah) | High-rate characteristics (4C capacity/0.5C capacity) | Capacity ratio before and after being left uncharged | Flammability at 20°C |
|---|---|---|---|---|---|---|---|---|---|---|---|---|---|---|---|---|---|
| | | | | EC (vol%) | DMC (vol%) | EMC (vol%) | | | | | | | | | | | |
| B33 | 10/90 | 2.4 | 200 | 30 | 44 | 26 | 1.7 | LiPF6 | 1.0 | LiFSI | 0.2 | VC | 0.8 | 33 | 0.77 | 0.91 | No |
| B34 | ↑ | ↑ | 225 | ↑ | ↑ | ↑ | ↑ | ↑ | ↑ | ↑ | ↑ | ↑ | ↑ | 34 | 0.76 | 0.91 | ↑ |
| B35 | ↑ | ↑ | 250 | ↑ | ↑ | ↑ | ↑ | ↑ | ↑ | ↑ | ↑ | ↑ | ↑ | 34 | 0.76 | 0.91 | ↑ |
| B36 | ↑ | 2.5 | ↑ | ↑ | ↑ | ↑ | ↑ | ↑ | ↑ | ↑ | ↑ | ↑ | ↑ | 35 | 0.77 | 0.91 | ↑ |
| B37 | ↑ | 2.6 | ↑ | ↑ | ↑ | ↑ | ↑ | ↑ | ↑ | ↑ | ↑ | ↑ | ↑ | 36 | 0.77 | 0.91 | ↑ |
| B38 | ↑ | 2.7 | ↑ | ↑ | ↑ | ↑ | ↑ | ↑ | ↑ | ↑ | ↑ | ↑ | ↑ | 36 | 0.78 | 0.91 | ↑ |
| B39 | 20/80 | ↑ | ↑ | ↑ | ↑ | ↑ | ↑ | ↑ | ↑ | ↑ | ↑ | ↑ | ↑ | 38 | 0.76 | 0.91 | ↑ |
| B40 | 30/70 | ↑ | ↑ | ↑ | ↑ | ↑ | ↑ | ↑ | ↑ | ↑ | ↑ | ↑ | ↑ | 40 | 0.74 | 0.92 | ↑ |
| B41 | 40/60 | ↑ | ↑ | ↑ | ↑ | ↑ | ↑ | ↑ | ↑ | ↑ | ↑ | ↑ | ↑ | 41 | 0.73 | 0.93 | ↑ |
| B42 | 50/50 | ↑ | ↑ | ↑ | ↑ | ↑ | ↑ | ↑ | ↑ | ↑ | ↑ | ↑ | ↑ | 42 | 0.71 | 0.94 | ↑ |
| B43 | 60/40 | ↑ | ↑ | ↑ | ↑ | ↑ | ↑ | ↑ | ↑ | ↑ | ↑ | ↑ | ↑ | 46 | 0.69 | 0.96 | ↑ |

[Table 11B]

| Example | NMC/sp-Mn | Positive electrode composite density (g/m$^3$) | Positive electrode composite application quantity (g/m$^2$) | Solvent composition | | | $\eta$ (DMC/EMC) | Lithium salt compound | Lithium salt concentration (mol/L) | Additional lithium salt compound | Additional lithium salt compound concentrations. (mol/L) | Additive comoounds | Additive concentration (wt.%) | 0.5C discharged capacity (Ah) | High-rate characteristics (4C capacity/0.5C capacity) | Capacity ratio before and after being left uncharged | Flammability at 20°C |
|---|---|---|---|---|---|---|---|---|---|---|---|---|---|---|---|---|---|
| | | | | EC (vol%) | DMC (vol%) | EMC (vol%) | | | | | | | | | | | |
| B44 | 10/90 | 2.4 | 175 | 20 | 41 | 39 | 1.1 | LiPF6 | 1.0 | - | - | VC | 0.8 | 71 | 0.81 | 0.94 | No |
| B45 | ↑ | ↑ | ↑ | 20 | 45 | 35 | 1 3 | ↑ | ↑ | - | - | ↑ | ↑ | 73 | 0.83 | 0.97 | ↑ |
| B46 | ↑ | ↑ | ↑ | 20 | 50 | 30 | 1.7 | ↑ | ↑ | - | - | ↑ | ↑ | 75 | 0.86 | 0.98 | ↑ |
| B47 | ↑ | ↑ | ↑ | 25 | 38 | 37 | 1.0 | ↑ | ↑ | - | - | ↑ | ↑ | 67 | 0.77 | 0.87 | ↑ |
| B48 | ↑ | ↑ | ↑ | 25 | 43 | 32 | 1.3 | ↑ | ↑ | - | - | ↑ | ↑ | 70 | 0.81 | 0.89 | ↑ |
| B49 | ↑ | ↑ | ↑ | 25 | 47 | 28 | 1.7 | ↑ | ↑ | - | - | ↑ | ↑ | 74 | 0.84 | 0.9 | ↑ |
| B50 | ↑ | ↑ | ↑ | 30 | 36 | 34 | 1.1 | ↑ | ↑ | - | - | ↑ | ↑ | 64 | 0.73 | 0.87 | ↑ |
| B51 | ↑ | ↑ | ↑ | 30 | 40 | 30 | 1.3 | ↑ | ↑ | - | - | ↑ | ↑ | 66 | 0.75 | 0.87 | ↑ |
| B52 | ↑ | ↑ | ↑ | 30 | 44 | 26 | 1.7 | ↑ | ↑ | - | - | ↑ | ↑ | 67 | 0.77 | 0.89 | ↑ |
| B53 | ↑ | ↑ | ↑ | ↑ | ↑ | ↑ | ↑ | ↑ | 1.1 | - | - | ↑ | ↑ | 68 | 0.78 | 0.87 | ↑ |
| B54 | ↑ | ↑ | ↑ | ↑ | ↑ | ↑ | ↑ | ↑ | 1.2 | - | - | ↑ | ↑ | 69 | 08 | 0.86 | ↑ |
| B55 | ↑ | ↑ | ↑ | ↑ | ↑ | ↑ | ↑ | ↑ | 1.3 | - | - | ↑ | ↑ | 67 | 0.77 | 0.86 | ↑ |
| B56 | ↑ | ↑ | ↑ | ↑ | ↑ | ↑ | ↑ | ↑ | 1.4 | - | - | ↑ | ↑ | 66 | 0.76 | 0.85 | ↑ |
| B57 | ↑ | ↑ | ↑ | ↑ | ↑ | ↑ | ↑ | ↑ | 1.5 | - | - | ↑ | ↑ | 64 | 0.74 | 0.84 | ↑ |
| B58 | ↑ | ↑ | ↑ | ↑ | ↑ | ↑ | ↑ | ↑ | 1.0 | LiBF4 | 0.2 | ↑ | ↑ | 64 | 0.74 | 0.89 | ↑ |
| B59 | ↑ | ↑ | ↑ | ↑ | ↑ | ↑ | ↑ | ↑ | ↑ | LiTFSI | 0.2 | ↑ | ↑ | 67 | 0.76 | 0.89 | ↑ |

## [Table 12]

| Example | NMC/sp-Mn | Positive electrode composite density (g/m³) | Positive electrode composite application quantity (g/m²) | Solvent composition | | | η (DMC/EMC) | Lithium salt compound | Lithium salt concentration (mol/L) | Additional lithium salt compound | Additional lithium salt compound concentrations (mol/L) | Additive compounds | Additive concentration (wt.%) | 0.5C discharged capacity (Ah) | High-rate characteristics (4C capacity/0.5C capacity) | Capacity ratio before and after being left uncharged | Flammability at 20° C |
|---|---|---|---|---|---|---|---|---|---|---|---|---|---|---|---|---|---|
| | | | | EC | DMC (vol%) | EMC (vol%) | | | | | | | | | | | |
| B60 | 10/90 | 2.4 | 175 | 30 | 44 | 26 | 1.7 | LiPF6 | 1.0 | LiFSI | 0.2 | VC | 0,8 | 69 | 0.8 | 0.92 | No |
| B61 | ↑ | ↑ | ↑ | ↑ | ↑ | ↑ | ↑ | ↑ | ↑ | ↑ | ↑ | ↑ | 0.1 | 72 | 0.83 | 0.84 | ↑ |
| B62 | ↑ | ↑ | ↑ | ↑ | ↑ | ↑ | ↑ | ↑ | ↑ | ↑ | ↑ | ↑ | 0.3 | 71 | 0.81 | 0.85 | ↑ |
| B63 | ↑ | ↑ | ↑ | ↑ | ↑ | ↑ | ↑ | ↑ | ↑ | ↑ | ↑ | ↑ | 0.5 | 70 | 0.81 | 0.87 | ↑ |
| B64 | ↑ | ↑ | ↑ | ↑ | ↑ | ↑ | ↑ | ↑ | ↑ | ↑ | ↑ | ↑ | 1.0 | 67 | 0.77 | 0.92 | ↑ |
| B65 | ↑ | ↑ | ↑ | ↑ | ↑ | ↑ | ↑ | ↑ | ↑ | ↑ | ↑ | DPS | 0.8 | 64 | 0.73 | 0.87 | ↑ |
| B66 | ↑ | ↑ | ↑ | ↑ | ↑ | ↑ | ↑ | ↑ | ↑ | ↑ | ↑ | LiBOB | ↑ | 63 | 0.72 | 0.89 | ↑ |
| B67 | ↑ | ↑ | ↑ | ↑ | ↑ | ↑ | ↑ | ↑ | ↑ | ↑ | ↑ | FEC | ↑ | 66 | 0.75 | 0.89 | ↑ |
| B68 | ↑ | ↑ | ↑ | ↑ | ↑ | ↑ | ↑ | ↑ | ↑ | ↑ | ↑ | PRS | ↑ | 67 | 0.77 | 0.89 | ↑ |
| B69 | ↑ | ↑ | ↑ | ↑ | ↑ | ↑ | ↑ | ↑ | ↑ | ↑ | ↑ | VC+DPS | 0.4+0.4 | 66 | 0.76 | 0.88 | ↑ |
| B70 | ↑ | ↑ | ↑ | ↑ | ↑ | ↑ | ↑ | ↑ | ↑ | ↑ | ↑ | VC+LiBOB | ↑ | 64 | 0.74 | 0.92 | ↑ |
| B71 | ↑ | ↑ | ↑ | ↑ | ↑ | ↑ | ↑ | ↑ | ↑ | ↑ | ↑ | VC+FEC | ↑ | 67 | 0.77 | 0.89 | ↑ |
| B72 | ↑ | ↑ | ↑ | ↑ | ↑ | ↑ | ↑ | ↑ | ↑ | ↑ | ↑ | VC+PRS | ↑ | 69 | 0.79 | 0.91 | ↑ |
| B73 | ↑ | ↑ | ↑ | ↑ | ↑ | ↑ | ↑ | ↑ | ↑ | ↑ | ↑ | FEC+DPS | ↑ | 71 | 0.81 | 0.93 | ↑ |
| B74 | ↑ | ↑ | ↑ | ↑ | ↑ | ↑ | ↑ | ↑ | ↑ | ↑ | ↑ | FEC+Li-BOB | ↑ | 70 | 0.8 | 0.98 | ↑ |
| B75 | ↑ | ↑ | ↑ | ↑ | ↑ | ↑ | ↑ | ↑ | ↑ | ↑ | ↑ | FEC+PRS' | ↑ | 72 | 0.82 | 0.97 | ↑ |

[Table 13]

| Example | NMC/sp-Mn | Positive electrode composite density (g/m³) | Positive electrode composite application quantity (g/m²) | Solvent composition | | | $\eta$ (DMC/EMC) | Lithium salt compound | Lithium salt concentration (mol/L) | Additional lithium salt compound | Additional lithium salt compound concentration (mol/L) | Additive compounds | Additive concentration (wt%) | 0.5C discharged capacity (Ah) | High-rate characteristics (4C capacity/0.5C capacity) | Capacity ratio before and after being left uncharged | Flammability at 20°C |
| | | | | EC (vol%) | DMC (Vol%) | EMC (vol%) | | | | | | | | | | | |
|---|---|---|---|---|---|---|---|---|---|---|---|---|---|---|---|---|---|
| B76 | 10/90 | 2.4 | 200 | 30 | 44 | 26 | 1.7 | LiPF6 | 1.0 | LiFSI | 0.2 | VC | 0.8 | 71 | 0.78 | 0.92 | No |
| B77 | ↑ | ↑ | 225 | ↑ | ↑ | ↑ | ↑ | ↑ | ↑ | ↑ | ↑ | ↑ | ↑ | 73 | 077 | 0.91 | ↑ |
| B78 | ↑ | ↑ | 250 | ↑ | ↑ | ↑ | ↑ | ↑ | ↑ | ↑ | ↑ | ↑ | ↑ | 73 | 0.78 | 0.92 | ↑ |
| B79 | ↑ | 25 | ↑ | ↑ | ↑ | ↑ | ↑ | ↑ | ↑ | ↑ | ↑ | ↑ | ↑ | 75 | 0.79 | 0.91 | ↑ |
| B80 | ↑ | 2.6 | ↑ | ↑ | ↑ | ↑ | ↑ | ↑ | ↑ | ↑ | ↑ | ↑ | ↑ | 77 | 0.78 | 0.92 | ↑ |
| B81 | ↑ | 2.7 | ↑ | ↑ | ↑ | ↑ | ↑ | ↑ | ↑ | ↑ | ↑ | ↑ | ↑ | 77 | 0.79 | 0.91 | ↑ |
| B82 | 20/80 | ↑ | ↑ | ↑ | ↑ | ↑ | ↑ | ↑ | ↑ | ↑ | ↑ | ↑ | ↑ | 82 | 0.78 | 0.91 | ↑ |
| B83 | 30/70 | ↑ | ↑ | ↑ | ↑ | ↑ | ↑ | ↑ | ↑ | ↑ | ↑ | ↑ | ↑ | 86 | 0.75 | 0.94 | ↑ |
| B84 | 40/60 | ↑ | ↑ | ↑ | ↑ | ↑ | ↑ | ↑ | ↑ | ↑ | ↑ | ↑ | ↑ | 88 | 0.74 | 0.94 | ↑ |
| B85 | 50/50 | ↑ | ↑ | ↑ | ↑ | ↑ | ↑ | ↑ | ↑ | ↑ | ↑ | ↑ | ↑ | 90 | 0.73 | 0.95 | ↑ |
| B86 | 60/40 | ↑ | ↑ | ↑ | ↑ | ↑ | ↑ | ↑ | ↑ | ↑ | ↑ | ↑ | ↑ | 99 | 0.71 | 0.96 | ↑ |

| Example | NMC/sp-Mn | Positive electrode composite density (g/m$^3$) | Positive electrode composite application quantity (g/m$^2$) | Solvent composition | | | $\eta$ (DMC /EMC) | Lithium salt compound | Lithium salt concentration (mol/L) | Additional lithium salt compound | Additional lithium salt compound concentration (mol/L) | Additive compounds | Additive concentration (wt%) | 0.5C discharged capacity (Ah) | High-rate characteristics (4C capacity/0.5C capacity) | Capacity ratio before and after being left uncharged | Flammability at 20° C |
| | | | | EC (vol%) | DMC (vol%) | EMC (vol%) | | | | | | | | | | | |
|---|---|---|---|---|---|---|---|---|---|---|---|---|---|---|---|---|---|
| B1 | 10/90 | 2.4 | 175 | 10 | 46 | 44 | 1.0 | LiPF6 | 1.0 | - | - | VC | 0.8 | 31 | 0.65 | 0.88 | No |
| B2 | ↑ | T | ↑ | 40 | 36 | 24 | 1.5 | ↑ | ↑ | | - | ↑ | ↑ | 31 | 0.62 | 0.86 | No |
| B3 | ↑ | ↑ | ↑ | 30 | 35 | 35 | 1.0 | ↑ | ↑ | - | - | ↑ | ↑ | 31 | 0.62 | 0.87 | No |
| B4 | ↑ | ↑ | ↑ | 30 | 60 | 10 | 6.0 | ↑ | ↑ | - | - | ↑ | ↑ | 31 | 0.76 | 0.85 | Yes |
| B5 | ↑ | ↑ | ↑ | 30 | 20 | 50 | 0.4 | ↑ | ↑ | - | - | ↑ | ↑ | 31 | 0.62 | 0.87 | No |
| B6 | ↑ | ↑ | ↑ | 30 | 44 | 26 | 1.7 | ↑ | ↑ | - | - | - | - | 31 | 0.75 | 0.61 | No |
| B7 | ↑ | ↑ | ↑ | ↑ | ↑ | ↑ | ↑ | ↑ | ↑ | - | - | VC | 2 | 31 | 0.62 | 0.85 | No |
| B8 | ↑ | ↑ | ↑ | ↑ | ↑ | ↑ | ↑ | ↑ | 0.5 | - | - | VC | 0.8 | 31 | 0.65 | 0.88 | No |
| B9 | ↑ | ↑ | ↑ | ↑ | ↑ | ↑ | ↑ | ↑ | 2 | - | - | ↑ | ↑ | 33 | 0.63 | 0.75 | No |

<Comparison of Examples with Comparative Examples>

In the following, performances of Example B9 and Comparative Examples B1 to B9 which were acquired by the lithium ion battery having the same configuration as that of Example B9 except for the electrolytic solution are compared.

First, when Example B9 and Comparative Example B1 are compared, it turns out that high rate characteristics deteriorate when a ratio of ethylene carbonate (EC) decreases to 10 vol%. On the other hand, when Example B9 and Comparative Example B2 are compared, it turns out that high rate characteristics deteriorate even when a ratio of ethylene carbonate (EC) increases to 40 vol%. Consequently, it turns out that high rate characteristics are enhanced by making a ratio of ethylene carbonate (EC) in an electrolytic solution at 20 vol% or more and 30 vol% or less.

When Example B9 and Comparative Example B3 are compared, it turns out that high rate characteristics deteriorate when a ratio of dimethyl carbonate (DMC) deteriorates to 35 vol%. On the other hand, when Example B9 and Comparative Example B4 are compared, it turns out that, when dimethyl carbonate (EMC) is increased to 60 vol% and a volume ratio $\eta$ between the dimethyl carbonate (DMC) and ethyl methyl carbonate (EMC) is increased to 6.0, the inflammability at 20°C is confirmed and the safety deteriorates. In addition, when Example B9 and Comparative Example B5 are compared, it turns out that, when a volume ratio $\eta$ of the dimethyl carbonate (DMC) and the ethyl methyl carbonate (EMC) is decreased to 0.4, high rate characteristics deteriorate. Therefore, from a viewpoint of achieving both of enhancing high rate characteristics and enhancing the safety, it turns out that it is preferred that a ratio of dimethyl carbonate (EMC) is 36 vol% or more and 50 vol% or more, and the volume ratio $\eta$ of the dimethyl carbonate (DMC) and the ethyl methyl carbonate (EMC) satisfies $1.0 \leq \eta \leq 1.7$.

Furthermore, when Example B9 and Comparative Example B6 are compared, it turns out that, in the case where additives are not included, a capacity ratio before and after being left as it was deteriorates to 0.6 and life characteristics deteriorate. On the other hand, when Example B9 and Comparative Example B7 are compared, it turns out that high rate characteristics deteriorate when vinylene carbonate (VC) is increased to 2.0 wt.%. From this, from a viewpoint of achieving both of enhancing the life and enhancing high rate characteristics, it turns out that a composition ratio of additives is 0.1 wt.% or more and 1.0 wt.% or less. Then, as additives, as indicated in Example B, when additives including at least one of compounds selected from vinylene carbonate (VC), 1,3-propene sultone (PRS), fluoroethylene carbonate (FEC), diphenyl sulfide (DPS) and LiBOB are used, it turns out that there is an effect of making long the life of the lithium ion battery. In other words, it turns out that, by forming an additive from compounds including, within a molecule, at least one of elements selected from oxygen, boron, sulfur and fluorine, performance improvement of the lithium ion battery can be achieved.

In addition, when Example B9 and Comparative Example B8 are compared, it turns out that, when a lithium salt concentration deteriorates to 0.5 mol/L, high rate characteristics deteriorate. On the other hand, when Example B9 and Comparative Example B8 are compared, it turns out that even when a lithium salt concentration is increased to 2.0 mol/L, high rate characteristics deteriorate. Therefore, it turns out that the lithium ion battery which is excellent in high rate characteristics can be provided by making the lithium salt concentration at 1.0 mol/L or more and 1.5 mol/L or less. At this time, it turns out that, by configuring to contain as the lithium salt compounds at least one of the compounds selected from $LiPF_6$, $LiBF_4$, $LiN(FSO_2)_2$ and $LiN(CF_3SO_2)_2$ as described in Example B, improvement in high rate characteristics is achievable.

According to the foregoing, as described in Example A, as a lithium ion battery where a discharged capacity is 30 Ah or more and less than 100 Ah, when a positive electrode composite density is 2.4 to 2.7 g/cm$^3$, a positive electrode composite application quantity is 175 to 250 g/m$^2$, and a weight ratio (NMC/sp-Mn) of active materials is 10/90 to 60/40, it turns out that a battery having a high battery capacity, being excellent in output characteristics and the volume energy density, and capable of guaranteeing the safety can be acquired.

Then, by further using configurations of Example B to the results acquired in Example A, it turns out that a lithium ion battery which is excellent in high rate characteristics, capable of suppressing deterioration of a discharged capacity after being left as it was, and has a long life and high safety can be provided. That is, an electrolytic solution is made from a solvent, an additive and lithium salt compounds, and the solvent is constituted from ethylene carbonate (EC), dimethyl carbonate (DMC) and ethyl methyl carbonate (EMC), and the additive contains compounds including, within a molecule, at least one of elements selected from oxygen, boron, sulfur and fluorine. Furthermore, the lithium salt compounds include at least one of compounds selected from $LiPF_6$, $LiBF_4$, $LiN(FSO_2)_2$ and $LiN(CF_3SO_2)_2$. Using this configuration as a premise, a composition ratio of ethylene carbonate (EC) is 20 vol% or more and 30 vol% or less, and a composition ratio of dimethyl carbonate (DMC) is 36 vol% or more and 50 vol% or less, and a composition ratio $\eta$ (DMC/EMC) of dimethyl carbonate (DMC) and ethyl methyl carbonate (EMC) is $1.0 \leq \eta \leq 1.7$. Furthermore, a composition ratio of an additive is 0.1 wt.% or more and 1.0 wt.% or less, and a concentration of lithium salt compounds is 1.0 mol/L or more and 1.5 mol/L or less. In this manner, a lithium ion battery which is excellent in high rate characteristics, capable of suppressing deterioration of a discharged capacity after being left as it is, and has a long life and the high safety can be provided.

In other words, as described in Example A, the lithium ion battery where a discharged capacity is 30 Ah or more and less than 100 Ah is configured so that a positive electrode composite density is 2.4 g/cm$^3$ or more and 2.7 g/cm$^3$ or less, a positive electrode composite application quantity is 175 g/m$^2$ or more and 250 g/m$^2$ or less, and a discharged capacity X and a weight ratio Y (NMC/sp-Mn) of the layered lithium nickel manganese cobalt composite oxide (NMC) and the spinel type lithium manganese oxide (sp-Mn) satisfy the following relational expression 1 (Y<-0.0062X+1.05 (30≤X<100)), and thereby, it turns out that the battery in which the battery capacity is high, and which is excellent in output characteristics and the volume energy density, and is capable of guaranteeing the safety can be obtained.

Then, by further using the configuration of Example B to the results acquired in Example A, it turns out that a lithium ion battery which is excellent in high rate characteristics, capable of suppressing deterioration of a discharged capacity after being left as it was, and has a long life and the high safety can be provided.

As described above, in Example A, discharging characteristics and the safety of the battery were evaluated such that the positive electrode composite density, the positive electrode composite application quantity, and the weight ratio (NMC/sp-Mn) of the layered lithium nickel manganese cobalt composite oxide (NMC) and the spinel type lithium manganese oxide (sp-Mn) were varied. As a result, as the lithium ion battery having a discharged capacity of 30 Ah or more and less than 100 Ah, when a positive electrode composite density is 2.4 to 2.7 g/cm$^3$, a positive electrode composite application quantity is 175 to 250 g/m$^2$, and a weight ratio (NMC/sp-Mn) of active materials is 10/90 to 60/40, it turns out that the battery having a high battery capacity, being excellent in output characteristics and the volume energy density and capable of guaranteeing the safety can be obtained.

Regarding the positive electrode structure like this, the inventors of the present invention investigated also a negative electrode structure, and consequently, results of the investigation described in the following were acquired. That is, regarding the above-mentioned positive electrode structure, from a viewpoint of performance improvement of the lithium ion battery, the negative electrode has a structure in which a negative electrode composite including carbon is applied to both sides of the current collector. Then, it became clear that it was preferred that a density of the negative electrode composite is 0.7 g/cm$^3$ or more and 2.0 g/cm$^3$ or less, and an application quantity of the negative electrode composite is 40 g/m$^2$ or more and 100 g/m$^2$ or less. It is because when the density of the negative electrode composite exceeds 2.0 g/cm$^3$, the possibility of negative electrode active material particles being destroyed, and of causing an increase of an initial irreversible capacity and a high current density charging characteristics deterioration due to a deterioration of an electrolytic solution permeability into a vicinity of the interface between the current collector and the negative electrode active material will increase. On the other hand, it is because, when the density of the negative electrode composite is less than 0.7 g/cm$^3$, the possibility that a conductivity between negative electrode active materials deteriorates and a capacity per unit volume deteriorates while a battery resistance increases will increase. In addition, it is because, when an application quantity of the negative electrode composite is lower than 40 g/m$^2$, the possibility that occlusion characteristics of lithium ions in the negative electrode deteriorates upon charging and lithium is deposited in a negative electrode surface will increase. On the other hand, it is because, when an application quantity of the negative electrode composite exceeds 100 g/m$^2$, the possibility that an overcharged state is generated since an electric potential of the positive electrode opposed thereto becomes high at the time of full charging, an oxidative degradation of the electrolytic solution in the positive electrode surface is accelerated, and the battery resistance increases will increase.

Then, the inventors of the present invention have advanced their study also regarding an additive added in the electrolytic solution, and as the result, it has become clear that, regarding the lithium ion battery, a higher output and a longer life can be achieved. Hereinafter, the experimental results will be described based on Example C.

[Example C]

In Example C, as an electrolytic solution, a solution in which lithium hexafluorophosphate (LiPF$_6$) is dissolved by 1.2 mol/L into a mixed solution having a volume ratio 2:3:2 of ethylene carbonate, dimethyl carbonate and ethyl methyl carbonate.

[Evaluation of Battery Characteristics (initial discharging characteristics at various rates and life characteristics)]

Battery characteristics of a lithium ion battery manufactured in this way were evaluated by a method described in the following.

Regarding the manufactured lithium ion battery, 1,3-propene sultone (abbreviated as PRS) and fluoroethylene carbonate (abbreviated as FEC) are added in the electrolytic solution, and initial discharging characteristics at various rates and life characteristics of the lithium ion battery where the additive amount was varied, respectively, were evaluated.

In an initial discharging test at various rates, first, charging and discharging cycles at a current value of 0.5C was repeated twice in an environment of 25°C in a voltage range of 4.2 to 2.7 V. Furthermore, after charging the lithium ion battery up to 4.2 V, discharging based on constant current discharging was performed to a final voltage of 2.7 V at each current value of current values 0.5C and 3.0C.

In addition, as for life characteristics, storage for 30 days was carried out at a battery voltage 4.2 V and an environmental temperature of 50°C after the discharging test at various rates was performed, and thereafter, the discharging test at various rates was performed under the same conditions as those before the storage, and discharged capacities before and after the storage were compared.

(Examples C1 to C35)

A negative electrode composite in which amorphous (non-crystalline) carbon was used for a negative electrode active material, a negative electrode composite density was 1.0 g/cm$^3$, and a negative electrode composite application quantity was 60 g/m$^2$ was manufactured, and a battery was manufactured such that the amount of additive (wt.%) of each of 1,3 propene sultone (PRS) and fluoroethylene carbonate (FEC) to an electrolytic solution was changed from 0 wt.% to 5 wt.%. In this battery, a diameter of the winding group was 65 mm, an outer diameter was 67 mm, and an inner diameter was 66 mm. Furthermore, discharging characteristics (battery capacity (Ah)) at various rates (0.5C and 3.0C), a volume energy density (Wh/L) at the time of 0.5C, output characteristics (3.0C discharged capacity/0.5C discharged capacity), and life characteristics (battery capacity (Ah) after storage) were evaluated. The evaluation results are indicated in Table 14. Note that, in the table, substance names are indicated by abbreviated names. Specifically, 1,3 propene sultone is indicated as PRS, and fluoroethylene carbonate is indicated as FEC. These notations are the same as those also in the other tables.

(Examples C36 to C40)

A negative electrode composite in which amorphous (non-crystalline) carbon was used for a negative electrode active material, a negative electrode composite density was 1.0 g/cm$^3$ was manufactured, and a battery was manufactured such that a 1,3 propene sultone (PRS) and fluoroethylene carbonate (FEC) were each added in the electrolytic solution only at 0.5 wt.%; and regarding the battery, the diameter of the winding group was 65 mm, the outer diameter was 67 mm, and the inner diameter was 66 mm. Here, an electrode having an application quantity differing in the range from 50 to 100 g/m$^2$ in a negative electrode composite application quantity was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 15.

(Examples C41 to C42)

A negative electrode composite in which amorphous (non-crystalline) carbon was used for a negative electrode active material, and a negative electrode composite application quantity was 60 g/m$^2$ was manufactured, and the battery was manufactured where 1,3-propene sultone (PRS) and fluoroethylene carbonate (FEC) were each added in the electrolytic solution only at 0.5 wt.%, and regarding the battery, a diameter of the winding group was 65 mm, an outer diameter was 67 mm, and the inner diameter was 66 mm. Here, an electrode having a density differing in the range from 0.7 to 1.5 g/cm$^3$ in a negative electrode composite density was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 16.

(Examples C43 to C49)

A negative electrode composite in which graphite carbon was used for a negative electrode active material, and a negative electrode composite density was 1.0 g/cm$^3$ was manufactured, and the battery was manufactured such that 1,3-propene sultone (PRS) and fluoroethylene carbonate (FEC) were each added in the electrolytic solution only at 0.5 wt.%, and regarding the battery, the diameter of the winding group was 65 mm, the outer diameter was 67 mm, and the inner diameter was 66 mm. Here, an electrode having an application quantity differing in the range from 40 to 100 g/m$^2$ in a negative electrode composite application quantity was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 17.

(Examples C50 to C53)

A negative electrode composite in which graphite carbon was used for a negative electrode active material, and a negative electrode composite application quantity was 60 g/m$^2$ was manufactured, and the battery was manufactured such that 1,3-propene sultone (PRS) and fluoroethylene carbonate (FEC) were each added in the electrolytic solution only at 0.5 wt.%, and regarding the battery, the diameter of the winding group was 65 mm, the outer diameter was 67 mm, and the inner diameter was 66 mm. Here, an electrode having a density differing in the range from 0.7 to 2.0 g/cm$^3$ in a negative electrode composite density was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated.

Evaluation results are indicated in Table 18.

(Comparative Examples C1 to C4)

A negative electrode composite in which amorphous (non-crystalline) carbon was used for a negative electrode active material, a negative electrode composite density was 1.0 g/cm$^3$, and a negative electrode composite application quantity was 60 g/m$^2$ was manufactured, and the battery was manufactured such that additive amounts (wt.%), to an electrolytic solution of 1,3 propene sultone (PRS) and fluoroethylene carbonate (FEC) were changed to 0 wt.% and 10 wt.%, respectively. Regarding the battery, the diameter of the winding group was 65 mm, the outer diameter was 67 mm, and the inner diameter was 66 mm. Furthermore, discharging characteristics (battery capacity (Ah)) at various rates (0.5C and 3.0C), a volume energy density (Wh/L) at the time of 0.5C, output characteristics (3.0C discharged capacity/0.5C discharged capacity), and life characteristics (battery capacity (Ah) after storage) were evaluated. Results of the evaluation are indicated in Table 19.

(Comparative Examples C5 to C6)

A negative electrode composite in which amorphous (non-crystalline) carbon was used for a negative electrode active material, and a negative electrode composite density was 1.0 g/cm$^3$ was manufactured, and the battery was manufactured such that 1,3-propene sultone (PRS) and fluoroethylene carbonate (FEC) were each added in the electrolytic solution only at 0.5 wt.%, and regarding the battery, the diameter of the winding group was 65 mm, the outer diameter was 67 mm, and the inner diameter was 66 mm. Here, an electrode was manufactured such that a negative electrode composite application quantity was 40 g/m$^2$ and 100 g/m$^2$, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 20.

(Comparative Examples C7 to C9)

A negative electrode composite in which amorphous (non-crystalline) carbon was used for a negative electrode active material, and a negative electrode composite application quantity was 60 g/m$^2$ was manufactured, and the battery was manufactured such that 1,3-propene sultone (PRS) and fluoroethylene carbonate (FEC) were each added in the electrolytic solution only at 0.5 wt.%, and regarding the battery, the diameter of the winding group was 65 mm, the outer diameter was 67 mm, and the inner diameter was 66 mm. Here, an electrode having a density differing in the range from 0.5 to 2.2 g/cm$^3$ in a negative electrode composite density was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 21.

(Comparative Example C10)

A negative electrode composite in which graphite carbon was used for a negative electrode active material, and a negative electrode composite density was 1.0 g/cm$^3$ was manufactured, and the battery was manufactured such that 1,3-propene sultone (PRS) and fluoroethylene carbonate (FEC) were each added in the electrolytic solution only at 0.5 wt.%, and regarding the battery, the diameter of the winding group was 65 mm, the outer diameter was 67 mm, and the inner diameter was 66 mm. Here, an electrode in which a negative electrode composite application quantity was 110 g/m$^2$ was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 22.

(Comparative Examples C11 to C12)

A negative electrode composite in which graphite carbon was used for a negative electrode active material, and a negative electrode composite application quantity was 60 g/m$^2$ was manufactured, and the battery was manufactured such that 1,3-propene sultone (PRS) and fluoroethylene carbonate (FEC) were each added in the electrolytic solution only at 0.5 wt.%, and regarding the battery, the diameter of the winding group was 65 mm, the outer diameter was 67 mm, and the inner diameter was 66 mm. Here, an electrode having a negative electrode composite density was 0.5 g/cm$^3$ and 2.2 g/cm$^3$ was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 23.

(Comparative Example C13)

A negative electrode composite in which graphite carbon was used for a negative electrode active material, a negative electrode composite density was 1.5 g/cm$^3$ and a negative electrode composite application quantity was 60 g/m$^2$ was manufactured, and the battery was manufactured such that each of 1,3-propene sultone (PRS) and fluoroethylene carbonate (FEC) were not added in the electrolytic solution. Regarding the battery, the diameter of the winding group was 65 mm, the outer diameter was 67 mm, and the inner diameter was 66 mm. Furthermore, discharging characteristics (battery capacity (Ah)) at various rates (0.5C and 3.0C), output characteristics (3.0C discharged capacity/0.5C discharged capacity), and life characteristics (battery capacity (Ah) after storage) were evaluated. Results of the evaluation are indicated in Table 24.

[Table 14]

| Example | Negative electrode composite density (g/cm³) | Application quantity of negative electrode composite (g/m²) | Addition quantity of PRS (wt.%) | Addition quantity of FEC (wt.%) | Battery capacity (Ah) | | Output characteristics (%) | Battery capacitance after storage (Ah) | | Output characteristics (%) | Energy density (Wh/L) |
|---|---|---|---|---|---|---|---|---|---|---|---|
| | | | | | @0.5C | @3.0C | | @0.5C | @3.0C | | |
| C1 | 1 | 60 | 0.1 | 0 | 90 | 82 | 91 | 72 | 62 | 86 | 231 |
| C2 | 1 | 60 | 0.2 | 0 | 90 | 84 | 93 | 72 | 64 | 88 | 231 |
| C3 | 1 | 60 | 0.5 | 0 | 90 | 85 | 94 | 72 | 64 | 89 | 231 |
| C4 | 1 | 60 | 2 | 0 | 90 | 83 | 92 | 72 | 63 | 87 | 231 |
| C5 | 1 | 60 | 5 | 0 | 90 | 80 | 89 | 72 | 60 | 84 | 231 |
| C6 | 1 | 60 | 0 | 0.1 | 90 | 77 | 86 | 77 | 63 | 82 | 231 |
| C7 | 1 | 60 | 0.1 | 0.1 | 90 | 82 | 91 | 77 | 67 | 87 | 231 |
| C8 | 1 | 60 | 0.2 | 0.1 | 90 | 84 | 93 | 77 | 69 | 89 | 231 |
| C9 | 1 | 60 | 0.5 | 0.1 | 90 | 85 | 94 | 77 | 70 | 90 | 231 |
| C10 | 1 | 60 | 2 | 0.1 | 90 | 83 | 92 | 77 | 68 | 88 | 231 |
| C11 | 1 | 60 | 5 | 0.1 | 90 | 80 | 89 | 77 | 66 | 85 | 231 |
| C12 | 1 | 60 | 0 | 0.2 | 90 | 77 | 86 | 79 | 65 | 83 | 231 |
| C13 | 1 | 60 | 0.1 | 0.2 | 90 | 82 | 91 | 79 | 70 | 88 | 231 |
| C14 | 1 | 60 | 0.2 | 0.2 | 90 | 84 | 93 | 79 | 72 | 90 | 231 |
| C15 | 1 | 60 | 0.5 | 0.2 | 90 | 85 | 94 | 79 | 72 | 91 | 231 |
| C16 | 1 | 60 | 2 | 0.2 | 90 | 83 | 92 | 79 | 71 | 89 | 231 |
| C17 | 1 | 60 | 5 | 0.2 | 90 | 80 | 89 | 79 | 68 | 86 | 231 |
| C18 | 1 | 60 | 0 | 0.5 | 90 | 77 | 86 | 82 | 68 | 84 | 231 |
| C19 | 1 | 60 | 0.1 | 0.5 | 90 | 82 | 91 | 82 | 73 | 89 | 231 |
| C20 | 1 | 60 | 0.2 | 0.5 | 90 | 84 | 93 | 82 | 75 | 91 | 231 |
| C21 | 1 | 60 | 0.5 | 0.5 | 90 | 85 | 94 | 82 | 76 | 92 | 231 |
| C22 | 1 | 60 | 2 | 0.5 | 90 | 83 | 92 | 82 | 74 | 90 | 231 |
| C23 | 1 | 60 | 5 | 0.5 | 90 | 80 | 89 | 82 | 71 | 87 | 231 |
| C24 | 1 | 60 | 0 | 2 | 90 | 77 | 86 | 80 | 66 | 83 | 231 |
| C25 | 1 | 60 | 0.1 | 2 | 90 | 82 | 91 | 80 | 71 | 88 | 231 |
| C26 | 1 | 60 | 0.2 | 2 | 90 | 83 | 92 | 80 | 71 | 89 | 231 |
| C27 | 1 | 60 | 0.5 | 2 | 90 | 84 | 93 | 80 | 72 | 90 | 231 |
| C28 | 1 | 60 | 2 | 2 | 90 | 83 | 92 | 80 | 71 | 89 | 231 |
| C29 | 1 | 60 | 5 | 2 | 90 | 80 | 89 | 80 | 69 | 86 | 231 |
| C30 | 1 | 60 | 0 | 5 | 90 | 77 | 86 | 77 | 63 | 82 | 231 |
| C31 | 1 | 60 | 0.1 | 5 | 90 | 81 | 90 | 77 | 67 | 86 | 231 |
| C32 | 1 | 60 | 0.2 | 5 | 90 | 83 | 92 | 77 | 68 | 88 | 231 |
| C33 | 1 | 60 | 0.5 | 5 | 90 | 84 | 93 | 77 | 69 | 89 | 231 |
| C34 | 1 | 60 | 2 | 5 | 90 | 82 | 91 | 77 | 67 | 87 | 231 |
| C35 | 1 | 60 | 5 | 5 | 90 | 79 | 88 | 77 | 65 | 84 | 231 |

[Table 15]

| Example | Negative electrode composite density (g/cm³) | Application quantity of negative electrode composite (g/m²) | Addition quantity of PRS (wt.%) | Addition quantity of FEC (wt.%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| C36 | 1 | 50 | 0.5 | 0.5 | 85 | 81 | 95 | 75 | 70 | 93 | ○ | 219 |
| C37 | 1 | 70 | 0.5 | 0.5 | 92 | 83 | 90 | 84 | 74 | 88 | ○ | 237 |
| C38 | 1 | 80 | 0.5 | 0.5 | 95 | 80 | 85 | 83 | 69 | 83 | ○ | 243 |
| C39 | 1 | 90 | 0.5 | 0.5 | 96 | 77 | 80 | 83 | 65 | 78 | ○ | 247 |
| C40 | 1 | 100 | 0.5 | 0.5 | 98 | 74 | 75 | 81 | 61 | 75 | ○ | 253 |

[Table 16]

| Example | Negative electrode composite density (g/cm³) | Application quantity of negative electrode composite (g/m²) | Addition quantity of PRS (wt.%) | Addition quantity of FEC (wt.%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| C41 | 0.7 | 60 | 0.5 | 0.5 | 79 | 75 | 95 | 70 | 61 | 86 | ○ | 203 |
| C42 | 1.5 | 60 | 0.5 | 0.5 | 101 | 95 | 94 | 94 | 86 | 92 | ○ | 259 |

[Table 17]

| Example | Negative electrode composite density (g/cm³) | Application quantity of negative electrode composite (g/m²) | Addition quantity of PRS (wt.%) | Addition quantity of FEC (wt.%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| C43 | 1 | 40 | 0.5 | 0.5 | 82 | 76 | 93 | 72 | 64 | 89 | ○ | 210 |
| C44 | 1 | 50 | 0.5 | 0.5 | 88 | 83 | 94 | 78 | 70 | 90 | ○ | 226 |
| C45 | 1 | 60 | 0.5 | 0.5 | 92 | 87 | 94 | 84 | 75 | 89 | ○ | 237 |
| C46 | 1 | 70 | 0.5 | 0.5 | 96 | 84 | 88 | 87 | 72 | 83 | ○ | 246 |
| C47 | 1 | 80 | 0.5 | 0.5 | 99 | 82 | 83 | 87 | 68 | 78 | ○ | 254 |
| C48 | 1 | 90 | 0.5 | 0.5 | 101 | 78 | 77 | 87 | 62 | 71 | ○ | 259 |
| C49 | 1 | 100 | 0.5 | 0.5 | 103 | 74 | 72 | 85 | 58 | 68 | ○ | 264 |

[Table 18]

| Example | Negative electrode composite density (g/cm³) | Application quantity of negative electrode composite (g/m²) | Addition quantity of PRS(wt.%) | Addition quantity of FEC(wt.%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| C50 | 0.7 | 60 | 0.5 | 0.5 | 80 | 74 | 93 | 68 | 58 | 85 | ○ | 206 |
| C51 | 1 | 60 | 0.5 | 0.5 | 92 | 88 | 95 | 81 | 72 | 88 | ○ | 237 |
| C52 | 1.5 | 60 | 0.5 | 0.5 | 102 | 94 | 93 | 92 | 84 | 91 | ○ | 261 |
| C53 | 2 | 60 | 0.5 | 0.5 | 112 | 103 | 92 | 100 | 89 | 89 | ○ | 288 |

[Table 19]

| Comparative Example | Negative electrode composite density (g/cm³) | Application quantity of negative electrode composite (g/cm²) | Addition quantity of PRS (wt.%) | Addition quantity of FEC (wt.%) | Battery capacity (Ah) | | Output characteristics (%) | Battery capacitance after storage (Ah) | | Output characteristics (%) | Energy density (Wh/L) |
|---|---|---|---|---|---|---|---|---|---|---|---|
| | | | | | @0.5C | @3.0C | | @0.5C | @3.0C | | |
| C1 | 1 | 60 | 0 | 0 | 90 | 77 | 86 | 72 | 58 | 81 | 231 |
| C2 | 1 | 60 | 10 | 0 | 86 | 75 | 86 | 70 | 47 | 67 | 222 |
| C3 | 1 | 60 | 0 | 10 | 86 | 74 | 86 | 71 | 48 | 68 | 222 |
| C4 | 1 | 60 | 10 | 10 | 86 | 73 | 86 | 69 | 46 | 66 | 220 |

[Table 20]

| Comparative Example | Negative electrode composite density (g/cm³) | Application quantity of negative electrode composite (g/cm²) | Addition quantity of PRS (wt.%) | Addition quantity of FEC (wt.%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| C5 | 1 | 40 | 0.5 | 0.5 | 80 | 76 | 94 | 70 | 64 | 92 | × | 207 |
| C6 | 1 | 110 | 0.5 | 0.5 | 99 | 69 | 70 | 77 | 52 | 68 | ○ | 255 |

[Table 21]

| Comparative Example | Negative electrode composite density (g/cm³) | Application quantity of negative electrode composite (g/cm²) | Addition quantity of PRS (wt.%) | Addition quantity of FEC (wt.%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| C7 | 0.5 | 60 | 0.5 | 0.5 | 68 | 61 | 90 | 58 | 45 | 78 | ○ | 175 |
| C8 | 2 | 60 | 0.5 | 0.5 | – | – | – | – | – | – | × | – |
| C9 | 2.2 | 60 | 0.5 | 0.5 | – | – | – | – | – | – | × | – |

[Table 22]

| Comparative Example | Negative electrode composite density (g/cm³) | Application quantity of negative electrode composite (g/cm²) | Addition quantity of PRS (wt.%) | Addition quantity of FEC (wt.%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| C10 | 1 | 110 | 0.5 | 0.5 | 104 | 69 | 66 | 81 | 48 | 59 | × | 267 |

[Table 23]

| Comparative Example | Negative electrode composite density (g/cm³) | Application quantity of negative electrode composite (g/cm²) | Addition quantity of PRS (wt.%) | Addition quantity of FEC (wt.%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| C11 | 0.5 | 60 | 0.5 | 0.5 | 68 | 59 | 87 | 54 | 42 | 79 | ○ | 175 |
| C12 | 2.2 | 60 | 0.5 | 0.5 | – | – | – | – | – | – | × | – |

[Table 24]

| Comparative Example | Negative electrode composite density (g/cm³) | Application quantity of negative electrode composite (g/cm²) | Addition quantity of PRS (wt.%) | Addition quantity of FEC (wt.%) | Battery capacity (Ah) | | Output characteristics (%) | Battery capacitance after storage (Ah) | | Output characteristics (%) |
|---|---|---|---|---|---|---|---|---|---|---|
| | | | | | @0.5C | @3.0C | | @0.5C | @3.0C | |
| C13 | 1.5 | 60 | 0 | 0 | 102 | 77 | 76 | 83 | 57 | 69 |

<Comparison of Examples with Comparative Examples>

When Examples C1 to C5 indicated in Table 14 and Comparative Example C1 indicated in Table 19 are compared, it has been found out that, by adding 1,3-propene sultone (PRS) into an electrolytic solution at 0.1 wt%, 0.2 wt.%, 0.5 wt.%, 2 wt.%, or 5 wt.%, the 3.0C discharged capacity and output characteristics have been improved as initial discharging characteristics at various rates in the case of Examples C1 to C5. That is, it has been found out that, as compared with Comparative Example C1 in which the 1,3-propene sultone (PRS) is not added in the electrolytic solution, the 3.0C discharged capacity and output characteristics can be improved by adding the 1,3-propene sultone (PRS) of 0.1 wt.% to 5 wt.% to the electrolytic solution like Examples C1 to C5. However, as indicated in Comparative Example C2, it has been found out that, when the 1,3-propene sultone (PRS) is added alone to the electrolytic solution at about 10 wt.%, the 3.0C discharged capacity deteriorates as compared with Comparative Example C1. Accordingly, although the 3.0C discharged capacity and output characteristics can be improved by adding the 1,3-propene sultone (PRS) to the electrolytic solution, it has been found out that, when the additive amount is increased, the 3.0C discharged capacity is deteriorated on the contrary. This is because, first, when the 1,3-propene sultone (PRS) is added in the electrolytic solution, a coating having high resistance and high permeability (permeability of lithium ions) is made on the surface of the negative electrode and it can make life long and improves output characteristics in the lithium ion battery. However, when the 1,3-propene sultone (PRS) is added excessively, it is considered that the coating formed on the negative electrode interface becomes thick, and furthermore, the viscosity of the electrolytic solution rises, and thus, an internal resistance of the lithium ion battery increases, and deterioration of output characteristics is caused. Therefore, an additive amount of the 1,3-propene sultone (PRS) to be added in the electrolytic solution is required to be within a specific range from a viewpoint of performance improvement of the lithium ion battery. Specifically, it has been found out that, by adding the 1,3-propene sultone (PRS) to the electrolytic solution in the range of 0.1 wt.% or more and less than 10 wt.%, the 3.0C discharged capacity and output characteristics can be improved. Furthermore, as indicated in Table 14, it has been found out that adding the 1,3-propene sultone (PRS) to the electrolytic solution in the range of 0.5 wt.% or more and 2 wt.% or less is preferable from a viewpoint of improving the 3.0C discharged capacity and output characteristics.

Subsequently, when Examples C6, C12, C18, C24 and C30 indicated in Table 14 are compared with Comparative Example C1 indicated in Table 19, it has been found out that, by adding fluoroethylene carbonate (FEC) to the electrolytic solution at 0.1 wt.%, 0.2 wt.%, 0.5 wt.%, 2 wt.%, or 5 wt.%, deterioration of the 0.5C discharged capacity is suppressed, and furthermore, deterioration of output characteristics is also suppressed even after storage for 30 days at a battery voltage of 4.2 V and an environmental temperature of 50°C in the case of Examples C6, C12, C18, C24 and C30. That is, as compared with Comparative Example C1 where the fluoroethylene carbonate (FEC) is not added in the electrolytic solution, it has been found out that life characteristics and output characteristics can be improved by adding the fluoroethylene carbonate (FEC) of 0.1 wt.% to 5 wt.% to the electrolytic solution like Examples C6, C12, C18, C24 and C30. However, as indicated in Comparative Example C3, it has been found out that, when the fluoroethylene carbonate (FEC) is added alone to the electrolytic solution at about 10 wt.%, life characteristics deteriorate as compared with Comparative Example C1. From this, although life characteristics and output characteristics can be improved by adding the fluoroethylene carbonate (FEC) to the electrolytic solution, it has been found out that, when the additive amount is large, life characteristics and output characteristics are deteriorated on the contrary. This is because, first, when the fluoroethylene carbonate (FEC) is added in the electrolytic solution, a coating having high resistance and high permeability (permeability of lithium ions) is made on the surface of the negative electrode and it can make life long and improves output characteristics in the lithium ion battery. However, when the fluoroethylene carbonate (FEC) is added excessively, it is considered that the coating formed on the negative electrode interface becomes thick, and furthermore, the viscosity of the electrolytic solution rises, and thereby, an internal resistance of the lithium ion battery increases, and deterioration of output characteristics is caused. Therefore, an additive amount of the fluoroethylene carbonate (FEC) to be added in the electrolytic solution is required to be within a specific range from a viewpoint of performance improvement of the lithium ion battery. Specifically, it has been found out that, by adding the fluoroethylene carbonate (FEC) to the electrolytic solution in the range of 0.1 wt.% or more and less than 10 wt.%, the life characteristics and output characteristics can be improved. Furthermore, as indicated in Table 14, it has been found out that adding the fluoroethylene carbonate (FEC) to the electrolytic solution in the range of 0.5 wt.% or more and 2 wt.% or less is preferable from a viewpoint of improving the life characteristics and output characteristics.

Furthermore, when Examples indicated in Table 14: C7 to C11, C13 to C17, C19 to C23, C25 to C29, C31 to C35 are compared with Comparative Example C1 indicated in Table 19, it has been found out that, by adding each of the 1,3-propene sultone (PRS) and the fluoroethylene carbonate (FEC) (0.1 wt.% or more and 5 wt.% or less for each) to the electrolytic solution of Comparative Example C1 in which an additive is not included, both initial discharging characteristics at various rates and discharging characteristics at various rates after storage are improved. On the other hand, as indicated in Comparative Example C4 in Table 19, when the 1,3-propene sultone (PRS) and the fluoroethylene carbonate (FEC) are each added by 10 wt.%, it has been found out that the 0.5C discharged capacity and the 3.0C discharged capacity deteriorate rather than Comparative Example C1 due to an increase of an internal resistance resulting from a thick coating and a rise of the viscosity of the electrolytic solution.

Consequently, it has been found out that, by configuring the lithium ion battery so that an additive containing at least one of 1,3-propene sultone (PRS) and fluoroethylene carbonate (FEC) may be contained in the electrolytic solution and that the additive may be contained in the electrolytic solution at a percentage of 0.1 wt.% or more and less than 10 wt.%, life characteristics and output characteristics of the lithium ion battery can be improved. In addition, it has been found out that, by configuring the lithium ion battery so that an additive containing 1,3-propene sultone (PRS) and fluoroethylene carbonate (FEC) may be contained in the electrolytic solution, and that the additive may be contained in the electrolytic solution at a percentage of 0.2 wt.% or more and 10 wt.% or less, life characteristics and output characteristics of the lithium ion battery can be improved.

Next, under such a condition that a negative electrode composite in which amorphous (non-crystalline) carbon is used for a negative electrode active material and a negative electrode composite density is 1.0 g/cm$^3$ is manufactured, and that 1,3-propene sultone (PRS) and fluoroethylene carbonate (FEC) are each added in the electrolytic solution only at 0.5 wt.%, evaluation results in the case of variously changing a negative electrode composite application quantity will be described.

Like Examples C36 to C40 indicated in Table 15, it has been found out that a higher capacity or an higher output of the lithium ion battery is achievable as compared with Comparative Example C1 indicated in Table 19 when the negative electrode composite application quantity was 50 g/m$^2$ to 100 g/m$^2$. Here, when the negative electrode composite application quantity was 50 g/m$^2$, although the initial 0.5C discharged capacity deteriorated a little and the energy density deteriorated, the battery capacity after storage increased more than Comparative Example C1. On the other hand, when the negative electrode composite application quantity was 100 g/m$^2$, it has been found out that,

although output characteristics deteriorated, larger battery capacity than Comparative Example C1 was shown even after storage by making high a capacity of the lithium ion battery.

However, like Comparative Example C5 indicated in Table 20, although output characteristics were improved when the negative electrode composite application quantity was 40 g/m$^2$, the battery capacity was small, and the 0.5C discharged capacity after storage deteriorated rather than Comparative Example C1. In addition, as indicated in Comparative Example C6 indicated in Table 20, when the negative electrode composite application quantity was 110 g/m$^2$, although the battery capacity increased, the initial and after-storage output characteristics deteriorated. It is considered that this was caused because the electrode resistance became high as the negative electrode composite application quantity was increased.

Note that, a copper base material state in Table 15 and Table 20 is an evaluation of a damage exerted on the copper base material in an electrode manufacturing press process; and within the table, when there is no distortion by the press, "O" is denoted, and when there is distortion by the press, "x" is denoted.

Consequently, it has been found out that, when amorphous (non-crystalline) carbon is used for the negative electrode active material and the 1,3-propene sultone (PRS) and the fluoroethylene carbonate (FEC) are added in the electrolytic solution, higher a performance of the lithium ion battery can be achieved by making a negative electrode composite application quantity to 50 g/m$^2$ or more and 100 g/m$^2$ or less. In particular, in Table 15, although the cases in which the additive amount of the 1,3-propene sultone (PRS) and the fluoroethylene carbonate (FEC), each, is 0.5 wt.% are indicated, according to an investigation by the inventors of the present invention, the same effect has been confirmed even in the case in which an additive amount of the 1,3-propene sultone (PRS) and the fluoroethylene carbonate (FEC), each, was 0.1 wt.% to 10 wt.% or less.

Subsequently, under a condition such that a negative electrode composite in which amorphous (non-crystalline) carbon is used for a negative electrode active material, a negative electrode composite application quantity is 60 g/m$^2$ is manufactured, and the 1,3-propene sultone (PRS) and the fluoroethylene carbonate (FEC) are each added in the electrolytic solution only at 0.5 wt.%, evaluation results in the case of variously changing a negative electrode composite density will be described.

Like Examples C41 to C42 indicated in Table 16, it has been found out that, when a negative electrode composite density is 0.7 g/cm$^3$ and 1.5 g/cm$^3$, the initial and after-storage output characteristics are improved as compared with Comparative Example C1 indicated in Table 19. In particular, it has been found out that although an energy density deteriorated in Example C41, a copper base material state of the negative electrode is satisfactory, and fractures of the copper base material decrease also in the case where a volume expansion and contraction of a negative electrode active material is large, and high output characteristics are kept even after storage, and a 3.0C discharged capacity after storage is enhanced as compared with Comparative Example C1.

As compared with this, from a review of Comparative Examples C7 to C9 indicated in Table 21, although the copper base material state was "O" when the negative electrode composite density was 0.5 g/cm$^3$, initial and after-storage output characteristics deteriorated as compared with Comparative Example C1. It is considered that this was caused because construction of a conductive path in a negative electrode active material was insufficient because the negative electrode composite density was low. On the other hand, in the case where the negative electrode composite density was 2.0 g/cm$^3$ or 2.2 g/cm$^3$, these were values exceeding critical density of an electrode made of amorphous (non-crystalline) carbon, and thus damages to the copper base material were also large, and the electrode manufacturing itself was difficult.

In consideration of the foregoing, it has been found out that, when amorphous (non-crystalline) carbon is used for a negative electrode active material, and additive amounts of the 1,3-propene sultone (PRS) and the fluoroethylene carbonate (FEC) are added in the electrolytic solution, higher performance of the lithium ion battery can be achieved by making the negative electrode composite density at 0.7 g/cm$^3$ or more and 1.5 g/cm$^3$ or less. In particular, in Table 16, although the cases in which an additive amount of each of the 1,3-propene sultone (PRS) and the fluoroethylene carbonate (FEC) was 0.5 wt.% are illustrated, according to an investigation by the inventors of the present invention, the same effect has been confirmed even in the case where an additive amount of each of the 1,3-propene sultone (PRS) and the fluoroethylene carbonate (FEC) was 0.1 wt.% to less than 10 wt.%.

Next, under a condition that a negative electrode composite in which graphite carbon is used for a negative electrode active material, a negative electrode composite density is 1.0 g/cm$^3$ is manufactured, and the 1,3-propene sultone (PRS) and the fluoroethylene carbonate (FEC) are each added in the electrolytic solution only at 0.5 wt.%, evaluation results in the case of variously changing a negative electrode composite application quantity will be described.

Like Examples C43 to C49 indicated in Table 17, it has been found out that, when the negative electrode composite application quantity is 40 g/m$^2$ to 100 g/m$^2$, higher capacity or higher output of the lithium ion battery is achievable as compared with Comparative Example C1 indicated in Table 19. Here, although the battery capacity deteriorated in contrast with Comparative Example C1 when the negative electrode composite application quantity was 40 g/m$^2$, output characteristics were improved, and furthermore, the battery capacity after storage was improved more than Comparative Example C1. On the other hand, when the negative electrode composite application quantity was 100

$g/m^2$, higher energy density was achievable and the battery capacity increased although output characteristics deteriorated, and a larger capacity than Comparative Example C1 was acquired even after storage.

However, like Comparative Example C10 indicated in Table 22, although acquiring higher energy density was possible when a negative electrode composite application quantity was 110 $g/m^2$, output characteristics deteriorated on the other hand. It is considered that this is also caused by an increase of the electrode resistance due to an increase of the negative electrode composite application quantity.

According to the foregoing, it has been found out that, when graphite carbon is used for the negative electrode active material and 1,3-propene sultone (PRS) and fluoroethylene carbonate (FEC) are added in the electrolytic solution, higher performance of the lithium ion battery can be achieved by making the negative electrode composite application quantity at 40 $g/m^2$ or more and 100 $g/m^2$ or less. In particular, in Table 17, although the cases in which the additive amount of each of the 1,3-propene sultone (PRS) and the fluoroethylene carbonate (FEC) was 0.5 wt.% are illustrated, according to an investigation by the inventors of the present invention, the same effect has been confirmed even in the case in which the additive amount of each of the 1,3-propene sultone (PRS) and the fluoroethylene carbonate (FEC) was 0.1 wt.% to less than 10 wt.%.

Subsequently, under a condition that a negative electrode composite in which graphite carbon is used for a negative electrode active material, and a negative electrode composite application quantity is 60 $g/m^2$ is manufactured and the 1,3-propene sultone (PRS) and the fluoroethylene carbonate (FEC) are each added in the electrolytic solution only at 0.5 wt.%, evaluation results in the case of variously changing a negative electrode composite density will be described.

Like Examples C50 to C53 indicated in Table 18, it has been found out that when a negative electrode composite density is 0.7 $g/cm^3$, 1.0 $g/cm^3$, 1.5 $g/cm^3$ and 2.0 $g/cm^3$, the 3.0C discharged capacity after storage is improved as compared with Comparative Example C1 indicated in Table 19. In particular, although the energy density deteriorated in the case in which a negative electrode composite density is 0.7 $g/cm^3$, damage to a copper base material is also little since the electrode density is low, and the possibility of electrode fracture can be reduced.

In contrast with this, from a review of Comparative Example C11 indicated in Table 23, although initial output characteristics improved more than Comparative Example C1 when the negative electrode composite density is 0.5 $g/cm^3$, output characteristics after storage deteriorated. It is considered that this is caused because construction of a conductive path in a negative electrode active material became insufficient because a negative electrode composite density was low. On the other hand, from a review of Comparative Example C12 indicated in Table 23, in the case in which the negative electrode composite density was 2.2 $g/cm^3$, this is a value exceeding critical density of an electrode made of graphite carbon, and damage to the copper base material was also large, and the electrode manufacturing itself was difficult.

Furthermore, according to Comparative Example C13 indicated in Table 24, it has been found out that, when a negative electrode composite density including graphite carbon is 1.5 $g/cm^3$ and the 1,3-propene sultone (PRS) and the fluoroethylene carbonate (FEC) are not added in the electrolytic solution, both of output characteristics and storage characteristics deteriorate although an initial 0.5C discharged capacity increased more than Comparative Example C1.

According to the foregoing, it has been found out that, when graphite carbon is used for the negative electrode active material and the 1,3-propene sultone (PRS) and the fluoroethylene carbonate (FEC) are added in the electrolytic solution, higher performance of the lithium ion battery is achievable by making the negative electrode composite density at 0.7 $g/cm^3$ or more and 2.0 $g/cm^3$ or less. In particular, in Table 18, although the cases in which an additive amount of each of the 1,3-propene sultone (PRS) and the fluoroethylene carbonate (FEC) was 0.5 wt.% are illustrated, according to an investigation by the inventors of the present invention, the same effect has been confirmed even in the case in which an additive amount of each of the 1,3-propene sultone (PRS) and the fluoroethylene carbonate (FEC) was 0.1 wt.% to less than 10 wt.%.

Note that, in Example C, as an electrolytic solution, used was one in which lithium hexafluorophosphate ($LiPF_6$) is dissolved by 1.2 mol/L into a mixed solution having a volume ratio 2:3:2 of ethylene carbonate, dimethyl carbonate and ethyl methyl carbonate, and however, a technical idea of the present invention is applicable also to an electrolytic solution having a composition other than this. That is, as for the technical idea of the invention in the present application, there is the feature in the point of including at least one of the 1,3-propene sultone (PRS) and the fluoroethylene carbonate (FEC) in an additive added to an electrolytic solution, and when such an additive is used on the above-mentioned addition condition (wt.% to an electrolytic solution), an effect can be acquired without particular regard to a composition of an electrolytic solution. The reason is that the technical idea of the invention in the present application has been accomplished based on the formation of a coating having high resistance and high permeability on a negative electrode surface by an additive.

As mentioned above, in Example A, evaluated was discharging characteristics and the safety of the lithium ion battery in which the positive electrode composite density, the positive electrode composite application quantity, and the weight ratio (NMC/sp-Mn) of the layered lithium nickel manganese cobalt composite oxide (NMC) and the spinel type lithium manganese oxide (sp-Mn) were varied. As a result, it has been found out that, by making the battery such that the lithium ion battery in which the discharged capacity is 30 Ah or more and less than 100 Ah, the positive electrode composite density is 2.4 to 2.7 $g/cm^3$, the positive electrode composite application quantity is 175 to 250 $g/m^2$, and the weight ratio (NMC/sp-Mn) of active materials is 10/90 to 60/40, the battery having high battery capacity, and being excellent in output characteristics and the volume energy density and capable of guaranteeing the safety can be acquired.

Regarding the positive electrode structure like this, the inventors of the present invention investigated also the negative electrode structure, and consequently, results of the investigation indicated in the following were acquired. That is, in contrast with the above-mentioned positive electrode structure, from a viewpoint of performance improvement of the lithium ion battery, the negative electrode has a structure in which a negative electrode composite containing carbon is applied to both sides of the current collector. Then, it became clear that it is preferable that a density of the negative electrode composite is 0.7 $g/cm^3$ or more and 2.0 $g/cm^3$ or less, and an application quantity of the negative electrode composite is 40 $g/m^2$ or more and 100 $g/m^2$ or less. It is because, when the density of the negative electrode composite exceeds 2.0 $g/cm^3$, negative electrode active material particles are destroyed, and the possibility of causing an increase of an initial irreversible capacity and a deterioration of high current density charging characteristics due to a deterioration of the electrolytic solution permeability into a vicinity of an interface between the current collector and the negative electrode active material will increase. On the other hand, it is because, when the density of the negative electrode composite becomes less than 0.7 $g/cm^3$, the possibility that conductivity between negative electrode active materials deteriorates and that capacity per unit volume deteriorates while a battery resistance increases may increase. In addition, it is because, when the application quantity of the negative electrode composite becomes lower than 40 $g/m^2$, the possibility that collectability of lithium ions in the negative electrode deteriorates during charging and that lithium is deposited on a negative electrode surface may increase. On the other hand, it is because, when the application quantity of the negative electrode composite exceeds 100 $g/m^2$, the possibility that reactivity with nonaqueous electrolytic solution may increase, and that a generated gas in a vicinity of the negative electrode may increase.

Then, the inventors of the present invention have advanced their investigation also regarding an additive added in the electrolytic solution, and it has become clear as a result that, regarding the lithium ion battery, a higher output and a longer life are further achievable. Hereinafter, the experimental results will be described based on Example D.

[Example D]

In Example D, as an electrolytic solution, used was one in which lithium hexafluorophosphate ($LiPF_6$) is dissolved at 1.2 mol/L into a mixed solution having a volume ratio 2:3:2 of ethylene carbonate, dimethyl carbonate and ethyl methyl carbonate.

[Evaluation of Battery Characteristics (initial discharging characteristics at various rates and life characteristics)]

Battery characteristics of the lithium ion battery manufactured in this way were evaluated by a method described in the following.

Regarding the manufactured lithium ion battery, diphenyl sulfide and LiBOB were added in the electrolytic solution, and initial discharging characteristics at various rates and life characteristics of the lithium ion battery in which each additive amount was varied were evaluated.

In an initial discharging test at various rates, first, charging and discharging cycles at a current value of 0.5C was repeated twice under an environment of 25°C in a voltage range of 4.2 to 2.7 V. Furthermore, after charging the lithium ion battery up to 4.2 V, discharging based on constant current discharging was performed to a final voltage of 2.7 V at each current value of current values of 0.5C and 3.0C.

In addition, as for life characteristics, storage for 30 days was carried out at a battery voltage 4.2 V and an environmental temperature of 50°C after the discharging test at various rates was performed, and thereafter, the discharging test at various rates was performed under the same conditions as those before the storage, and discharged capacities before and after the storage were compared.

(Examples D1 to D35)

A negative electrode composite in which amorphous (non-crystalline) carbon was used for a negative electrode active material, and a negative electrode composite density was 1.0 $g/cm^3$ was manufactured, and a battery was manufactured such that a negative electrode composite application quantity was 60 $g/m^2$, and an additive amount (wt.%) of each of diphenyl sulfide and LiBOB to an electrolytic solution was changed from 0 wt.% to 5 wt.%. Regarding the battery, a diameter of a winding group was 65 mm, an outer diameter was 67 mm, and an inner diameter was 66 mm. Furthermore, discharging characteristics (battery capacity (Ah)) at various rates (0.5C and 3.0C), a volume energy density (Wh/L) at the time of 0.5C, output characteristics (3.0C discharged capacity/0.5C discharged capacity), and life characteristics (battery capacity (Ah) after storage) were evaluated. The evaluation results are indicated in Table 25.

(Examples D36 to D40)

A negative electrode composite in which amorphous (non-crystalline) carbon was used for a negative electrode active material, and the negative electrode composite density was 1.0 g/cm$^3$ was manufactured, and a battery was manufactured such that diphenyl sulfide and LiBOB were each added in the electrolytic solution only at 0.5 wt.%, and regarding the battery, the diameter of the winding group was 65 mm, the outer diameter was 67 mm, and the inner diameter was 66 mm. Here, an electrode having an application quantity differing in the range from 50 to 100 g/m$^2$ in negative electrode composite application quantity was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 26.

(Examples D41 to D42)

A battery was manufactured such that negative electrode composite in which amorphous (non-crystalline) carbon was used for the negative electrode active material, and a negative electrode composite application quantity was 60 g/m$^2$, and diphenyl sulfide and LiBOB were each added in the electrolytic solution only at 0.5 wt.%, and regarding the battery, the diameter of the winding group was 65 mm, the outer diameter was 67 mm, and the inner diameter was 66 mm. Here, an electrode having a density differing in the range from 0.7 to 1.5 g/cm$^3$ in a negative electrode composite density was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 27.

(Examples D43 to D49)

A negative electrode composite where graphite carbon was used for a negative electrode active material, and a negative electrode composite density was 1.0 g/cm$^3$ was manufactured, and the battery was manufactured such that diphenyl sulfide and LiBOB were each added to an electrolytic solution only at 0.5 wt.%, and regarding the battery, the diameter of the winding group was 65 mm, the outer diameter was 67 mm, and the inner diameter was 66 mm. At this time, an electrode having an application quantity differing in the range from 40 to 100 g/m$^2$ in a negative electrode composite application quantity was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 28.

(Examples D50 to D53)

A battery was manufactured such that a negative electrode composite in which graphite carbon was used for a negative electrode active material, and a negative electrode composite application quantity was 60 g/m$^2$, and diphenyl sulfide and LiBOB were each added to an electrolytic solution only at 0.5 wt.%, and regarding the battery, the diameter of the winding group was 65 mm, the outer diameter was 67 mm, and the inner diameter was 66 mm. At this time, an electrode having a density differing in the range from 0.7 to 2.0 g/cm$^3$ in negative electrode composite density was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 29.

(Example D54)

A battery was manufactured such that, as an electrolytic solution, used was one in which lithium hexafluoro-phosphate (LiPF$_6$) is dissolved at 1.2 mol/L into a mixed solution having a volume ratio 1:2 of ethylene carbonate and ethyl methyl carbonate, and diphenyl sulfide was added at 0.5 wt.% to this electrolytic solution. Here, a diameter of a winding group was 65 mm, an outer diameter was 67 mm, and an inner diameter was 66 mm. In the battery manufactured in this way, discharging characteristics (battery capacity (Ah)) at various rates (0.5C and 3.0C), a volume energy density (Wh/L) at the time of 0.5C, output characteristics (3.0C discharged capacity/0.5C discharged capacity), and life characteristics (battery capacity (Ah) after storage) were evaluated. Evaluation results are indicated in Table 30.

(Example D55)

A battery was manufactured such that, as an electrolytic solution, used was one in which lithium hexafluorophosphate ($LiPF_6$) is dissolved at 1.2 mol/L into a mixed solution having a volume ratio 1:1:1 of ethylene carbonate, dimethyl carbonate and ethyl methyl carbonate, and diphenyl sulfide was added by 0.5 wt.% to this electrolytic solution. Here, a diameter of a winding group was 65 mm, an outer diameter was 67 mm, and an inner diameter was 66 mm. In the battery manufactured in this way, discharging characteristics (battery capacity (Ah)) at various rates (0.5C and 3.0C), a volume energy density (Wh/L) at the time of 0.5C, output characteristics (3.0C discharged capacity/0.5C discharged capacity), and life characteristics (battery capacity (Ah) after storage) were evaluated. Evaluation results are indicated in Table 31.

(Comparative Examples D1 to D4)

A battery was manufactured such that a negative electrode composite in which amorphous (non-crystalline) carbon was used for a negative electrode active material, and a negative electrode composite density was 1.0 g/cm$^3$, and a negative electrode composite application quantity was 60 g/m$^2$, and the additive amount (wt.%) of each of diphenyl sulfide and LiBOB to an electrolytic solution was changed to 0 wt.% and 10 wt.%. Regarding the battery, the diameter of the winding group was 65 mm, the outer diameter was 67 mm, and the inner diameter was 66 mm. Furthermore, discharging characteristics (battery capacity (Ah)) at various rates (0.5C and 3.0C), a volume energy density (Wh/L) at the time of 0.5C, output characteristics (3.0C discharged capacity/0.5C discharged capacity), and life characteristics (battery capacity (Ah) after storage) were evaluated. The evaluation results are indicated in Table 32.

(Comparative Examples D5 to D6)

A negative electrode composite was manufactured such that amorphous (non-crystalline) carbon was used for a negative electrode active material, and a negative electrode composite density was 1.0 g/cm$^3$, and a battery was manufactured such that diphenyl sulfide and LiBOB were each added to an electrolytic solution only at 0.5 wt.%, and regarding the battery, the diameter of the winding group was 65 mm, the outer diameter was 67 mm, and the inner diameter was 66 mm. Here, an electrode in which a negative electrode composite application quantity was 40 g/m$^2$ and 110 g/m$^2$ was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 33.

(Comparative Examples D7 to D9)

A negative electrode composite in which amorphous (non-crystalline) carbon was used for a negative electrode active material, and a negative electrode composite application quantity was 60 g/m$^2$ was manufactured, and a battery was manufactured such that diphenyl sulfide and LiBOB were each added to an electrolytic solution only at 0.5 wt.%, and regarding the battery, the diameter of the winding group was 65 mm, the outer diameter was 67 mm, and the inner diameter was 66 mm. Here, an electrode having a density differing in the range from 0.5 to 2.2 g/cm$^3$ in a negative electrode composite density was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 34.

(Comparative Example D10)

A negative electrode composite was manufactured such that graphite carbon was used for a negative electrode active material, and a negative electrode composite density was 1.0 g/cm$^3$, and a battery was manufactured where diphenyl sulfide and LiBOB were each added to an electrolytic solution only at 0.5 wt.%, and regarding the battery, the diameter of the winding group was 65 mm, the outer diameter was 67 mm, and the inner diameter was 66 mm. Here, an electrode in which a negative electrode composite application quantity was 110 g/m$^2$ was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 35.

(Comparative Examples D11 to D12)

A negative electrode composite in which graphite carbon was used for a negative electrode active material, and a negative electrode composite application quantity was 60 g/m² was manufactured, and a battery was manufactured such that diphenyl sulfide and LiBOB were each added to an electrolytic solution only at 0.5 wt.%, and regarding the battery, the diameter of the winding group was 65 mm, the outer diameter was 67 mm, and the inner diameter was 66 mm. Here, an electrode having a density where a negative electrode composite density was 0.5 g/m³ and 2.2 g/m³ was manufactured, and discharging characteristics (battery capacity (Ah)) at various rates (0.5C and 3.0C), a volume energy density (Wh/L) at the time of 0.5C, output characteristics (3.0C discharged capacity/0.5C discharged capacity), life characteristics (battery capacity (Ah) after storage), and a copper base material state were evaluated. Evaluation results are indicated in Table 36.

(Comparative Example D13)

A negative electrode composite was manufactured such that graphite carbon was used for a negative electrode active material, a negative electrode composite density was 1.5 g/cm³ and a negative electrode composite application quantity was 60 g/m², and the battery was manufactured such that diphenyl sulfide and LiBOB were not added to an electrolytic solution. Regarding the battery, the diameter of the winding group was 65 mm, the outer diameter was 67 mm, and the inner diameter was 66 mm. Furthermore, discharging characteristics (battery capacity (Ah)) at various rates (0.5C and 3.0C), output characteristics (3.0C discharged capacity/0.5C discharged capacity), and life characteristics (battery capacity (Ah) after storage) were evaluated. Results of the evaluation are indicated in Table 37.

(Comparative Example D14)

A battery was manufactured such that, as an electrolytic solution, used was one in which lithium hexafluorophosphate (LiPF$_6$) is dissolved at 1.2 mol/L into a mixed solution having a volume ratio 1:2 of ethylene carbonate and ethyl methyl carbonate, and diphenyl sulfide was not added to this electrolytic solution. Here, the diameter of the winding group was 65 mm, the outer diameter was 67 mm, and the inner diameter was 66 mm. Regarding the battery manufactured in this way, discharging characteristics (battery capacity (Ah)) at various rates (0.5C and 3.0C), a volume energy density (Wh/L) at the time of 0.5C, output characteristics (3.0C discharged capacity/0.5C discharged capacity), and life characteristics (battery capacity (Ah) after storage) were evaluated. Evaluation results are indicated in Table 38.

(Comparative Example D15)

Manufactured was the battery where as an electrolytic solution, used was one in which lithium hexafluorophosphate (LiPF$_6$) is dissolved by 1.2 mol/L into a mixed solution having a volume ratio 1:1:1 of ethylene carbonate, dimethyl carbonate and ethyl methyl carbonate, and diphenyl sulfide was not added to this electrolytic solution. Here, the diameter of the winding group was 65 mm, the outer diameter was 67 mm, and the inner diameter was 66 mm. Regarding the battery manufactured in this way, discharging characteristics (battery capacity (Ah)) at various rates (0.5C and 3.0C), a volume energy density (Wh/L) at the time of 0.5C, output characteristics (3.0C discharged capacity/0.5C discharged capacity), and life characteristics (battery capacity (Ah) after storage) were evaluated. Evaluation results are indicated in Table 39.

[Table 25]

| Example | Negative electrode composite density (g/cm³) | Application quantity of negative electrode composite (g/cm²) | Addition quantity of diphenyl sulfide (wt.%) | Addition quantity of LiBOB (wt.%) | Battery capacity (Ah) | | Output characteristics (%) | Battery capacitance after storage (Ah) | | Output characteristics (%) | Energy density (Wh/L) |
|---|---|---|---|---|---|---|---|---|---|---|---|
| | | | | | @0.5C | @3.0C | | @0.5C | @3.0C | | |
| D1 | 1 | 60 | 0.1 | 0 | 90 | 82 | 91 | 73 | 62 | 85 | 231 |
| D2 | 1 | 60 | 0.3 | 0 | 90 | 85 | 94 | 73 | 65 | 89 | 231 |
| D3 | 1 | 60 | 0.5 | 0 | 90 | 86 | 96 | 73 | 65 | 89 | 231 |
| D4 | 1 | 60 | 3 | 0 | 90 | 84 | 93 | 73 | 64 | 88 | 231 |
| D5 | 1 | 60 | 5 | 0 | 90 | 80 | 89 | 73 | 60 | 82 | 231 |
| D6 | 1 | 60 | 0 | 0.1 | 90 | 77 | 86 | 78 | 63 | 81 | 231 |
| D7 | 1 | 60 | 0.1 | 0.1 | 90 | 82 | 91 | 78 | 67 | 86 | 231 |
| D8 | 1 | 60 | 0.3 | 0.1 | 90 | 86 | 96 | 78 | 70 | 90 | 231 |
| D9 | 1 | 60 | 0.5 | 0.1 | 90 | 85 | 94 | 78 | 70 | 90 | 231 |
| D10 | 1 | 60 | 3 | 0.1 | 90 | 84 | 93 | 78 | 69 | 88 | 231 |
| D11 | 1 | 60 | 5 | 0.1 | 90 | 80 | 89 | 78 | 66 | 85 | 231 |
| D12 | 1 | 60 | 0 | 0.3 | 90 | 78 | 87 | 79 | 66 | 83 | 231 |
| D13 | 1 | 60 | 0.1 | 0.3 | 90 | 83 | 92 | 79 | 71 | 90 | 231 |
| D14 | 1 | 60 | 0.3 | 0.3 | 90 | 85 | 94 | 79 | 73 | 92 | 231 |
| D15 | 1 | 60 | 0.5 | 0.3 | 90 | 86 | 96 | 79 | 73 | 92 | 231 |
| D16 | 1 | 60 | 3 | 0.3 | 90 | 84 | 93 | 79 | 72 | 91 | 231 |
| D17 | 1 | 60 | 5 | 0.3 | 90 | 81 | 90 | 79 | 69 | 87 | 231 |
| D18 | 1 | 60 | 0 | 0.5 | 90 | 77 | 86 | 81 | 68 | 84 | 231 |
| D19 | 1 | 60 | 0.1 | 0.5 | 90 | 82 | 91 | 81 | 73 | 90 | 231 |
| D20 | 1 | 60 | 0.3 | 0.5 | 90 | 85 | 94 | 81 | 76 | 94 | 231 |
| D21 | 1 | 60 | 0.5 | 0.5 | 90 | 86 | 96 | 81 | 77 | 95 | 231 |
| D22 | 1 | 60 | 3 | 0.5 | 90 | 84 | 93 | 81 | 75 | 93 | 231 |
| D23 | 1 | 60 | 5 | 0.5 | 90 | 80 | 89 | 81 | 71 | 88 | 231 |
| D24 | 1 | 60 | 0 | 3 | 90 | 78 | 87 | 80 | 67 | 84 | 231 |
| D25 | 1 | 60 | 0.1 | 3 | 90 | 83 | 92 | 80 | 72 | 90 | 231 |
| D26 | 1 | 60 | 0.3 | 3 | 90 | 84 | 93 | 80 | 72 | 90 | 231 |
| D27 | 1 | 60 | 0.5 | 3 | 90 | 85 | 94 | 80 | 73 | 91 | 231 |
| D28 | 1 | 60 | 3 | 3 | 90 | 84 | 93 | 80 | 72 | 90 | 231 |
| D29 | 1 | 60 | 5 | 3 | 90 | 81 | 90 | 80 | 70 | 87 | 231 |
| D30 | 1 | 60 | 0 | 5 | 90 | 77 | 86 | 77 | 63 | 81 | 231 |
| D31 | 1 | 60 | 0.1 | 5 | 90 | 81 | 90 | 77 | 67 | 87 | 231 |
| D32 | 1 | 60 | 0.3 | 5 | 90 | 84 | 93 | 77 | 69 | 89 | 231 |
| D33 | 1 | 60 | 0.5 | 5 | 90 | 85 | 94 | 77 | 70 | 90 | 231 |
| D34 | 1 | 60 | 3 | 5 | 90 | 83 | 92 | 77 | 68 | 88 | 231 |
| D35 | 1 | 60 | 5 | 5 | 90 | 79 | 88 | 77 | 65 | 84 | 231 |

[Table 26]

| Example | Negative electrode composite density (g/cm³) | Application quantity of negative electrode composite (g/cm²) | Addition quantity of diphenyl sulfide (wt%) | Addition quantity of LiBOB (wt%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5 C | @3.0 C | | @0.5 C | @3.0 C | | | |
| D36 | 1 | 50 | 0.5 | 0.5 | 85 | 82 | 96 | 75 | 71 | 94 | ◯ | 219 |
| D37 | 1 | 70 | 0.5 | 0.5 | 92 | 84 | 91 | 84 | 74 | 88 | ◯ | 237 |
| D38 | 1 | 80 | 0.5 | 0.5 | 95 | 81 | 86 | 83 | 70 | 84 | ◯ | 243 |
| D39 | 1 | 90 | 0.5 | 0.5 | 96 | 78 | 81 | 83 | 66 | 79 | ◯ | 247 |
| D40 | 1 | 100 | 0.5 | 0.5 | 98 | 75 | 75 | 81 | 61 | 75 | ◯ | 253 |

[Table 27]

| Example | Negative electrode composite density (g/cm³) | Application quantity of negative electrode composite (g/cm²) | Addition quantity of diphenyl sulfide (wt%) | Addition quantity of LiBOB (wt%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5 C | @3.0 C | | @0.5 C | @3.0 C | | | |
| D41 | 0.7 | 60 | 0.5 | 0.5 | 79 | 76 | 96 | 70 | 61 | 87 | ◯ | 203 |
| D42 | 1.5 | 60 | 0.5 | 0.5 | 101 | 95 | 94 | 94 | 86 | 92 | ◯ | 259 |

[Table 28]

| Example | Negative electrode composite density (g/cm³) | Application quantity of negative electrode composite (g/cm²) | Addition quantity of diphenyl sulfide (wt%) | Addition quantity of LiBOB (wt%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| D43 | 1 | 40 | 0.5 | 0.5 | 82 | 77 | 94 | 72 | 65 | 90 | ◯ | 210 |
| D44 | 1 | 50 | 0.5 | 0.5 | 88 | 84 | 95 | 78 | 71 | 91 | ◯ | 226 |
| D45 | 1 | 60 | 0.5 | 0.5 | 92 | 88 | 96 | 84 | 76 | 90 | ◯ | 237 |
| D46 | 1 | 70 | 0.5 | 0.5 | 96 | 84 | 88 | 87 | 73 | 84 | ◯ | 246 |
| D47 | 1 | 80 | 0.5 | 0.5 | 99 | 83 | 84 | 87 | 69 | 79 | ◯ | 254 |
| D48 | 1 | 90 | 0.5 | 0.5 | 101 | 78 | 77 | 87 | 62 | 71 | ◯ | 259 |
| D49 | 1 | 100 | 0.5 | 0.5 | 103 | 75 | 73 | 85 | 58 | 68 | ◯ | 264 |

[Table 29]

| Example | Negative electrode composite density (g/cm³) | Application quantity of negative electrode composite (g/cm²) | Addition quantity of diphenyl sulfide (wt.%) | Addition quantity of LiBOB (wt.%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| D50 | 0.7 | 60 | 0.5 | 0.5 | 80 | 74 | 93 | 68 | 58 | 85 | ○ | 206 |
| D51 | 1 | 60 | 0.5 | 0.5 | 92 | 88 | 95 | 81 | 72 | 88 | ○ | 237 |
| D52 | 1.5 | 60 | 0.5 | 0.5 | 102 | 94 | 93 | 92 | 84 | 91 | ○ | 261 |
| D53 | 2 | 60 | 0.5 | 0.5 | 112 | 103 | 92 | 100 | 89 | 89 | ○ | 288 |

[Table 30]

| Example | Negative electrode composite density (g/cm³) | Application quantity of negative electrode composite (g/cm²) | Addition quantity of diphenyl sulfide (wt.%) | Battery capacity (Ah) | | Output characteristics (%) | Battery capacitance after storage (Ah) | | Output characteristics (%) | Energy density (Wh/L) |
|---|---|---|---|---|---|---|---|---|---|---|
| | | | | @0.5C | @3.0C | | @0.5C | @3.0C | | |
| D54 | 1.0 | 60 | 0.5 | 90 | 85 | 94 | 73 | 64 | 88 | 232 |

[Table 31]

| Example | Negative electrode composite density (g/cm³) | Application quantity of negative electrode composite (g/cm²) | Addition quantity of diphenyl sulfide (wt.%) | Battery capacity (Ah) | | Output characteristics (%) | Battery capacitance after storage (Ah) | | Output characteristics (%) | Energy density (Wh/L) |
|---|---|---|---|---|---|---|---|---|---|---|
| | | | | @0.5C | @3.0C | | @0.5C | @3.0C | | |
| D55 | 1.0 | 60 | 0.5 | 90 | 85 | 94 | 73 | 65 | 89 | 232 |

[Table 32]

| Comparative Example | Negative electrode composite density (g/cm³) | Application quantity of negative electrode composite (g/cm²) | Addition quantity of diphenyl sulfide (wt.%) | Addition quantity of LiBOB (wt.%) | Battery capacity (Ah) | | Output characteristics (%) | Battery capacitance after storage (Ah) | | Output characteristics (%) | Energy density (Wh/L) |
|---|---|---|---|---|---|---|---|---|---|---|---|
| | | | | | @0.5C | @3.0C | | @0.5C | @3.0C | | |
| D1 | 1 | 60 | 0 | 0 | 90 | 78 | 87 | 73 | 60 | 82 | 231 |
| D2 | 1 | 60 | 10 | 0 | 86 | 75 | 87 | 70 | 48 | 69 | 222 |
| D3 | 1 | 60 | 0 | 10 | 86 | 74 | 86 | 71 | 50 | 70 | 222 |
| D4 | 1 | 60 | 10 | 10 | 86 | 72 | 84 | 69 | 47 | 68 | 220 |

[Table 33]

| Comparative Example | Negative electrode composite density (g/cm³) | Application quantity of negative electrode composite (g/cm²) | Addition quantity of diphenyl sulfide (wt.%) | Addition quantity of LiBOB (wt.%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| D5 | 1 | 40 | 0.5 | 0.5 | 80 | 76 | 94 | 70 | 64 | 92 | × | 207 |
| D6 | 1 | 110 | 0.5 | 0.5 | 99 | 69 | 70 | 77 | 52 | 68 | ○ | 255 |

[Table 34]

| Comparative Example | Negative electrode composite density (g/cm³) | Application quantity of negative electrode composite (g/cm²) | Addition quantity of diphenyl sulfide (wt.%) | Addition quantity of LiBOB (wt.%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| D7 | 0.5 | 60 | 0.5 | 0.5 | 68 | 61 | 90 | 58 | 45 | 78 | ○ | 175 |
| D8 | 2 | 60 | 0.5 | 0.5 | – | – | – | – | – | – | × | – |
| D9 | 2.2 | 60 | 0.5 | 0.5 | – | – | – | – | – | – | × | – |

[Table 35]

| Comparative Example | Negative electrode composite density (g/cm³) | Application quantity of negative electrode composite (g/cm²) | Addition quantity of diphenyl sulfide (wt.%) | Addition quantity of LiBOB (wt%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| D10 | 1 | 110 | 0.5 | 0.5 | 104 | 68 | 65 | 80 | 48 | 60 | × | 267 |

[Table 36]

| Comparative Example | Negative electrode composite density (g/cm³) | Application quantity of negative electrode composite (g/cm²) | Addition quantity of diphenyl sulfide (wt.%) | Addition quantity of LiBOB (wt%) | Battery capacity (Ah) | | Output characteristics (%) | Battery capacitance after storage (Ah) | | Output characteristics (%) | State of copper base material | Energy density (Wh/L) |
|---|---|---|---|---|---|---|---|---|---|---|---|---|
| | | | | | @0.5C | @3.0C | | @0.5C | @3.0C | | | |
| D11 | 0.5 | 60 | 0.5 | 0.5 | 68 | 59 | 87 | 54 | 42 | 79 | ○ | 175 |
| D12 | 2.2 | 60 | 0.5 | 0.5 | — | — | — | — | — | — | × | — |

[Table 37]

| Comparative Example | Negative electrode composite density (g/cm³) | Application quantity of negative electrode composite (g/cm²) | Addition quantity of diphenyl sulfide (wt.%) | Addition quantity of LiBOB (wt%) | Battery capacity (Ah) | | Output characteristics (%) | Battery capacitance after storage (Ah) | | Output characteristics (%) |
|---|---|---|---|---|---|---|---|---|---|---|
| | | | | | @0.5C | @3.0C | | @0.5C | @3.0C | |
| D13 | 1.5 | 60 | 0 | 0 | 102 | 78 | 76 | 83 | 58 | 70 |

[Table 38]

| Comparative Example | Negative electrode composite density (g/cm³) | Application quantity of negative electrode composite (g/cm²) | Addition quantity of diphenyl sulfide (wt.%) | Battery capacity (Ah) | | Output characteristics (%) | Battery capacitance after storage (Ah) | | Output characteristics (%) | Energy density (Wh/L) |
|---|---|---|---|---|---|---|---|---|---|---|
| | | | | @0.5C | @3.0C | | @0.5C | @3.0C | | |
| D14 | 1.0 | 60 | 0 | 90 | 77 | 86 | 73 | 60 | 82 | 232 |

[Table 39]

| Comparative Example | Negative electrode composite density (g/cm³) | Application quantity of negative electrode composite (g/cm²) | Addition quantity of diphenyl sulfide (wt.%) | Battery capacity (Ah) | | Output characteristics (%) | Battery capacitance after storage (Ah) | | Output characteristics (%) | Energy density (Wh/L) |
|---|---|---|---|---|---|---|---|---|---|---|
| | | | | @0.5C | @3.0C | | @0.5C | @3.0C | | |
| D15 | 1.0 | 60 | 0 | 90 | 78 | 87 | 73 | 61 | 83 | 232 |

<Comparison of Examples with Comparative Examples>

When Examples D1 to D5 indicated in Table 25 and Comparative Example D1 indicated in Table 32 are compared, it has been found out that, by adding diphenyl sulfide into an electrolytic solution at 0.1 wt.%, 0.3 wt.%, 0.5 wt.%, 3 wt.% , or 5 wt.%, the 3.0C discharged capacity and output characteristics as initial discharging characteristics at various rates were improved in the cases of Examples D1 to D5. That is, it has been found out that, as compared with Comparative Example D1 where the diphenyl sulfide is not added in the electrolytic solution, the 3.0C discharged capacity and output characteristics are able to be enhanced by adding the diphenyl sulfide of 0.1 wt.% to 5 wt.% to the electrolytic solution like Examples D1 to D5. However, as indicated in Comparative Example D2, it has been found out that, when the diphenyl sulfide is added alone to the electrolytic solution at about 10 wt.%, the 3.0C discharged capacity deteriorates as compared with Comparative Example D1. From this finding, it has been found out that although the 3.0C discharged capacity and output characteristics can be improved by adding the diphenyl sulfide to the electrolytic solution, when the additive amount is increased, the 3.0C discharged capacity is deteriorated on the contrary. This is because, first, when the diphenyl sulfide is added in the electrolytic solution, since a coating having high resistance and high permeability (permeability of lithium ions) is formed on the surface of the negative electrode, longer life and improved output characteristics of the lithium ion battery can be achieved. However, when the diphenyl sulfide is added excessively, it is considered that the coating formed on the negative electrode interface becomes thick, and furthermore, the viscosity of the electrolytic solution rises, increasing an internal resistance of the lithium ion battery, and thus deterioration of output characteristics is caused. Therefore, an additive amount of the diphenyl sulfide to be added in the electrolytic solution is required to be within the specific range from a viewpoint of performance improvement of the lithium ion battery. Specifically, it has been found out that, by adding the diphenyl sulfide to the electrolytic solution in the range of 0.1 wt.% or more and less than 10 wt.%, the 3.0C discharged capacity and output characteristics can be improved. Furthermore, as indicated in Table 25, it has been found out that adding the diphenyl sulfide to the electrolytic solution in the range of 0.5 wt.% or more and 3 wt.% or less is preferred from a viewpoint of improving the 3.0C discharged capacity and output characteristics.

Subsequently, when Examples D6, D12, D18, D24 and D30 indicated in Table 25 are compared with Comparative Example D1 indicated in Table 32, it has been found out that, by adding LiBOB to the electrolytic solution at 0.1 wt.%, 0.3 wt.%, 0.5 wt.%, 3 wt.%, or 5 wt.%, deterioration of a 0.5C discharged capacity is suppressed, and furthermore, deterioration of output characteristics is also suppressed even after storage for 30 days at a battery voltage of 4.2 V and an environmental temperature of 50°C in the case of Examples D6, D12, D18, D24 and D30. That is, as compared with Comparative Example D1 in which LiBOB is not added in the electrolytic solution, it has been found out that life characteristics can be improved by adding LiBOB of 0.1 wt.% to 5 wt.% to the electrolytic solution like Examples D6, D12, D18, D24 and D30. However, as indicated in Comparative Example D3, it has been found out that, when LiBOB is added alone to the electrolytic solution at about 10 wt.%, life characteristics deteriorate as compared with Comparative Example D1. From this finding, it has been found out that although life characteristics can be improved by adding LiBOB to the electrolytic solution, when the additive amount is increased, life characteristics are deteriorated on the contrary. This is because, first, when LiBOB is added in the electrolytic solution, since a coating having high resistance and high permeability (permeability of lithium ions) is formed on the surface of the negative electrode, improving life characteristics in the lithium ion battery can achieved. However, when LiBOB is added excessively, it is considered that the coating formed on the negative electrode interface becomes thick, and furthermore, the viscosity of the electrolytic solution rises, and thereby, an internal resistance of the lithium ion battery increases, and deterioration of output characteristics is caused. Therefore, an additive amount of LiBOB to be added in the electrolytic solution is needed to be within the specific range from a viewpoint of performance improvement of the lithium ion battery. Specifically, it has been found out that by adding LiBOB to the electrolytic solution in the range of 0.1 wt.% or more and less than 10 wt.%, the life characteristics are able to be enhanced. Furthermore, as indicated in Table 25, it has been found out that adding LiBOB to the electrolytic solution in the range of 0.5 wt.% or more and 3 wt.% or less is desirable from a viewpoint of improving the life characteristics.

Furthermore, when Examples indicated in Table 25: D7 to D11, D13 to D17, D19 to D23, D25 to D29, D31 to D35 are compared with Comparative Example D1 indicated in Table 32, it has been found out that, by adding each of the diphenyl sulfide and LiBOB (at 0.1 wt.% or more and 5 wt.% or less for each) to the electrolytic solution of Comparative Example D1 where an additive is not included, initial discharging characteristics at various rates and discharging characteristics at various rates after storage are improved together. On the other hand, as indicated in Comparative Example D4 in Table 32, when the diphenyl sulfide and LiBOB were each added by 10 wt.%, it has been found out that the 0.5C discharged capacity and the 3.0C discharged capacity deteriorate more than Comparative Example D1 due to an increase of the internal resistance resulting from a thick coating and a rise of the viscosity of the electrolytic solution.

According to the foregoing, it has been found out that, by configuring the lithium ion battery so that an additive containing at least one of diphenyl sulfide and LiBOB are included in the electrolytic solution and that the additive is contained in the electrolytic solution at a percentage of 0.1 wt.% or more and less than 10 wt.%, life characteristics and output characteristics of the lithium ion battery can be improved. In addition, it has been found out that, by constituting the lithium ion battery so that an additive containing diphenyl sulfide and LiBOB is contained in the electrolytic solution and that the additive is included in the electrolytic solution at a percentage of 0.2 wt.% or more and 10 wt.% or less, life characteristics and output characteristics of the lithium ion battery can be improved.

Next, under a condition that a negative electrode composite in which amorphous (non-crystalline) carbon is used for a negative electrode active material and a negative electrode composite density is 1.0 g/cm$^3$ is manufactured, and that diphenyl sulfide and LiBOB are each added in the electrolytic solution only at 0.5 wt.%, evaluation results in the case of variously changing a negative electrode composite application quantity will be described.

Like Examples D36 to D40 indicated in Table 26, it has been found out that a higher capacity of the lithium ion battery or a higher output thereof are achievable as compared with Comparative Example D1 indicated in Table 32 when a negative electrode composite application quantity is 50 g/m$^2$ to 100 g/m$^2$. Here, when a negative electrode composite application quantity was 50 g/m$^2$, although the initial 0.5C discharged capacity deteriorated a little and thee energy density deteriorated, the battery capacity after storage increased more than Comparative Example D1. On the other hand, when the negative electrode composite application quantity was 100 g/m$^2$, it has been found out that although output characteristics deteriorated, larger battery capacity than Comparative Example D1 was indicated even after storage by an increase of the capacity of the lithium ion battery.

However, like Comparative Example D5 indicated in Table 33, although output characteristics was enhanced when a negative electrode composite application quantity was 40 g/m$^2$, a battery capacity was small, and a 0.5C discharged capacity after storage deteriorated rather than Comparative Example D1. In addition, as indicated in Comparative Example D6 indicated in Table 33, when a negative electrode composite application quantity was 110 g/m$^2$, although a battery capacity increased, the initial and after-storage output characteristics deteriorated. It is considered that this was caused by that an electrode resistance became high because a negative electrode composite application quantity increased.

Note that the copper base material state in Table 26 and Table 33 means damage exerted on the copper base material in an electrode manufacturing press process evaluated, and in the table, when there is no distortion by the press, "O" is denoted, and when there is distortion by the press, "x" is denoted.

According to the foregoing, it has been found out that, when amorphous (non-crystalline) carbon is used for a negative electrode active material, and the diphenyl sulfide and LiBOB are added in the electrolytic solution, higher performance of the lithium ion battery can be achieved by making the negative electrode composite application quantity

50 g/m$^2$ or more and 100 g/m$^2$ or less. In particular, in Table 26, although the cases in which an additive amount of each of the diphenyl sulfide and LiBOB is 0.5 wt.% are illustrated, according to an investigation by the inventors of the present invention, the same effect has been confirmed even in the case in which the additive amount of each of the diphenyl sulfide and LiBOB is 0.1 wt.% to less than 10 wt.%.

Subsequently, under a condition that a negative electrode composite in which amorphous (non-crystalline) carbon is used for a negative electrode active material, and a negative electrode composite application quantity is 60 g/m$^2$ is manufactured, and the diphenyl sulfide and LiBOB are each added in the electrolytic solution only at 0.5 wt.%, evaluation results in the case of variously changing the negative electrode composite application quantity will be described.

Like Examples D41 to D42 indicated in Table 27, it has been found out that, when the negative electrode composite density is 0.7 g/cm$^3$ and 1.5 g/cm$^3$, the initial and after-storage output characteristics are improved as compared with Comparative Example D1 indicated in Table 32. In particular, it has been found out that although an energy density deteriorated in Example D41, a copper base material state of the negative electrode is satisfactory, and fractures of the copper base material decrease also in the case where a volume expansion and contraction of a negative electrode active material is large, and high output characteristics are kept even after storage, and a 3.0C discharged capacity after storage is enhanced as compared with Comparative Example D1.

In contrast with this, at sight of Comparative Examples D7 to D9 indicated in Table 34, although a copper base material state was "O" when the negative electrode composite density was 0.5 g/cm$^3$, after-storage output characteristics deteriorated as compared with Comparative Example D1. It is considered that this was caused such that construction of a conductive path in the negative electrode active material became insufficient because a negative electrode composite density was low. On the other hand, in the case where a negative electrode composite density was 2.0 g/cm$^3$ or 2.2 g/cm$^3$, these were values exceeding critical density of an electrode made up from amorphous (non-crystalline) carbon, and damages to the copper base material were also large, and the electrode manufacturing itself was difficult.

Consequently, it has been found out that when amorphous (non-crystalline) carbon is used for a negative electrode active material, and the diphenyl sulfide and LiBOB are added in the electrolytic solution, higher performance of the lithium ion battery can be achieved by making the negative electrode composite density 0.7 g/cm$^3$ or more and 1.5 g/cm$^3$ or less. In particular, in Table 27, although the case in which additive amount of each of the diphenyl sulfide and LiBOB is 0.5 wt.% are illustrated, according to an investigation by the inventors of the present invention, the same effect has been confirmed even in the case in which the additive amount of each of the diphenyl sulfide and LiBOB is 0.1 wt.% to less than 10 wt.%.

Next, under a condition that a negative electrode composite in which graphite carbon is used for a negative electrode active material, and a negative electrode composite density is 1.0 g/cm$^3$ is manufactured, and the diphenyl sulfide and LiBOB are each added in the electrolytic solution only at 0.5 wt.%, evaluation results in the case of variously changing a negative electrode composite application quantity will be described.

Like Examples D43 to D49 indicated in Table 28, it has been found out that, when a negative electrode composite application quantity is 40 g/m$^2$ to 100 g/m$^2$, higher capacity of the lithium ion battery or an higher output thereof are achievable as compared with Comparative Example D1 indicated in Table 32. Here, although the battery capacity deteriorated in contrast with Comparative Example D1 when the negative electrode composite application quantity was 40 g/m$^2$, output characteristics were improved. On the other hand, higher energy density became available when the negative electrode composite application quantity was 100 g/m$^2$, the battery capacity increased although the output characteristics deteriorated, and a larger capacity than Comparative Example D1 was acquired even after storage.

However, like Comparative Example D1 indicated in Table 35, although making high an energy density was possible when a negative electrode composite application quantity was 110 g/m$^2$, output characteristics deteriorated on the other hand. It is considered that this is also caused by an increase of the electrode resistance due to an increase of the negative electrode composite application quantity.

According to the foregoing, it has been found out that, when graphite carbon is used for the negative electrode active material and diphenyl sulfide and LiBOB are added in the electrolytic solution, higher performance of the lithium ion battery can be achieved by making the negative electrode composite application quantity 40 g/m$^2$ or more and 100 g/m$^2$ or less. In particular, in Table 28, although the cases in which an additive amount of each of the diphenyl sulfide and LiBOB is 0.5 wt.% are illustrated, according to an investigation by the inventors of the present invention, the same effect has been confirmed even in the case in which an additive amount of each of the diphenyl sulfide and LiBOB is 0.1 wt.% to less than 10 wt.%.

Subsequently, under a condition that a negative electrode composite in which graphite carbon is used for a negative electrode active material and a negative electrode composite application quantity is 60 g/m$^2$ is manufactured, and the diphenyl sulfide and LiBOB are each added in the electrolytic solution only at 0.5 wt.%, evaluation results in the case of variously changing the negative electrode composite density will be described.

Like Examples D50 to D53 indicated in Table 29, it has been found out that, when a negative electrode composite density is 0.7 g/cm$^3$, 1.0 g/cm$^3$, 1.5 g/cm$^3$ and 2.0 g/cm$^3$, output characteristics were improved as compared with Comparative Example D1 indicated in Table 32. In particular, although the energy density deteriorated in the case in which the negative electrode composite density is 0.7 g/cm$^3$, damage to the copper base material is also little since the electrode density is low, and the possibility of an electrode fracture can be reduced.

In contrast with this, from a review of Comparative Example D11 indicated in Table 36, when a negative electrode composite density is 0.5 g/cm$^3$, output characteristics after storage deteriorated. It is considered that this is caused by that construction of a conductive path in a negative electrode active material became insufficient because the negative electrode composite density was low. On the other hand, at sight of Comparative Example D12 indicated in Table 36, in the case in which the negative electrode composite density was 2.2 g/cm$^3$, this is a value exceeding critical density of an electrode made of graphite carbon, and damage to the copper base material was also large, and the electrode manufacturing itself was difficult.

Furthermore, according to Comparative Example D13 indicated in Table 37, it has been found out that, when the negative electrode composite density including graphite carbon is 1.5 g/cm$^3$ and the diphenyl sulfide and LiBOB are not added in the electrolytic solution, both of output characteristics and storage characteristics deteriorate although the initial 0.5C discharged capacity increased more than Comparative Example D1.

According to the foregoing, it has been found out that, when graphite carbon is used for a negative electrode active material and diphenyl sulfide and LiBOB are added in the electrolytic solution, higher performance of the lithium ion battery can be achieved by making the negative electrode composite density 0.7 g/cm$^3$ or more and 2.0 g/cm$^3$ or less. In particular, in Table 29, although the cases in which the additive amount of each of diphenyl sulfide and LiBOB is 0.5 wt.% are illustrated, according to an investigation by the inventors of the present invention, the same effect has been confirmed even in the case in which the additive amount of each of diphenyl sulfide and LiBOB is 0.1 wt.% to less than 10 wt.%.

Note that, in Example D, as an electrolytic solution, used was one in which lithium hexafluorophosphate (LiPF$_6$) is dissolved at 1.2 mol/L into a mixed solution having a volume ratio 2:3:2 of ethylene carbonate, dimethyl carbonate and ethyl methyl carbonate; and however, a technical idea of the present invention is applicable also to an electrolytic solution having a composition other than this. That is, as for the technical idea of the invention in the present application, there is a feature in the point of including at least one of the diphenyl sulfide and LiBOB in an additive added in an electrolytic solution, and when such an additive is used under the above-mentioned addition condition (wt.% to an electrolytic solution), an effect can be acquired without particular regard to a composition of an electrolytic solution. That is because the technical idea of the invention in the present application is accomplished based on the formation of a coating having high resistance and high permeability on a negative electrode surface by an additive.

Specifically, when Example D54 indicated in Table 30 and Comparative Example D14 indicated in Table 38 are compared with each other, it has been found out that, by adding diphenyl sulfide to the electrolytic solution, even when one in which lithium hexafluorophosphate (LiPF$_6$) was dissolved at 1.2 mol/L into a mixed solution having a volume ratio 1:2 of ethylene carbonate and ethyl methyl carbonate was used as an electrolytic solution, the diphenyl sulfide had such an effect as contribution to a performance improvement of the lithium ion battery like the case in which such a solution in which the lithium hexafluorophosphate (LiPF$_6$) was dissolved at 1.2 mol/L into a mixed solution having a volume ratio 2:3:2 of ethylene carbonate, dimethyl carbonate and ethyl methyl carbonate was used as an electrolytic solution.

Furthermore, when Example D55 indicated in Table 31 and Comparative Example D15 indicated in Table 39 are compared with each other, it has been found out that, by adding diphenyl sulfide to the electrolytic solution, even when one in which lithium hexafluorophosphate (LiPF$_6$) was dissolved at 1.2 mol/L into a mixed solution having a volume ratio 1:1:1 of ethylene carbonate, dimethyl carbonate and ethyl methyl carbonate was used as an electrolytic solution, the diphenyl sulfide had such an effect as contribution to performance improvement of the lithium ion battery like the case of such a solution that the lithium hexafluorophosphate (LiPF$_6$) was dissolved at 1.2 mol/L into a mixed solution having a volume ratio 2:3:2 of ethylene carbonate, dimethyl carbonate and ethyl methyl carbonate was used as an electrolytic solution.

In the foregoing, the invention made by the inventors of the present invention has been concretely described based on the embodiments. However, it is needless to say that the present invention is not limited to the foregoing embodiments and various modifications and alterations can be made within the scope of the present invention.

Further, in the above embodiments and Examples, the evaluations of safety have been performed without using another safety device such as a cell controller having a current cutoff mechanism or the like, but it goes without saying that another measure for safety including the above-described cell controller is adopted in an actual product, and enhancement of safety is achieved doubly or triply.

The present invention can be widely utilized in a manufacturing industry for manufacturing lithium ion batteries.

1      Positive electrode external terminal
1'     Negative electrode external terminal
2      Nut

| | |
|---|---|
| 3 | Ceramic washer |
| 3' | Ceramic washer |
| 4 | Battery lid |
| 5 | Battery container |
| 6 | Winding group |
| 7 | Flange |
| 8 | Insulating sheath |
| 9 | Lead piece |
| 10 | Cleavage valve |
| 11 | Metal washer |
| 12 | O-ring |
| 13 | Pouring port |
| 20 | Cylindrical shape lithium ion battery |

## Claims

1. A lithium ion battery (20) having an electrode wound group (6) in which a positive electrode, a negative electrode, and a separator are wound and an electrolytic solution provided in a battery container (5), an initial discharge capacity X of the battery (20) after manufacture of the battery (20) upon a discharge by voltage from 4.2 V to 2.7 V at current of 0.5 C being 30 Ah or more and less than 100 Ah,

    wherein the positive electrode has a current collector and a positive electrode composite applied to both surfaces of the current collector,

    the positive electrode composite contains a mixed active material of layered lithium nickel manganese cobalt composite oxide and spinel lithium manganese oxide,

    a density of the positive electrode composite is 2.4 g/cm$^3$ or more and 2.7 g/cm$^3$ or less, and an application quantity of the positive electrode composite is 175 g/m$^2$ or more and 250 g/m$^2$ or less, a weight ratio Y of the layered lithium nickel manganese cobalt composite oxide and the spinel lithium manganese oxide is 10/90 or more and 60/40 or less, and the discharge capacity X and the weight ratio Y satisfy a following relational expression 1:

$$Y < -0.0062X + 1.05 \ (30 \leq X < 100) \ ... \ (\text{relational expression 1}),$$

    the electrolytic solution contains a solvent, an additive and lithium salt,

    the solvent contains ethylene carbonate, dimethyl carbonate and ethyl methyl carbonate,

    the additive contains at least one compound selected from vinylene carbonate, 1,3-propene sultone, fluoroethylene carbonate, diphenyl sulfide and LiBOB,

    the lithium salt includes at least one of compounds selected from $LiPF_6$, $LiBF_4$, $LiN(FSO_2)_2$ and $LiN(CF_3SO_2)_2$,

    a composition ratio of the ethylene carbonate is 20 vol% or more and 30 vol% or less,

    a composition ratio of the dimethyl carbonate is 36 vol% or more and 50 vol% or less,

    a composition ratio $\eta$ of the dimethyl carbonate and the ethyl methyl carbonate (dimethyl carbonate/ethyl methyl carbonate) is $1.0 \leq \eta \leq 1.7$,

    a composition ratio of the additive is 0.1 wt.% or more and 1.0 wt.% or less, and

    a concentration of the lithium salt is 1.0 mol/L or more and 1.5 mol/L or less.

## Patentansprüche

1. Lithium-Ionen-Batterie (20), welche eine Elektroden-Wicklungsgruppe (6), in welcher eine positive Elektrode, eine negative Elektrode und ein Separator aufgewickelt sind, sowie eine in einem Batteriebehältnis (5) bereitgestellte Elektrolytlösung aufweist, wobei bei einer Entladung durch eine Spannung von 4,2 V auf 2,7 V bei einem Strom von 0,5 C eine anfängliche Entladungskapazität X der Batterie (20) nach der Herstellung der Batterie (20) 30 Ah oder mehr und weniger als 100 Ah ist,

    worin die positive Elektrode einen Stromabnehmer aufweist und ein positiver Elektrodenverbundstoff auf beiden Flächen des Stromabnehmers aufgetragen ist;

    der positive Elektrodenverbundstoff ein aktives Materialgemisch aus schichtförmigem Lithium-Nickel-Mangan-Kobalt-Verbundoxid und Spinel-Lithiummanganoxid enthält,

eine Dichte des positiven Elektrodenverbundstoffes 2,4 g/cm$^3$ oder mehr und 2,7g/cm$^3$ oder weniger ist und eine aufgetragene Menge des positiven Elektrodenverbundstoffes 175 g/m$^2$ oder mehr und 250 g/m$^2$ oder weniger ist, ein Gewichtsverhältnis Y des schichtförmigen Lithium-Nickel-Mangan-Kobalt-Verbundoxids und des Spinel-Lithiummanganoxids 10/90 oder mehr und 60/40 oder weniger ist, und die Entladungskapazität X und das Gewichtsverhältnis Y eine folgende Beziehung 1 erfüllen:

$$Y < -0{,}0062X + 1{,}05 \ (30 \leq X \leq 100) \ .... \ \text{(Beziehung 1)},$$

die Elektrolytlösung ein Lösungsmittel, einen Zusatzstoff und ein Lithiumsalz enthält,
das Lösungsmittel Ethylencarbonat, Dimethylcarbonat und Ethylmethylcarbonat enthält,
der Zusatzstoff zumindest eine Verbindung enthält, die aus Vinylencarbonat, 1,3-Propansulton, Fluorethylencarbonat, Diphenylsulfid und LiBOB ausgewählt ist,
das Lithiumsalz zumindest eine der Verbindungen umfasst, die aus LiPF$_6$, LiBF$_4$, LiN(FSO$_2$)$_2$ und LiN(CF$_3$SO$_2$)$_2$ ausgewählt sind,
ein Mischverhältnis des Ethylencarbonats 20 Vol.-% oder mehr und 30 Vol.-% oder weniger ist,
ein Mischverhältnis des Dimethylcarbonats 36 Vol.-% oder mehr und 50 Vol.-% oder weniger ist,
ein Mischverhältnis $\eta$ des Dimethylcarbonats und des Ethylmethylcarbonats (Dimethylcarbonat/Ethylmethylcarbonat) $1{,}0 \leq \eta \leq 1{,}7$ ist,
ein Mischverhältnis des Zusatzstoffes 0,1 Gew.-% oder mehr und 1,0 Gew.-% oder weniger ist, und
eine Konzentration des Lithiumsalzes 1,0 Mol/l oder mehr und 1,5 Mol/l oder weniger ist.

**Revendications**

1. Batterie lithium-ion (20) ayant un groupe enroulé d'électrodes (6) dans lequel une électrode positive, une électrode négative et un séparateur sont enroulés et une solution électrolytique est disposée dans un récipient de batterie (5), la capacité de décharge initiale X de la batterie (20) après fabrication de la batterie (20) suite à une décharge par une tension de 4,2 V à 2,7 V à un courant de 0,5 C étant de 30 Ah ou plus et inférieure à 100 Ah,
dans laquelle l'électrode positive a un collecteur de courant et un composite d'électrode positive appliqué sur les deux surfaces du collecteur de courant,
le composite d'électrode positive contient un matériau actif mixte d'oxyde composite de lithium, nickel, manganèse et cobalt stratifié et d'oxyde de manganèse et de lithium en spinelle,
la masse volumique du composite d'électrode positive est de 2,4 g/cm$^3$ ou plus et de 2,7 g/cm$^3$ ou moins, et la quantité d'application du composite d'électrode positive est de 175 g/m$^2$ ou plus et de 250 g/m$^2$ ou moins,
le rapport en poids Y de l'oxyde composite de lithium, nickel, manganèse et cobalt stratifié à l'oxyde de manganèse et de lithium en spinelle est de 10/90 ou plus et de 60/40 ou moins, et
la capacité de décharge X et le rapport en poids Y satisfont à l'expression relationnelle 1 suivante :

```
Y < -0,0062X + 1,05 (30 < X < 100)
                           ... (expression relationnelle 1)
```

la solution électrolytique contient un solvant, un additif et un sel de lithium,
le solvant contient du carbonate d'éthylène, du carbonate de diméthyle et du carbonate d'éthylméthyle,
l'additif contient au moins un composé choisi parmi le carbonate de vinylène, la 1,3-propènesultone, le carbonate de fluoroéthylène, le sulfure de diphényle et LiBOB,
le sel de lithium contient au moins l'un des composés choisis parmi LiPF$_6$, LiBF$_4$, LiN(FSO$_2$)$_2$ et LiN (CF$_3$SO$_2$)$_2$,
le rapport de composition du carbonate d'éthylène est de 20 % en volume ou plus et de 30 % en volume ou moins,
le rapport de composition du carbonate de diméthyle est de 36 % en volume ou plus et de 50 % en volume ou moins,
le rapport de composition $\eta$ du carbonate de diméthyle au carbonate d'éthylméthyle (carbonate de diméthyle/ carbonate d'éthylméthyle) est $1{,}0 \leq \eta \leq 1{,}7$,
le rapport de composition de l'additif est de 0,1 % en poids ou plus et de 1,0 % en poids ou moins, et
la concentration du sel de lithium est de 1,0 mol/l ou plus et de 1,5 mol/l ou moins.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3541723 B
- JP 3433695 B
- US 2007134558 A
- US 2011059351 A